# EUROPEAN PATENT SPECIFICATION

(11) **EP 0 142 863 B1**
(45) Date of publication and mention of the grant of the patent: **22.03.1989**
(21) Application number: 84114042.9
(22) Date of filing: 20.11.1984
(51) Int. Cl.: C09B 62/026, D06P 3/66, D06P 3/10, D06P 1/38

(54) **Reactive pyridone azo dyestuffs**
Reaktive Azopyridonfarbstoffe
Colorants réactifs d'azopyridone

(30) Priority: 22.11.1983 JP 220301/83; 29.05.1984 JP 108949/84
(43) Date of publication of application: 29.05.1985
(73) Proprietor: MITSUBISHI KASEI CORPORATION, Tokyo 100 (JP)
(72) Inventor: Niwa, Toshio, Yokohama-shi Kanagawa (JP); Himeno, Kiyoshi, Kitakyushu-shi Fukuoka (JP); Hihara, Toshio, Yokohama-shi Kanagawa (JP); Shimizu, Yukiharu, Midori-ku Yokohama-shi Kanagawa (JP)
(74) Representative: VOSSIUS & PARTNER

(56) References cited:
- BE-A- 666 229
- DE-A- 2 000 753
- DE-A- 3 227 134
- US-A- 3 218 310

## Description

This invention relates to reactive pyridone azo dyestuffs, and more specifically it relates to reactive pyridone monoazo and disazo dyestuffs containing a specific reactive group and a specific disperse group in the molecular structure.

Heretofore, reactive dyestuffs etc. have been employed for dyeing natural fibers such as cotton etc. while disperse dyestuffs have mainly been used for dyeing polyester fibers etc.

Recently, there has been an increased demand for mixed fibers comprising natural fibers such as cotton etc. and synthetic fibers such as polyester etc., and in order to dye such mixed fibers with a single, dyestuff and even by a single dyeing step, reactive disperse dyestuffs were proposed. Especially, a reactive pyridone monoazo dyestuff having the following structure was proposed as a reactive disperse dyestuff which can dye mixed fibers in a yellow color having washing fastness (Japanese Patent Application Laid- open No. 151064/1980, DE 2918881 and EPC 19728).

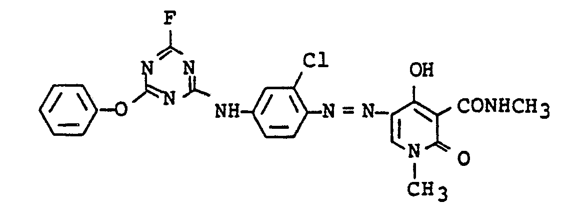

However, its light fastness was not adequate, and thus further improvement has been sought.

An object of this invention is to provide reactive pyridone azo dyestuffs which dye cellulose fibers, wool fibers, synthetic polyamide fibers, and mixed fibers comprising cellulose fibers and polyester fibers and mixed fibers comprising wool fibers and polyester fibers or polyamide fibers and polyester fibers in yellow to reddish orange colors having excellent light fastness.

Accordingly, the gist of this invention resides in reactive pyridone azo dyestuffs of the general formula [I]: 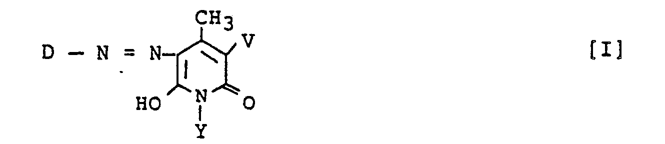 wherein

D- represents 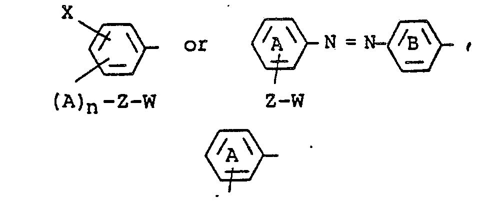 represents phenylene optionally substituted by lower alkyl, lower alkoxy, trifluoromethyl or halogen, 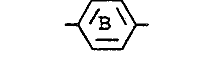 represents phenylene optionally substituted by lower alkyl, lower alkoxy, halogen or acetylamino,
-A- represents -CH_{z}-, -C₂H₄-, -OC₂H₄-, 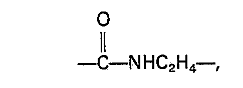 ―SO₂NHC₂H₄― or ―SO₂C₂H₄―,
-X represents hydrogen, lower alkyl, lower alkoxy, nitro, trifluoromethyl or halogen,
-Y represents alkyl, aryl or aralkyl optionally substituted by lower alkoxy or phenoxy,
-Z- represents a connecting group of -0- or―S―,
-V represents -CN or -CONH₂,
-W represents a 6-membered nitrogen-containing heterocyclic ring having at least one active halogen atom, and
   n represents 0 or 1.

The term "lower alkyl" or "lower alkoxy" generally refers to residues containing 1 to 10, preferably 1 to 7, more preferably 1 to 5 and especially 1 to 4 carbon atoms. In the aforesaid general formula [I] of this invention, examples of the lower alkyl as substituents for 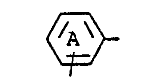 and 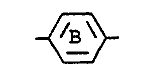 include methyl, ethyl, straight-chain or branched-chain propyl, butyl etc., examples of the lower alkoxy include methoxy, ethoxy, n-propoxy, iso-propoxy, n-butoxy etc., and examples of the halogen include fluorine, chlorine and bromine, chlorine being preferred.

In the aforesaid general formula [I], examples of the lower alkyl represented by -X include methyl, ethyl, straight-chain or branched-chain propyl, butyl etc.; examples of the lower alkoxy include methoxy, ethoxy, n-propoxy, iso-propoxy, n-butoxy etc.; and examples of the halogen include fluorine; chlorine and bromine, chlorine being preferred.

Examples of the unsubstituted alkyl represented by -Y include methyl, ethyl and straight-chain or branched-chain alkyl of 3-18 carbon atoms; examples of the lower alkyl substituted by lower alkoxy include lower alkoxyalkyl such as methoxyethyl, ethoxyethyl, butoxyethyl etc., lower alkoxyalkoxyalkyl such as methoxyethoxyethyl, ethoxyethoxyethyl, butoxyethoxyethyl etc.; examples of the lower alkyl substituted by phenoxy include phenoxyalkyl such as phenoxyethyl etc.; examples of the aryl include phenyl, naphthyl, o-tolyl, p-butylphenyl etc.; and examples of the substituted or unsubstituted aralkyl include benzyl, phenetyl, chlorobenzyl, methoxybenzyl etc.

Examples of the 6-membered nitrogen-containing heterocyclic ring having at least one active halogen atom represented by -W include a triazine ring of the following general formula [IX]: 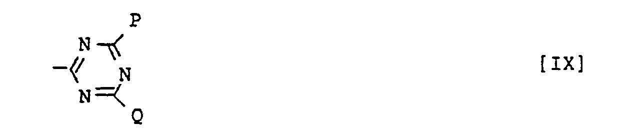 wherein -P represents fluorine, chlorine or bromine, -Q represents -P, 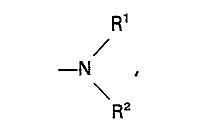 methyl, ethyl, phenyl, ―O―R³ or -S-R³, -R¹ and -R² each represents hydrogen, or alkyl, alkenyl, cyclohexyl, aryl or aralkyl optionally substituted by cyano, hydroxy, lower alkoxy or dialkylamino, or -NR'R² may represent a 5- or 6-membered nitrogen-containing heterocyclic ring formed by combining ―R¹ and -R², said nitrogen-containing heterocyclic ring being able to contain a thioether bond, the total carbon atoms present in ―R¹ and -R² being up to 18, and -R³ represents methyl, ethyl, ethoxyethoxy, phenyl etc.; a pyrimidine ring of the following general formula: 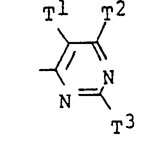 wherein ―T¹ ―T² and ―T³ each represents the aforesaid -P, cyano, lower alkyl, lower alkoxy, lower alkoxyalkoxy, amino, lower alkylamino or lower alkylsulfonyl, at.least one of-T¹, -T² and -T³ being the aforesaid -P; a pyridazine ring of the following general formula: 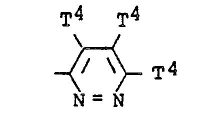 wherein -T⁴ represents fluorine or chlorine; etc.

Preferably, the aforesaid nitrogen-containing heterocyclic ring is the triazine ring of the above general formula [IX] or a pyrimidine ring of the following general formula: 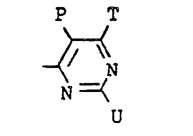 wherein -P is as defined above, -T represents -P or methyl, and -U represents -P or -S0₂CH₃.

In the group 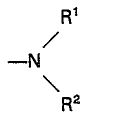 represented by -Q in the aforesaid general formula [IX], examples of the alkyl represented by -R¹ and -R² include methyl, ethyl and straight-chain or branched-chain alkyl of 3-18 carbon atoms, and examples of the substituted alkyl include alkyl substituted by cyano, hydroxy, lower alkoxy or dialkylamino, such as cyanomethyl, 2-cyanoethyl, 3-cyanopropyl, 2-hydroxyethyl, 2-hydroxypropyl, 3-hydroxypropyl, 4-hydroxybutyl, 2-(2-hydroxyethoxy)ethyl, tris(hydroxymethyl)methyl, 2-ethoxyethyl, 3-isopropoxypropyl, 3-(2-methoxyethoxy)propyl, 2,2-diethoxyethyl, 2-(N,N-diethylamino)ethyl, 2-(N,N-dimethylamino)ethyl, 3-(N,N-dimethylamino)propyl etc.

Examples of the alkenyl include allyl, 2-methylallyl, 3-methylallyl and straight-chain or branched-chain alkenyl of 4-18 carbon atoms, and examples of the substituted alkenyl include alkenyl substituted by cyano, hydroxy or lower alkoxy, such as 3-cyanoallyl, 2-hydroxyallyl, 3-methoxyethoxyallyl, 1-methyl-3-(N,N-diethylamino)allyl etc.

Examples of the aryl include phenyl, naphthyl, o-tolyl, p-butylphenyl etc., and examples of the aryl substituted by cyano, hydroxy, lower alkoxy or dialkylamino include m-cyanophenyl, p-hydroxyphenyl, p-methoxyphenyl, p-(2-methoxyethoxy)phenyl, 2,5-dimethoxyphenyl, p-(N,N-dimethylamino)phenyl etc.

Examples of the aralkyl include benzyl, phenetyl, m-methylbenzyl, p-methylphenetyl etc., and examples of the substituted aralkyl include m-cyanobenzyl, p-hydroxyphenyl, p-hydroxyphenetyl, o-anisyl etc.

Examples of the nitrogen-containing heterocyclic ring represented by 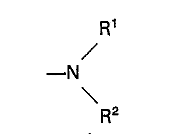 include 1-pyrrolidinyl, 3-methyl-1-pyrrolidinyl, 2-hydroxyethyl-1-pyrrolidinyl, 2,5-dimethyl-1-pyrrolidinyl, 3-thiazolidinyl, 1-pyrrolyl, 1-pyrazolyl, 1-imidazolyl, morpholino, piperidino, 2,6-dimethylpiperidino, 1-piperadinyl, 4-methyl-1-piperadinyl, 2,6-dimethyl-1-piperadinyl etc. As the 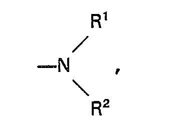 those in which the total number of carbon atoms present in -R¹ and -R² is up to 18 are preferred, more preferably disubstituted amino in which the total number of carbon atoms in -R' and -R² is 4-12, and most preferably dialkylamino.

Examples of preferred pyridone azo dyestuffs include the following:

The reactive pyridone azo dyestuffs of the general formula [II]: 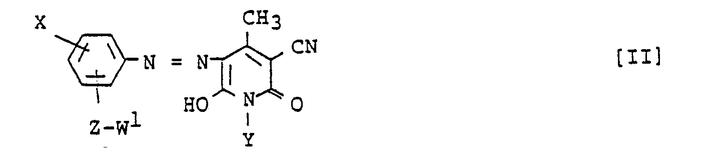 wherein -W¹ represents 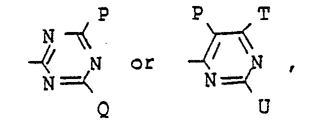 wherein -P represents fluorine, chlorine or bromine, -Q represents -P, 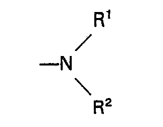 wherein ―R¹ and -R² each represents hydrogen or alkyl, alkenyl, cyclohexyl, aryl or aralkyl optionally substituted by cyano, hydroxy, lower alkoxy or dialkylamino, or -NR¹R² represents a 5- or 6-membered nitrogen-containing heterocyclic ring formed by combining -R¹ and -R², the total carbon atoms present in -R¹ and -R² being up to 18, methyl, ethyl, phenyl, -O-R³ or -S-R³ wherein R³ represents methyl, ethyl, ethoxyethoxy or phenyl,
―T represents -P or -CH₃,
-U represents -P or -SO₂CH₃, and
-X, -Y and -Z- are as defined above; reactive pyridone azo dyestuffs of the general formula [III]: 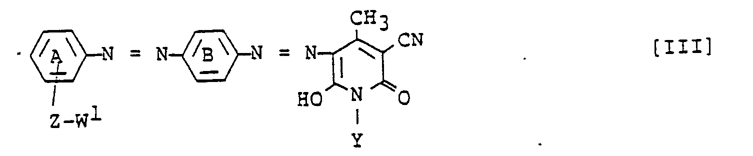 wherein 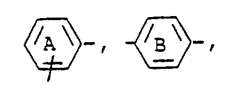
-Y, -Z- and ―W¹ are as defined above; reactivepyridone azo dyestuffs of the general formula [IV]: 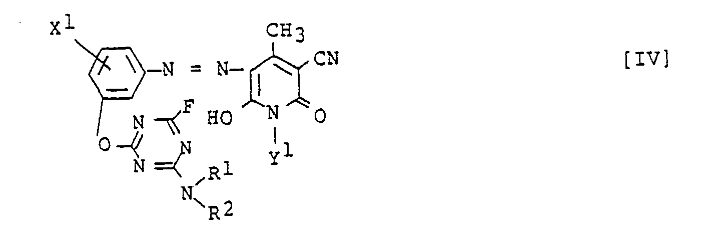 wherein -Y¹ represents alkyl optionally substituted by lower alkoxy, -X¹ represents hydrogen or lower alkyl, and -R¹ and -R² are as defined above; reactive pyridone azo dyestuffs of the general formula [V]: 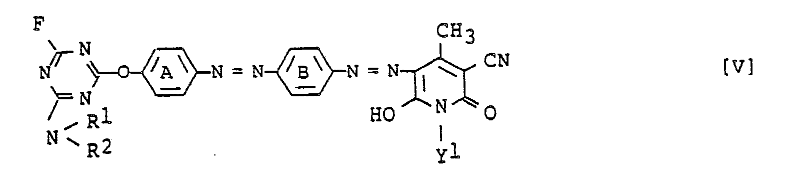 wherein 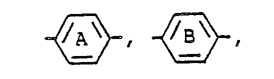
-Y¹, -R¹ and -R² are as defined above; reactive pyridone azo dyestuffs of the general formula [VI]: 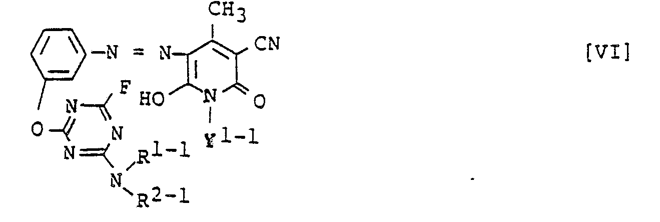 wherein -R¹⁻¹ and -R²⁻¹ each represents alkyl of 2-4 carbon atoms and -Y¹⁻¹ represents alkyl of 6-18 carbon atoms; reactive pyridone azo dyestuffs of the general formula [VII]: 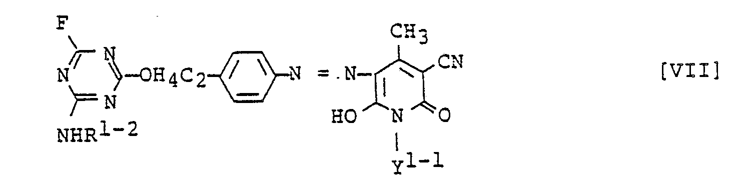 wherein -R¹⁻² represents alkyl of 2-4 carbon atoms and -Y¹⁻¹ is as defined above; and reactive pyridone azo dyestuffs which is of the general formula [VIII]: 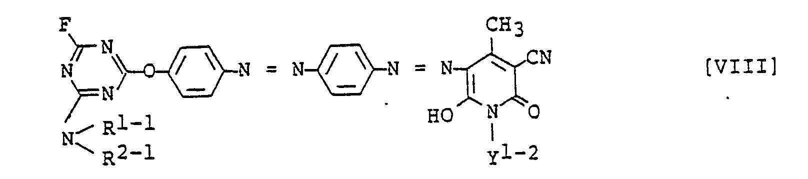 wherein -Y¹⁻² represents alkyl of 1-8 carbon atoms and -R¹⁻¹ and -R²⁻¹ are as defined above.

The reactive pyridone azo dyestuffs of this invention may be produced by the following processes:
(a) Process for the production of the reactive pyridone azo dyestuffs of the following general formula [I-1]: 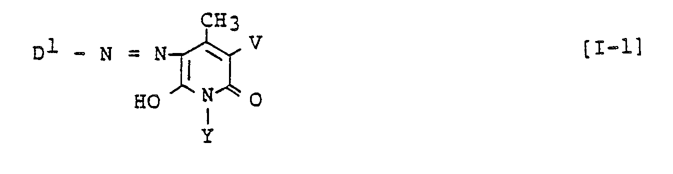 wherein D¹- represents 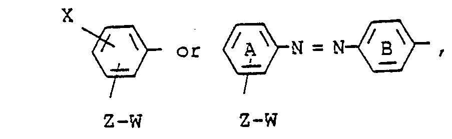 and 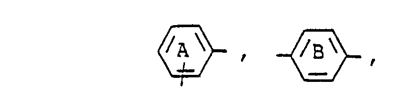
―V, -W, -X, -Y and -Z- are as defined above.

In an organic solvent in the presence of an acid-binding agent, an azo compound of the following general formula [1-2]: 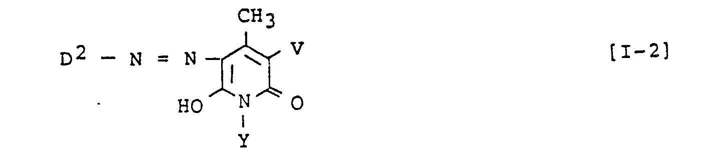 wherein D²― represents 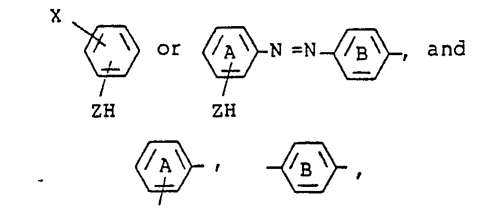 -V, -X, -Y and Z- are as defined above and a heterocyclic compound of the following general formula [I-3]: 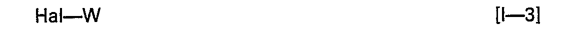 wherein Hal represents an active halogen atom and -W is as defined above are held or heated at 0-90°C for 0.5-5 hours. Thereafter, the resulting reaction mixture is cooled, and separated by, for example, pouring into water and separating the formed precipitates by filtration, centrifugation etc., thereby a reactive pyridone azo dyestuff of the above general formula [1-2] of this invention may be obtained. (b) Process for the production of dyestuffs of the following general formula [1-4]: 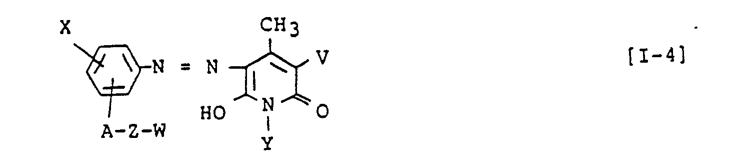 wherein -A-, -V, -W, -X, -Y and -Z- are as defined above.

In an organic solvent in the presence of an acid-binding agent, a monoazo compound of the following general formula [1-5]: 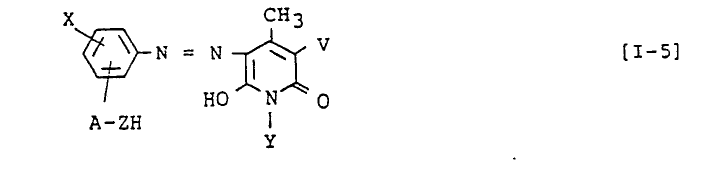 wherein -A-, -V, -X, -Y and -Z- are as defined above and a heterocyclic compound of the above general formula [1-3] are stirred together at -5 to 10°C for 2-10 hours thereby a reactive pyridone azo dyestuff of the above general formula [1-4] may be produced. (c) Process for the production of reactive pyridone azo dyestuffs of the following general formula [1-6]: 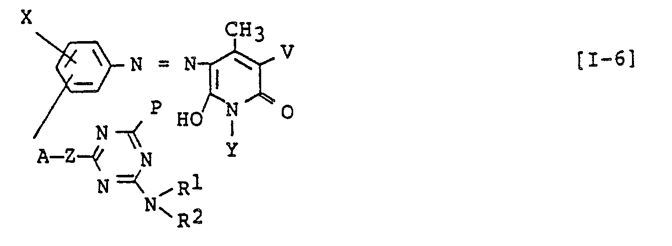 wherein -A-, -P, -V, -X, -Y and -Z- are as defined above.

In an organic solvent in the presence of an acid-binding agent, a monoazo compound of the above general formula [1-5] and a dihalogenotriazine of the following general formula [1-7]: 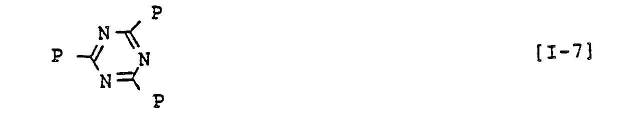 wherein -P is as defined above are stirred at -5 to 10°C for 2-10 hours to obtain a monoazo compound of the following general formula [1-8]: 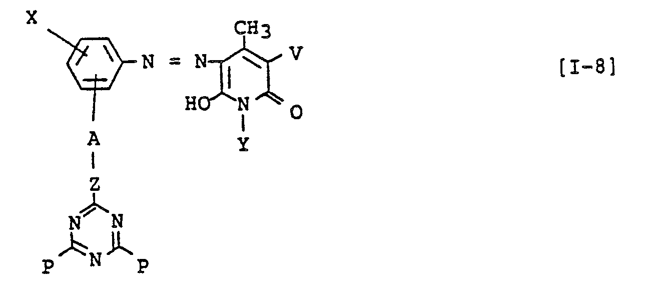 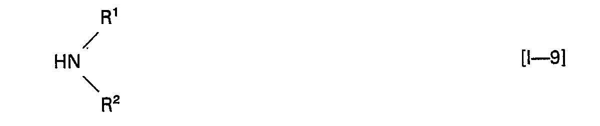 wherein ―R¹ and -R² are as defined above in the presence of an acid-binding agent at -5 to 10°C for 0.5-1 hour, thereby a reactive pyridone azo dyestuff of the general formula [1-6] may be produced.

Examples of the organic solvent which may be used in the above-described production processes include acetone, methyl ethyl ketone, toluene, nitrobenzene, dioxane, N,N-dimethyfformamide, N-methyl-2-pyridone, dimethylsulfoxide etc., and examples of the acid-binding agent include tertiary amines such as triethylamine, N,N-diethylaniline etc. and inorganic bases such as potassium carbonate, potassium bicarbonate etc.

The amount of the acid-binding agent to be used may suitably be in the range of 1-2 molar times that of the azo compound of the general formula [1-2] or the monoazo compound of the general formula [1-5], and the amount of the heterocyclic compound of the general formula [1-3] or the dihalogenotriazone of the general formula [1-7] to be used may suitably be in the range of 1.0-1.2 molar times that of the azo compound of the general formula [1-2] or the monoazo compound of the general formula [1-5].

Examples of the fibers which can be dyed with the dyestuffs of the above general formula [I] include fibers such as cellulose (cotton), linen etc., viscose rayon, copper ammonia rayon etc., modified cellulose fibers which have been partially aminated or partially acylated, polyesters, polyamides, nylons, wool, silk, polyurethanes, diacetates, triacetates etc. as well as mixed spun cloths, mixed woven cloths, fabrics etc. produced therefrom (hereinafter referred to as fibers). Of those, the dyestuffs are particularly effective on the cellulose, mixed fibers of cellulose and polyesters, etc.

On practicing dyeing, it is desired that the dyestuff of the above general formula [I] be finely dispersed in a medium in a particle size of about 0.5-2 p. Suitable examples of the dispersing method include:
(1) a method which comprises finely dispersing in water by a grinder such as a sand grinder etc. using a water-soluble dispersing agent such as a nonionic surface active agent, e.g., a pluronic type surface active agent, or an anionic dispersing agent, e.g., sodium ligninsulfonate or a sodium salt of a naphthalenesulfonic acid-formaldehyde condensate, etc.;
(2) a method which comprises finely dispersing in a solvent other than water, e.g., alcohols, ketones, hydrocarbons, halogenated hydrocarbons, esters, ethers or mixed solvents thereof using a sulfosuccinic acid ester, an addition product of nonylphenol etc. and low moles of ethylene oxide, etc.;
(3) a method which comprises finely dispersing in a mixed system of water and a solvent freely compatible with water which is chosen from the above-described solvents; etc.

Further, in the above-described dispersing step, a polymer compound soluble in the particular dispersing medium chosen, a surface active agent having some major function other than the dispersing action, etc. may also be safely added.

The thus obtained fine dispersion of the dyestuff may be used as such as a padding bath in a dip dyeing' method or in a pad dyeing method or as a color paste in a print dyeing method.

In general, the fine dispersion of the dyestuff produced as above is used as a dip dyeing bath, a padding bath or a printing paste by diluting to a desired concentration with water, an aqueous organic solvent etc. or as an O/W or W/O emulsion of a petroleum hydrocarbon, a halogenated hydrocarbon etc. and water.

On preparing a dip dyeing bath, a padding bath or a printing paste, it is possible to add an alkali metal compound, or an alkali precursor compound which will generate an alkali when heated in the presence of water as an acid-binding agent. Examples of the aforesaid alkali metal compound include, in addition to alkali metal carbonates, alkali metal bicarbonates, alkali metal phosphates, alkali metal borates, alkali metal silicates, alkali metal hydroxides and fatty acid alkali metal salts such as alkali metal acetates etc., and examples of the alkali precursor compound which will generate an alkali when heated in the presence of water include sodium trichloroacetate, sodium acetoacetate etc.

The amount of those acid-binding agents to be used is generally satisfactorily such that the pH of the dip dyeing bath, padding bath or printing color paste be in the range of 7.5-9.0.

When fibers containing cellulose are to be dyed, it is preferred to make a cellulose fiber-swelling agent present in the dyeing bath or color paste.

Any compound may be used as the cellulose fiber-swelling agent so long at it has a boiling point of 150°C or higher and has an effect to swell cellulose fibers. Examples thereof include ureas such as N,N,N',N'-tetramethylurea etc., polyhydric alcohols such as polyethylene glycol, polypropylene glycol etc., or derivatives thereof. Of those, derivatives of polyhydric alcohols such as polyethylene glycol, polypropylene glycol etc. having an average molecular weight of about 200-500 in which the hydroxyl groups at both terminals have been dimethylated or diacetylated so that they do not react with the reactive groups of the dyestuff are particularly preferred as the cellulose fiber-swelling agent.

The amount of the cellulose fiber-swelling agent to be used is suitably in the range of about 5-25% by weight, preferably in the range of about 8-15% by weight, based on the weight of the dyeing bath or color paste.

Dyeing of the aforesaid fibers using the dyestuffs of the above general formula [I] may be achieved by impregnating or printing a fiber material with the dyeing bath or printing color paste prepared in the conventional mannner, e.g., by the above-described methods, then, after drying, heat-treating the material with hot air at 160-220°C or with superheated steam for 30 seconds to 10 minutes, or treating in a saturated steam at 100-150°C for 3-30 minutes, and finally washing with hot water containing a surface active agent, or washing in an O/W or W/O emulsion washing bath in which the oil layer is a halogenated hydrocarbon such as tetrachloroethylene etc., or washing by the conventional dry cleaning mode.

Dip dyeing using the dyestuffs of the above general formula [I] of this invention may be achieved by preparing a dip dyeing bath in the conventional manner and dyeing at a dyeing temperature of 80-105°C for 30-60 minutes.

The relationships between the preferred dyeing methods using the dyestuffs of the above general formula [I] of this invention and the fibers are illustrated in the following Table 1.

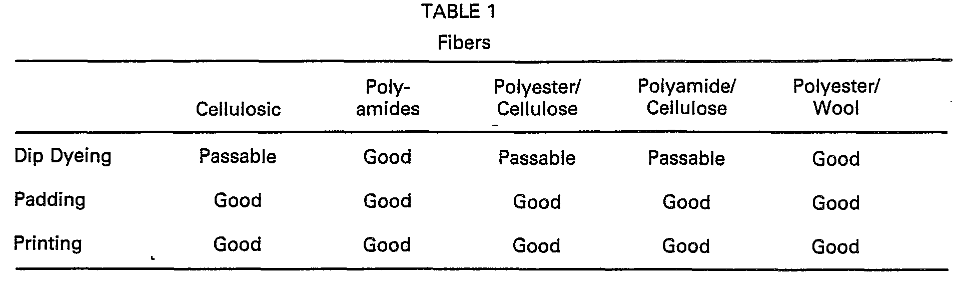

This invention is more particularly described by the following examples, but it will be understood that this invention is not limited to these examples.

### Example 1

A dyestuff dispersion was prepared by finely dispersing 15 g of a monoazo dyestuff of the following structural formula: 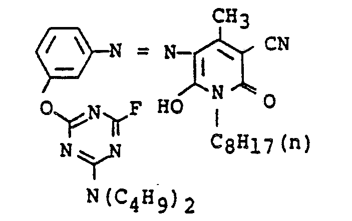 15 g of a naphthalenesulfonic acid-formaldehyde condensate and 70 ml of water using a paint shaker as a finely dispersing machine. Using this dyestuff dispersion, a printing color paste (pH 8.0) having the following composition:

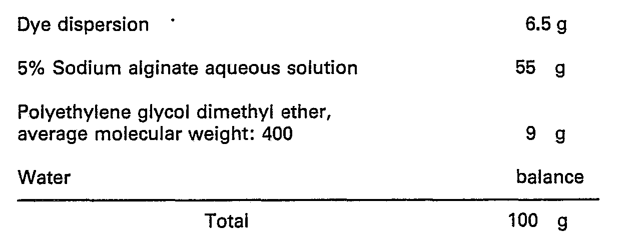

was prepared. A polyester/cotton (mixing ratio: 65/35) mixed spun cloth was print-dyed with the printing bath using a screen print dyeing machine. After provisionally drying at 80°C for 3 minutes, the cloth was dry heated at 215°C for 90 seconds to fix the paste. The cloth was then washed with water, and soaped with a detergent solution containing 2 g/I of a nonionic surface active agent ("Scourol #900", trademark, manufactured by Kao Soap Co., Ltd.) in a bath ratio of 1:30 at 80°C for 20 minutes to obtain a yellow dyed product having excellent light fastness (grade 5). The washing fastness of said dyed product was also excellent (grade 5).

The dyestuff used in this Example 1 was synthesized by the following method.

3.82 g of a compound of the following structural formula: 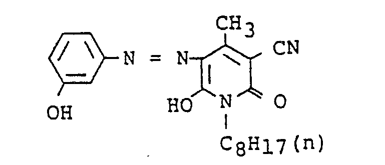 2.5 g of 2,4-difluoro-6-(di-n-butylamino)-triazine, 1.5 g of triethylamine and 1.0 g of potassium carbonate anhydride were added to 30 ml of acetone, reacted at reflux for 4 hours, poured into cold water, the resulting precipitates were filtered off, washed with water and dried at room temperature to obtain 5.5 g (yield 91 %) of the dyestuff of Example 1 (yellow powder).

The maximum absorption wavelength, Àmax (acetone) of this dyestuff was 427 nm.

### Example 2

A dyestuff dispersion was prepared by finely dispersing 16 g of a monoazo dyestuff of the following structural formula: 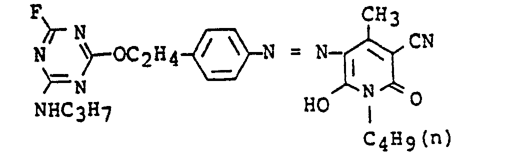 7 g of polyoxyethylene glycol nonyl phenyl ether (HLB 13.3), 3 g of a naphthalenesulfonic acid-formaldehyde condensate and 74 ml of water using a sand grinder. Using this dyestuff dispersion, a padding bath (pH 8.0) having the following composition:

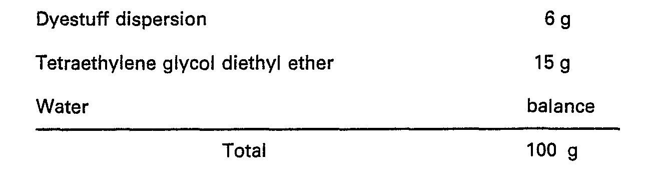

was prepared. A polyester/cotton (mixing ratio: 65/35) mixed spun cloth was impregnated with the padding bath, squeezed to a squeezing rate of 45%, then dried at 100°C for 2 minutes and dry heated at 200°C for one minute to fix. This cloth was washed with a hot ethanol bath to obtain a yellow dyed product having excellent light fastness (grade 5-6). The washing fastness of said dyed product was also excellent (grade 5).

The dyestuff used in this Example 2 was prepared by the following method.

3.5 g of a compound of the following structural formula: 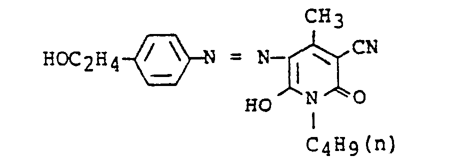 was dissolved in 30 ml of N-methylpyrrolidone, cooled to -5°C, and 1.6 g of 2,4,6-trifluorotriazine was added dropwise at the same temperature. After the addition, the reaction mixture was stirred at the same temperature for an hour, and thereafter 1.3 g of triethylamine and 0.7 g of propylamine were added dropwise at the same temperature. After completion of the addition, the reaction mixture was stirred for an hour, and poured into cold water. The separated precipitates were filtered off, and dried to obtain 4.1 g (yield 81 %) of the dyestuff of Example 2.

The maximum absorption wavelength, λₘₐₓ (acetone) of this dyestuff was 431 nm.

### Example 3

A dyestuff dispersion was prepared by finely dispersing 10 g of a monoazo dyestuff of the following structural formula: 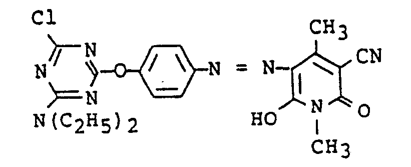 25 g of a naphthalenesulfonic acid-formaldehyde condensate and 65 ml of water using a sand grinder as a finely dispersing machine. Using this dyestuff dispersion, a dyeing bath (pH 8.0) having the following composition:

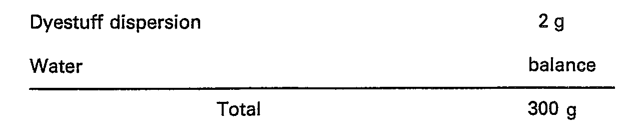

was prepared. Nylon taffeta (10 g) was placed in the dyeing bath, which was gradually heated from room temperature to 95°C, and dyeing was effected at this temperature for an hour.

Thereafter, washing treatment was conducted according to the procedures described in Example 1 to obtain a yellow dyed product having excellent light fastness (grade 6). The dry cleaning fastness of said dyed product was also excellent (grade 5).

The dyestuff used in this Example 3 was synthesized from 2.84 g of a compound of the following structural formula: 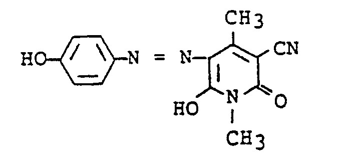 and 2.48 g of 2,4-dichloro-6-diethylaminotriazine according to the procedures described in Example 1.

The Àₘₐₓ (acetone) of this dyestuff was 433 nm.

### Example 4

A dyestuff dispersion was prepared by finely dispersing 15 g of a monoazo dyestuff of the following structural formula: 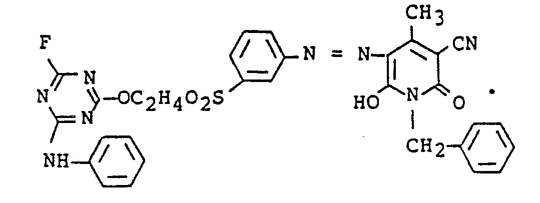 10 g of a Pluronic type surface active agent ("Pluronic L 64", trademark, manufactured by Asahi Electrochemical Industries, Ltd.) and 75 ml of water using a sand grinder as a finely dispersing machine. A printing color paste (pH 8.0) having the following composition:

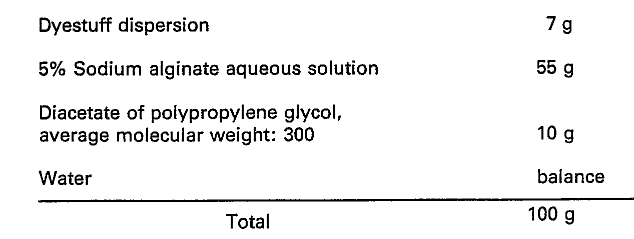

was prepared. Mercerized cotton broad (40 counts) was print-dyed with the printing color paste using a screen print dyeing machine. After provisionally drying at 80°C for 3 minutes, the dyed cotton broad was treated with superheated steam at 185°C for 7 minutes.

Thereafter, washing treatment was conducted according to the procedures described in Example 1 to obtain a yellow dyed product having excellent light fastness (grade 5). The washing fastness of said dyed product was also excellent (grade 4-5).

The dyestuff used in this Example 4 was synthesized according to the procedures described in Example 2.

The λₘₐₓ (acetone) of this dyestuff was 422 nm.

### Example 5

A dyestuff dispersion was prepared by finely dispersing 10 g of a monoazo dyestuff of the following structural formula: 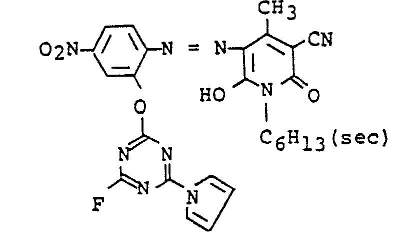 10 g of a naphthalenesulfonic acid-formaldehyde condensate and 80 ml of water using a paint shaker as a finely dispersing machine. Using this dyestuff dispersion, a printing color paste (pH 8.0) having the following composition:

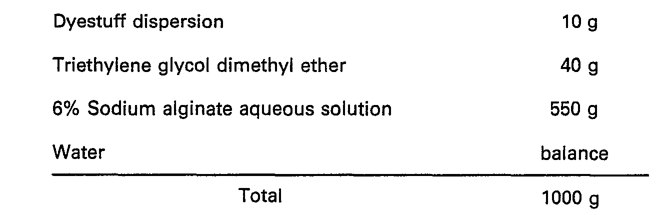

was prepared. A polyester/wool (mixing ratio: 80/20) mixed spun cloth was print dyed with this color paste using a screen print dyeing machine, provisionally dried at 80°C for 3 minutes and thereafter treated with superheated steam at 180°C for 6 minutes. This was then subjected to washing treatment according to the procedures described in Example 1 to obtain a uniformly dyed yellow product having excellent light fastness. The dry cleaning fastness of said dyed product was also excellent (grade 5).

The dyestuff used in this Example 5 was synthesized according to the procedure described in Example 1.

The λₘₐₓ (acetone) of this dyestuff was 432 nm.

### Example 6

A dyestuff dispersion was prepared by finely dispersing 16 g of a monoazo dyestuff of the following structural formula: 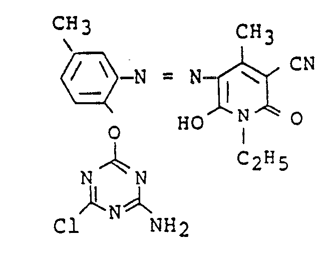 7 g of polyoxyethylene glycol nonyl phenyl ether (HLB 13.3), 3 g of a naphthalenesulfonic acid-formaldehyde condensate and 74 ml of water using a sand grinder. Using this dyestuff dispersion, a padding bath having the following composition:

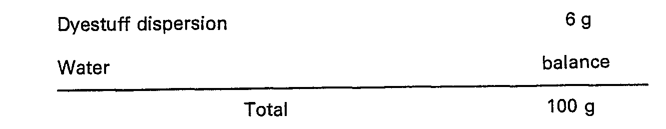

was prepared. A polyester fiber cloth was impregnated with this padding bath, squeezed to a squeezing rate of 45%, then dried at 100°C for 2 minutes and dry heated in superheated steam at 185°C for 7 minutes to fix. This cloth was reduction washed in the conventional manner to obtain a yellow dyed product having excellent fastness.

The λₘₐₓ (acetone) of this dyestuff was 430 nm.

### Example 7

Polyester/cotton (65/35) mixed spun cloths were print-dyed using the monoazo dyestuffs set forth in Table 2 according to the procedures described in Example 1. The obtained dyed products had particularly excellent light fastness, and also had excellent wet color fastness without any stain in the white background.

Said monoazo dyestuffs were synthesized according to the procedures described in Example 1 or Example 2.

The hue of each dyed product and the λₘₐₓ (acetone) of each dyestuff are shown in Table 2.

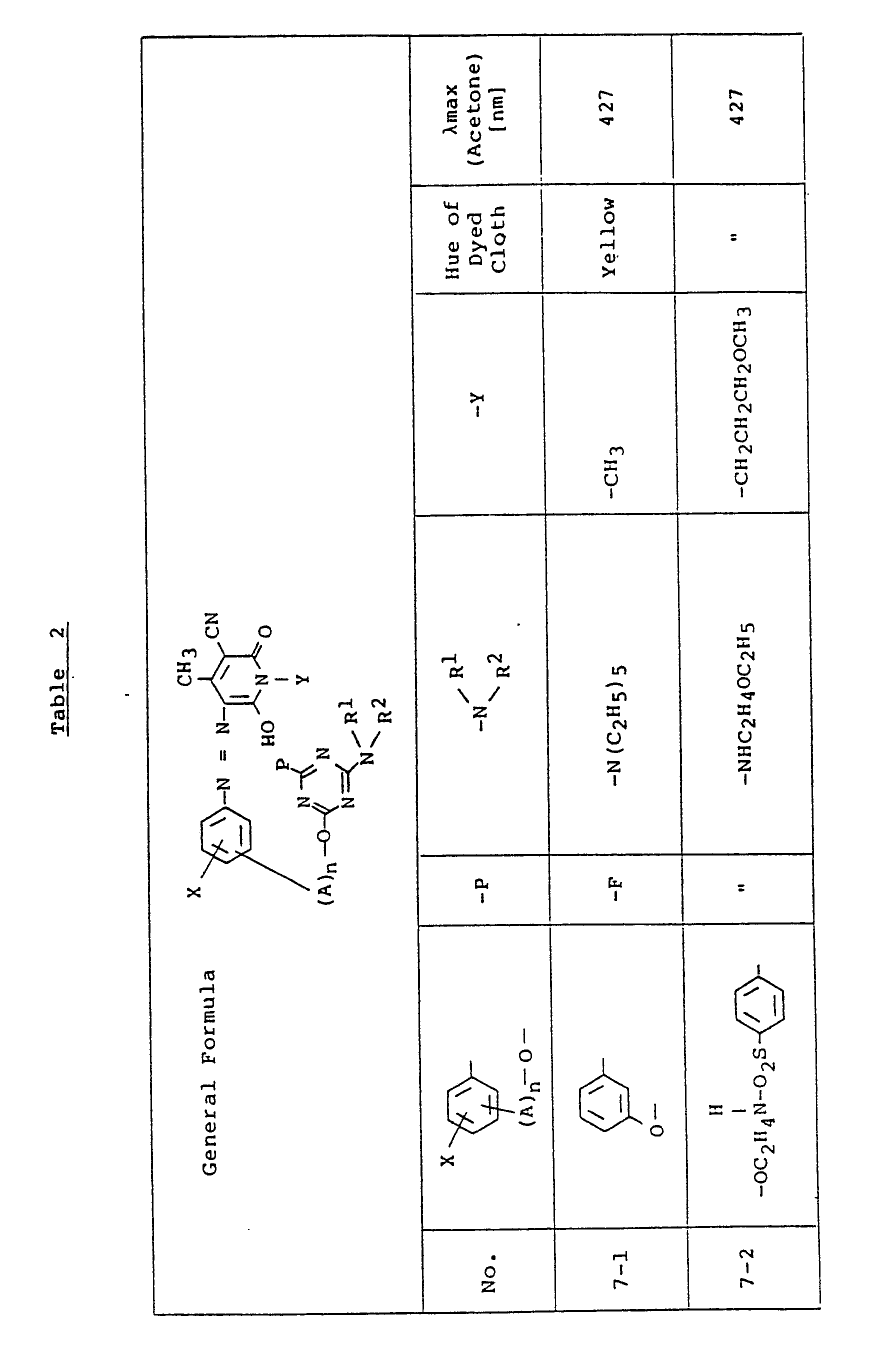

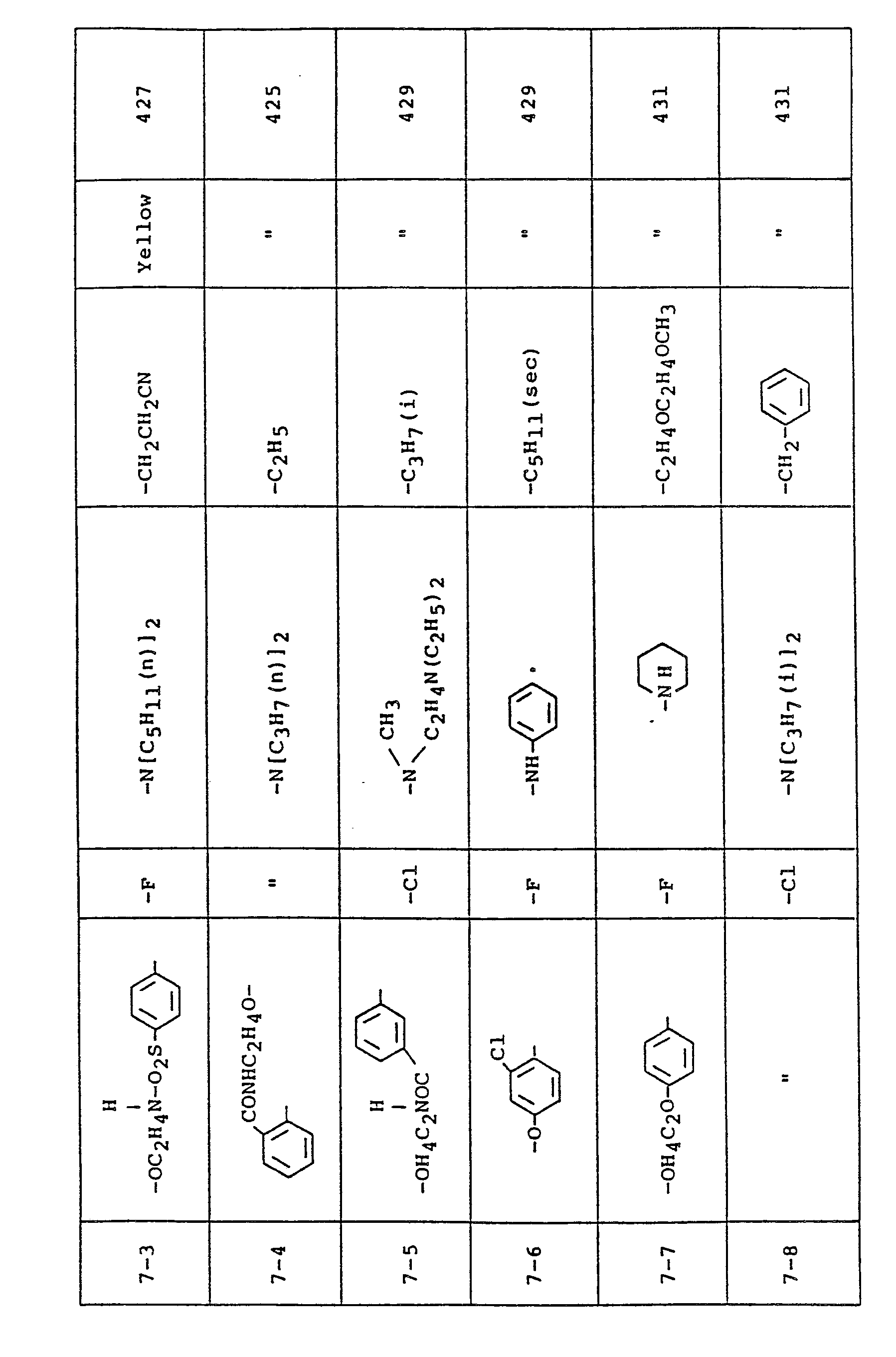

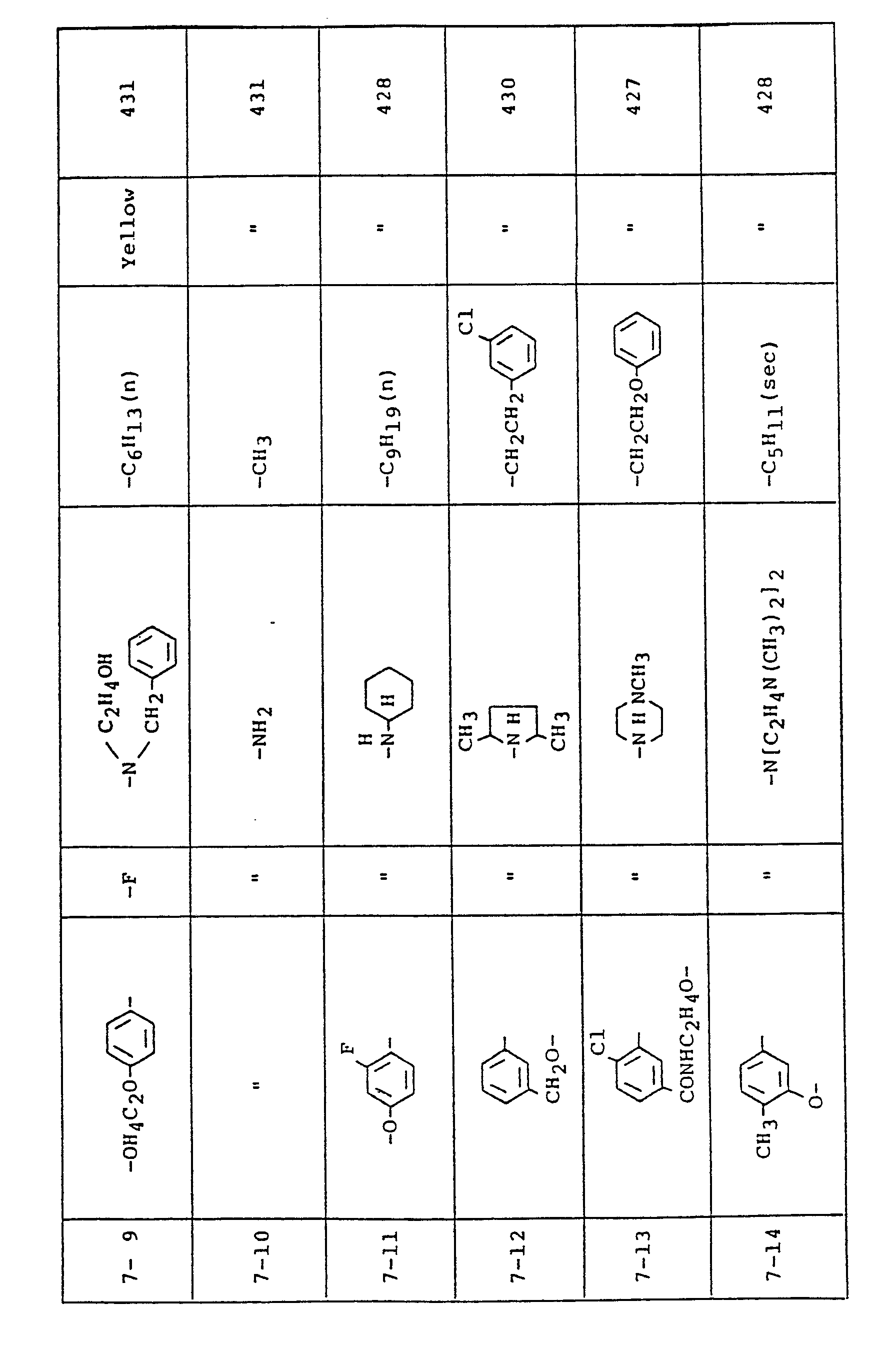

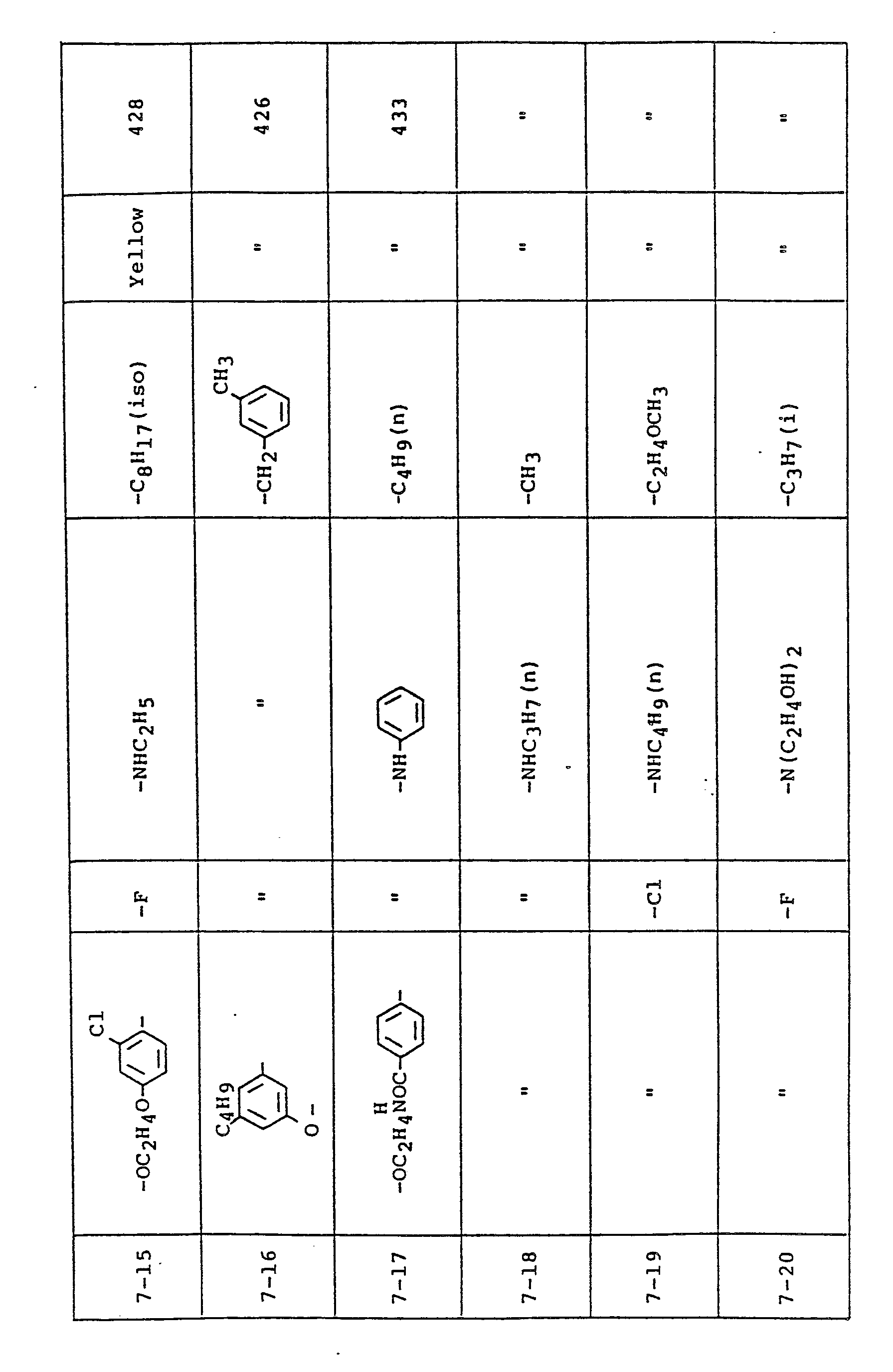

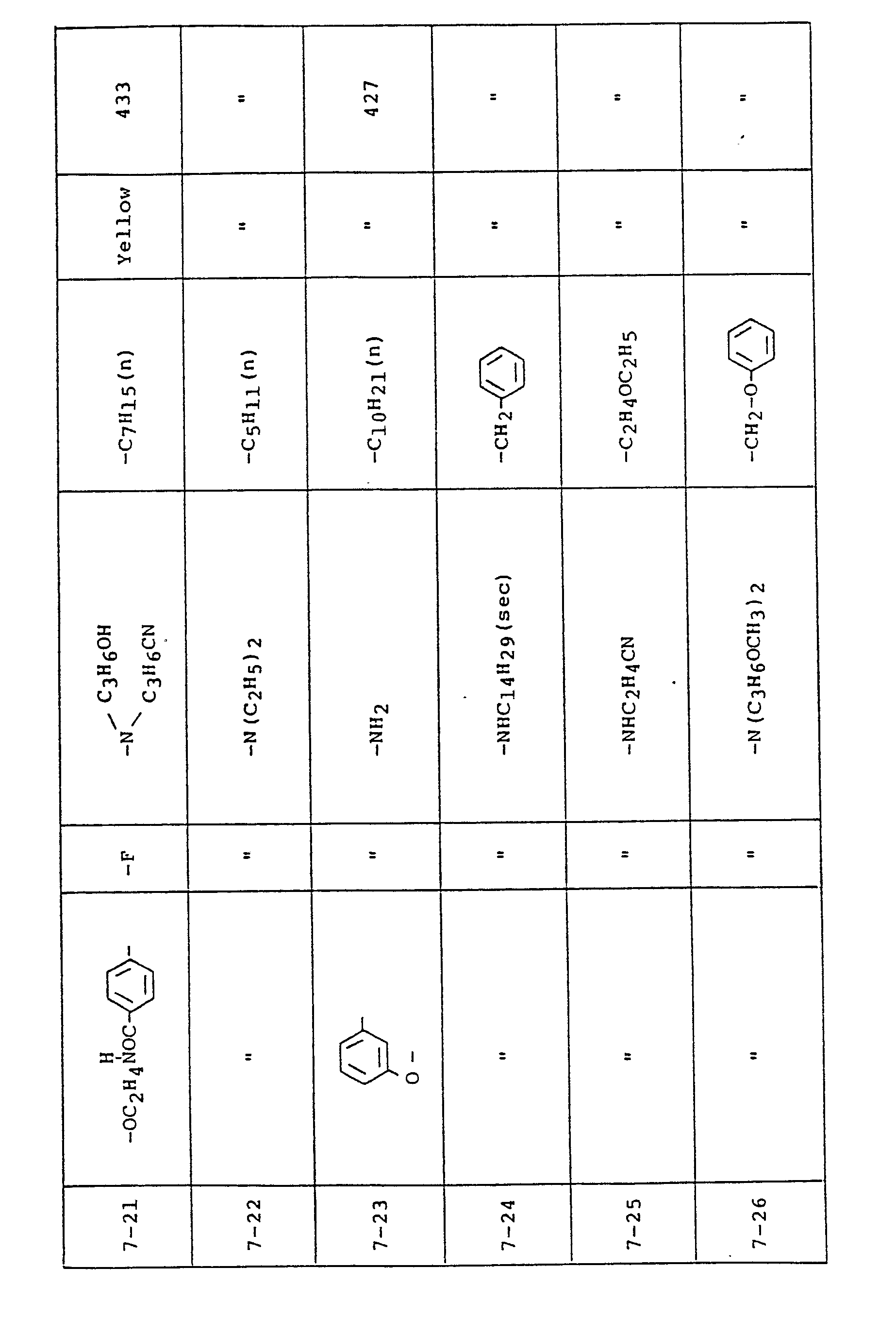

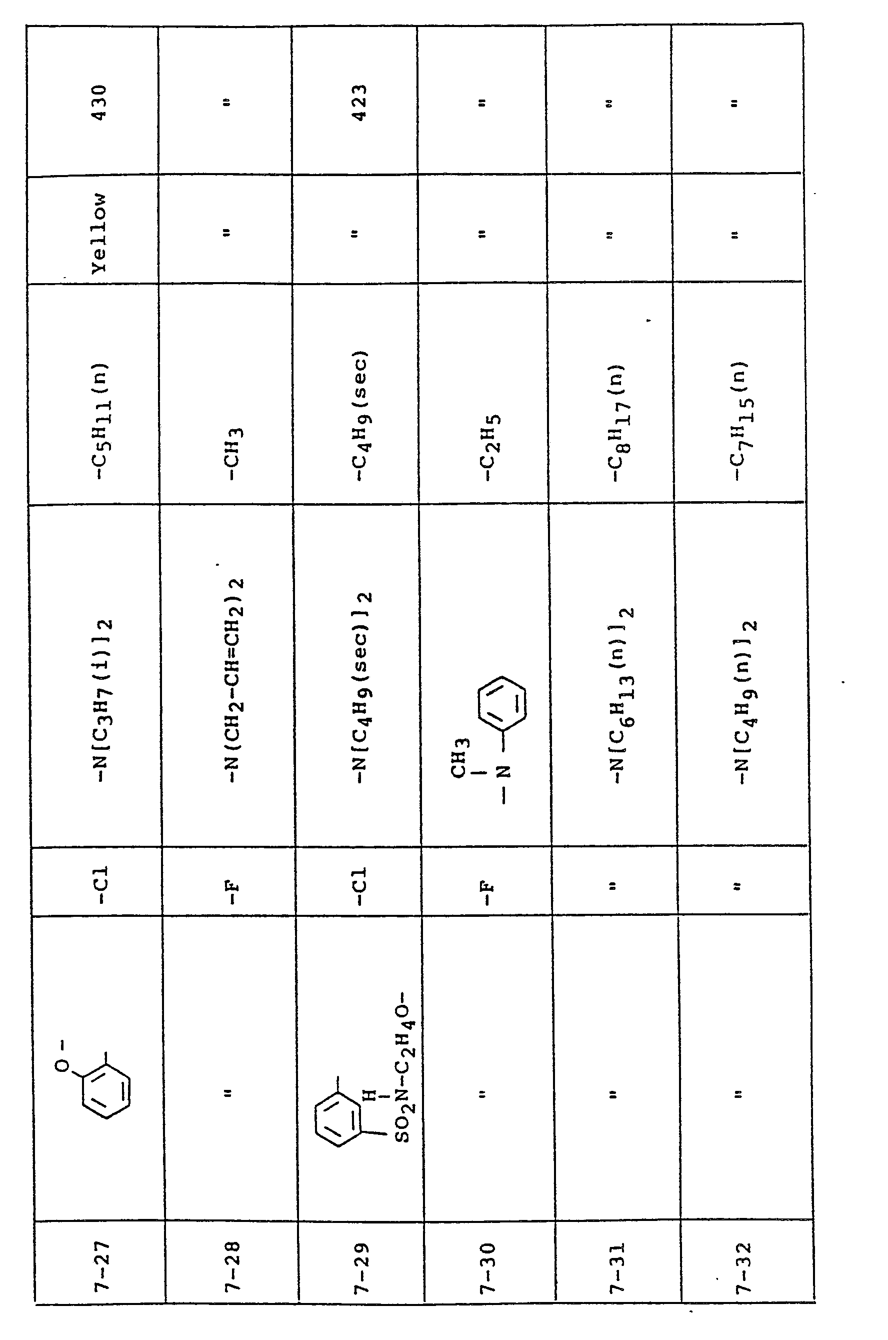

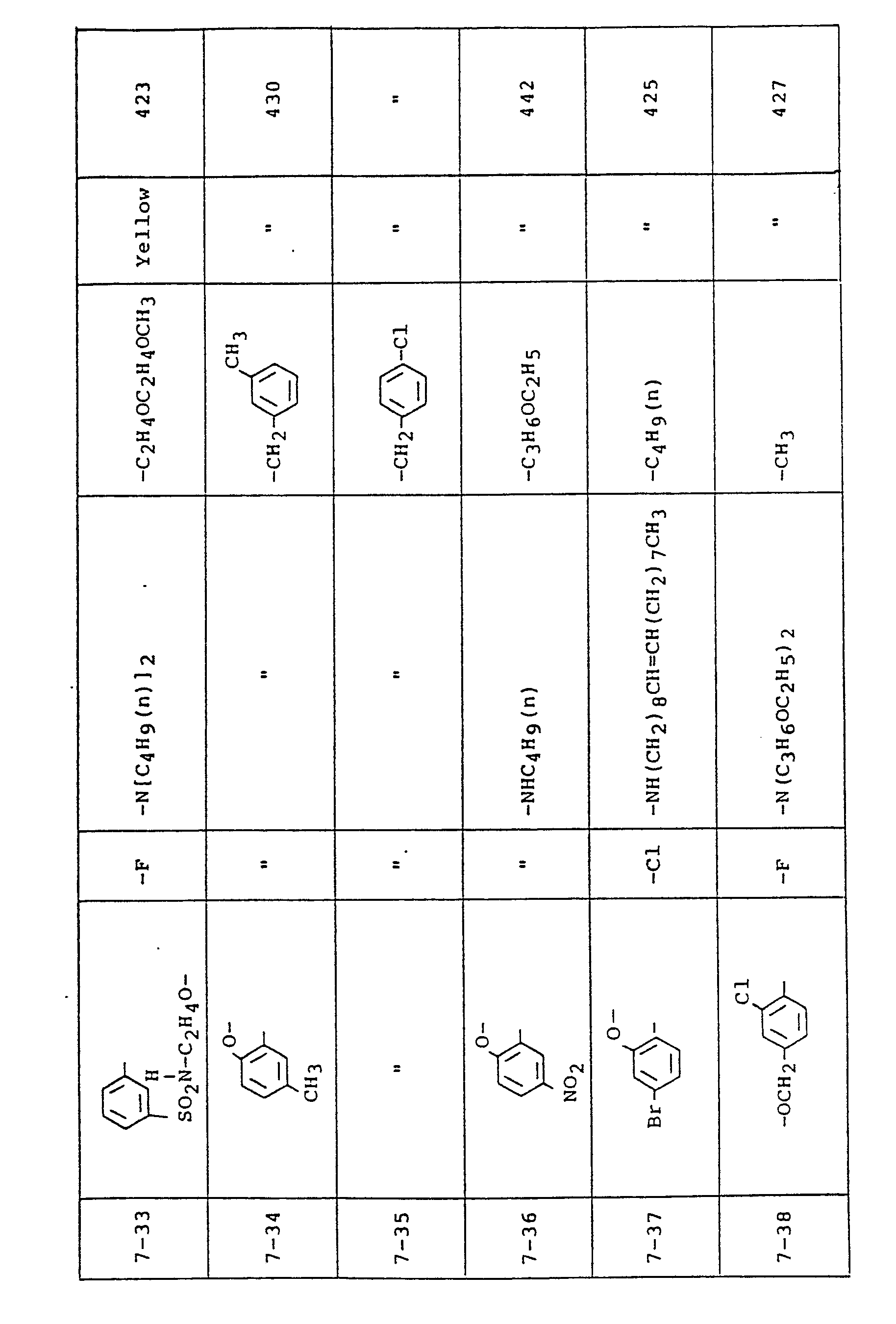

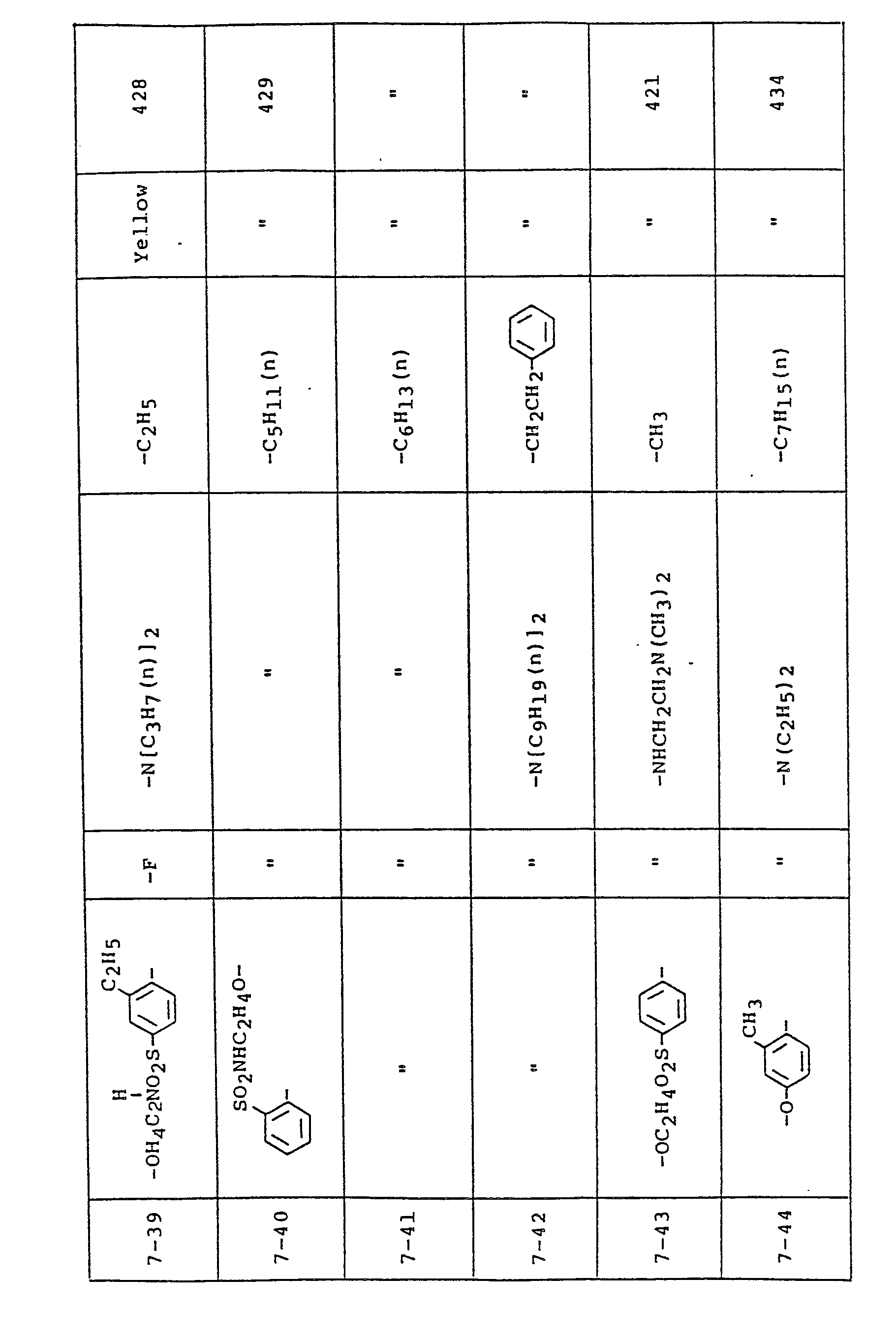

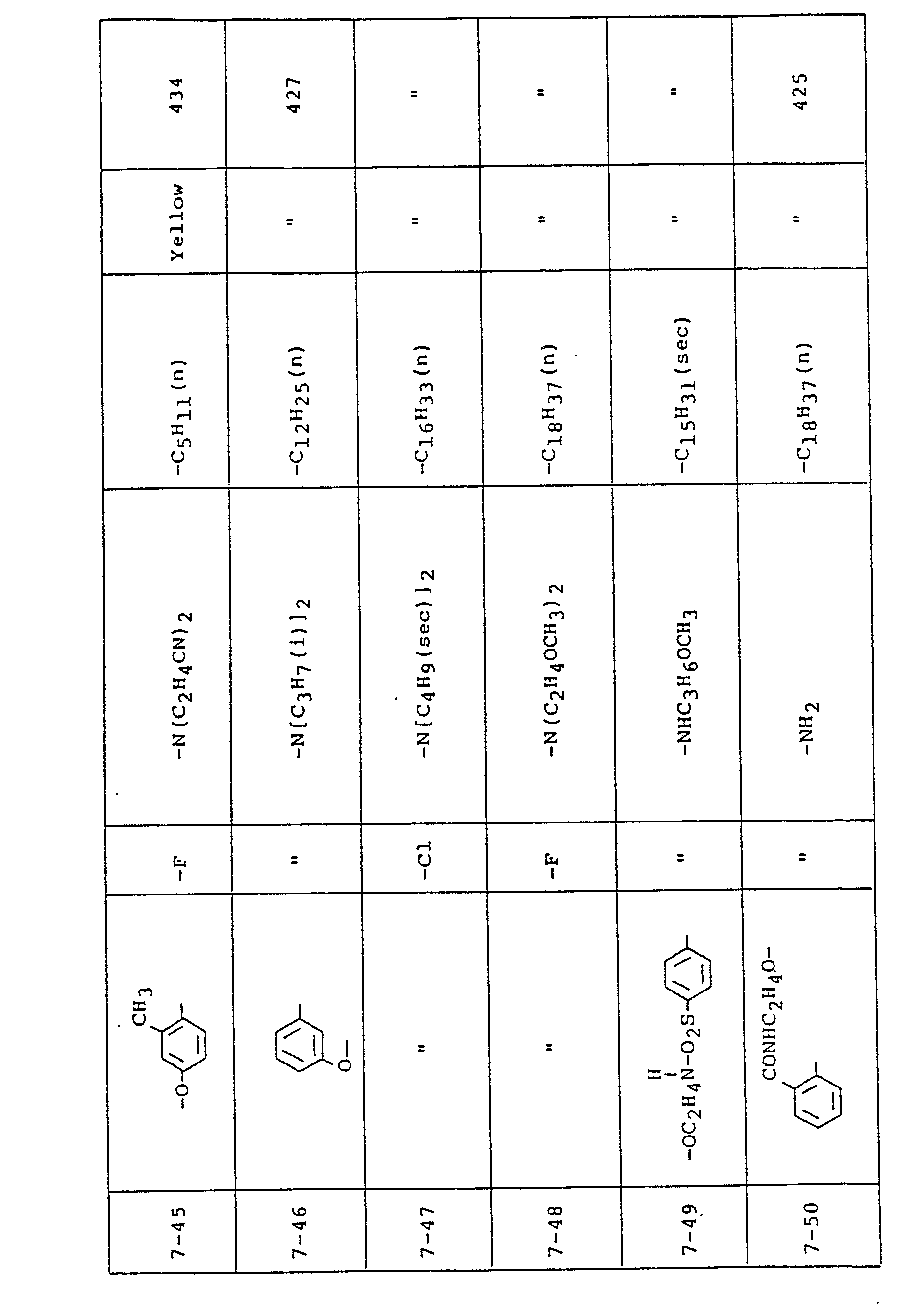

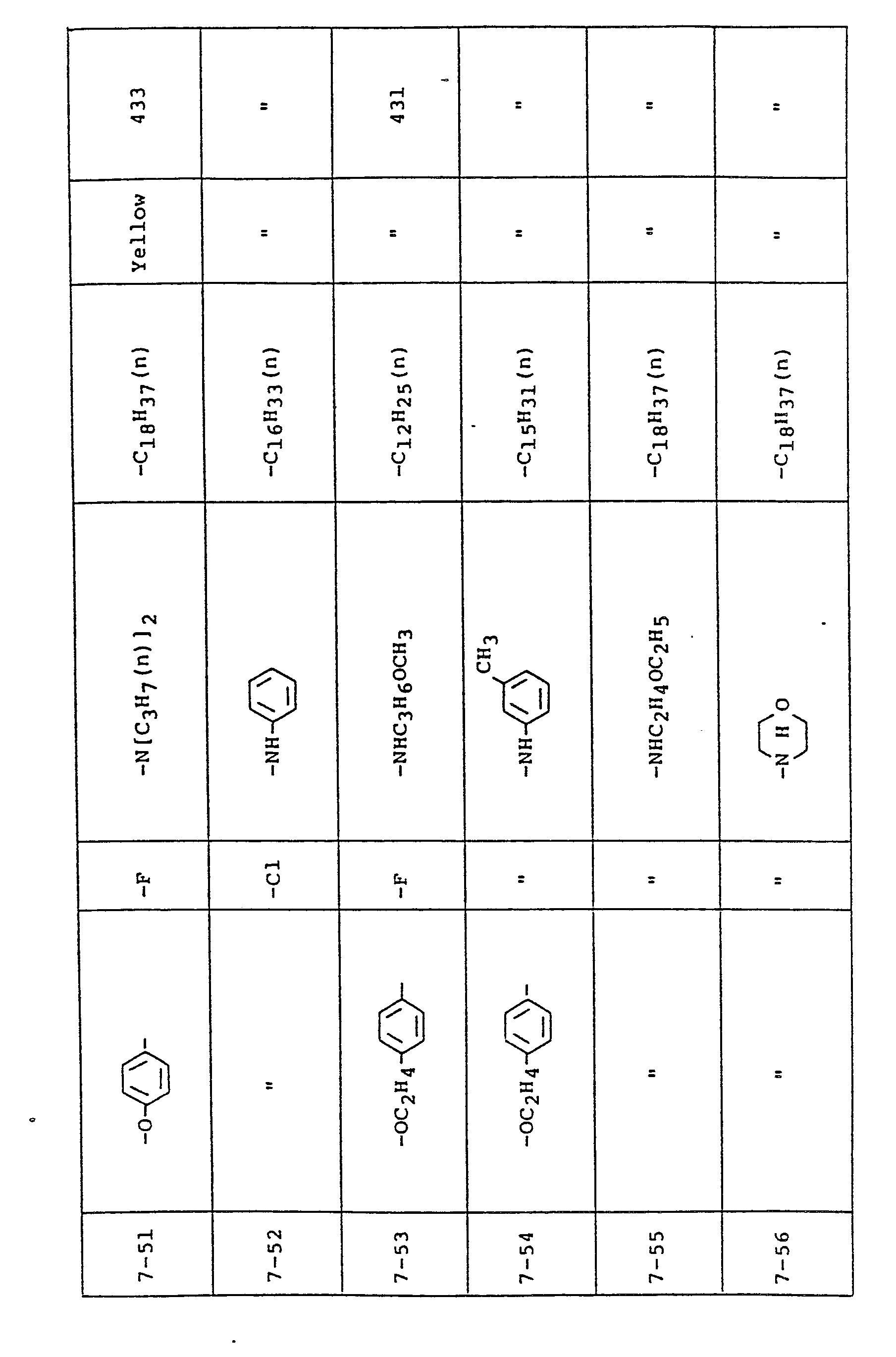

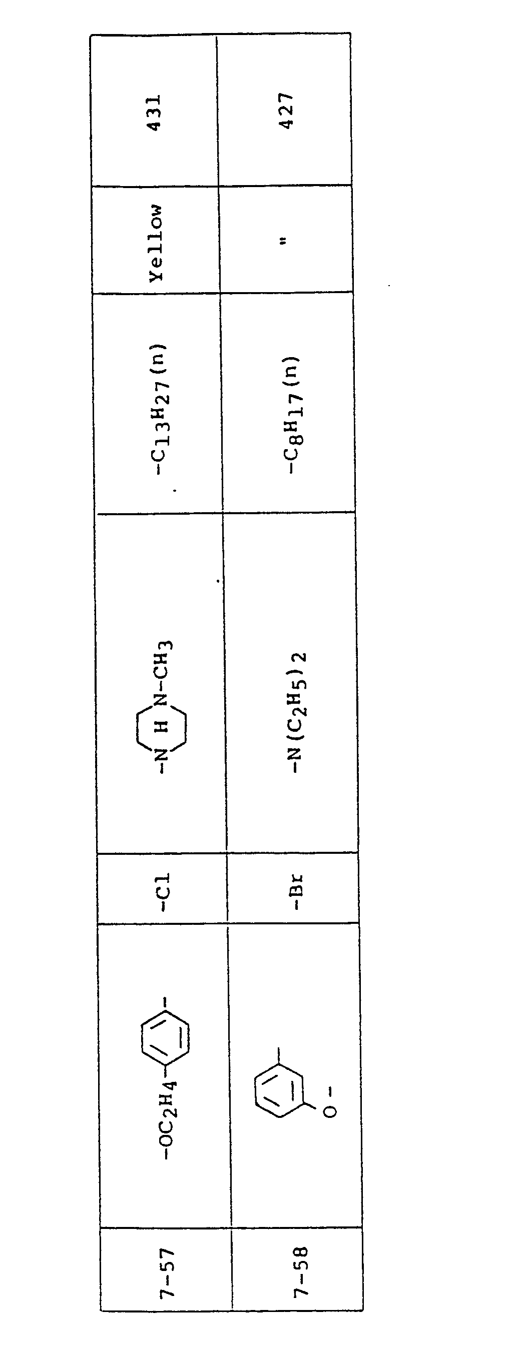

### Example 8

A dyestuff dispersion was prepared according to the procedures described in Example 1 except that 15 g of the monoazo dyestuff used in Example 1 was replaced by 15 g of a monoazo dyestuff of the following structural formula:

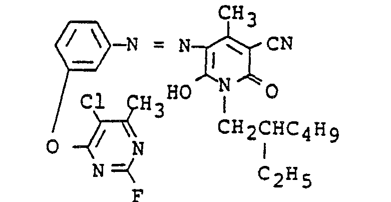

Using this dyestuff dispersion, a printing color paste (pH 9.0) having the following composition:

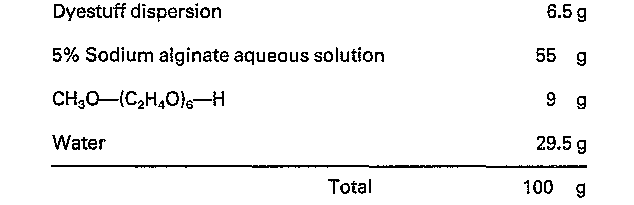

was prepared. Thereafter, a polyester/cotton (mixing ratio: 65/35) mixed spun cloth was dyed using the obtained printing color paste according to the procedures described in Example 1 to obtain a yellow dyed product having excellent light fastness. Said dyed product also had excellent light fastness. Said dyed product also had excellent wet color fastness without any stain in the white background.

The dyestuff used in this example was prepared by dissolving 3.82 g of a dyestuff of the following structural formula: 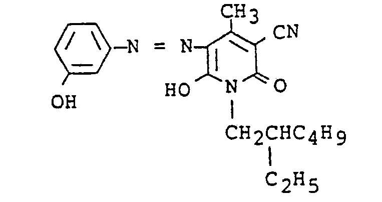 in 50 ml of N-methyl-2-pyrrolidone and 1.5 g of triethylamine, adding 2.0 g of 2,6-difluoro-4-methyl-5-chloropyrimidine, stirring at 40°C for 2 hours to effect condensation, then adding dropwise the resulting reaction mixture to 500 ml of water, filtering off the separated precipitates, washing with water and drying in a reduced pressure dryer at room temperature to obtain 5.0 g (yield 96%) of the dyestuff of the above structural formula as a yellow powder.

The Àₘₐₓ (acetone) of this product was 428 nm.

### Example 9

A dyestuff dispersion was prepared and subsequently a padding bath (pH 9.0) was prepared according to the procedures described in Example 2 except that 16 g of the monoazo dyestuff used in Example 2 was replaced by 16 g of a monoazo dyestuff of the following structural formula:

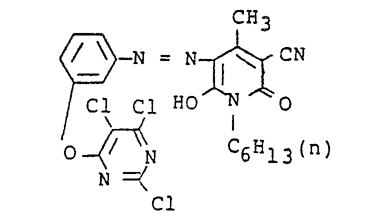

Thereafter, a polyester/cotton (mixing ratio: 65/35) mixed spun cloth was dyed using the obtained padding bath according to the procedures described in Example 2 to obtain a yellow dyed product having excellent light fastness. Said dyed product also had excellent wet color fastness.

The dyestuff used in this example was obtained by reacting a monoazo dyestuff of the following structural formula: 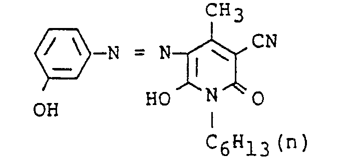 and 2,4,5,6-tetrachloropyrimidine in acetone in the presence of potassium carbonate anhydride as an acid-binding agent at 50°C for 4 hours.

The Àₘₐₓ (acetone) of this product was 428 nm.

### Example 10

A dyestuff dispersion was prepared and subsequently a printing color paste (pH 9.0) was prepared according to the procedures described in Example 4 except that 15 g of the monoazo dyestuff used in Example 4 was replaced by 15 g of a monoazo dyestuff of the following structural formula:

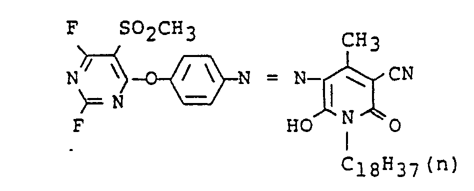

Thereafter, a mercerized cotton broad (40 counts) was dyed according to the procedures described in Example 4 to obtain a yellow dyed product having excellent light fastness. Said dyed product also had excellent wet color fastness.

The dyestuff used in this example was obtained by reacting a monoazo dyestuff of the following structural formula: 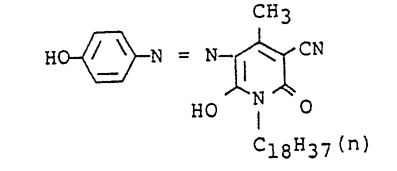 and 2,4,6-trifluoro-5-methylsulfonylpyrimidine in acetone in the presence of triethylamine anhydride as an acid-binding agent at 50°C for 3 hours.

The λₘₐₓ (acetone) of this product was 434 nm.

### Example 11

A dyestuff dispersion was prepared and subsequently a dyeing bath (pH 8.0) was prepared according to the procedures described in Example 3 except that 10 g of the monoazo dyestuff used in Example 3 was replaced by 10 g of a monoazo dyestuff of the following structural formula:

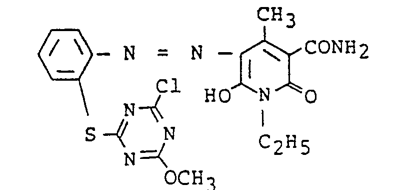

Thereafter, nylon taffeta was dyed according to the procedures described in Example 3 to obtain a yellow dyed product having excellent light fastness. Said dyed product also had excellent wet color fastness.

The dyestuff used in this example was obtained by reacting a monoazo dyestuff of the following structural formula: 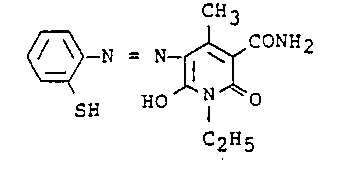 and 2,4-dichloro-6-methoxy-S-triazine in methyl ethyl ketone in the presence of potassium bicarbonate as an acid-binding agent at reflux for 3 hours.

The Àmax (acetone) of this product was 422 nm.

### Example 12

A dyestuff dispersion was prepared and subsequently a printing color paste (pH 8.0) was prepared according to the procedures described in Example 5 except that 10 g of the monoazo dyestuff used in Example 5 was replaced by 10 g of a monoazo dyestuff of the following structural formula:

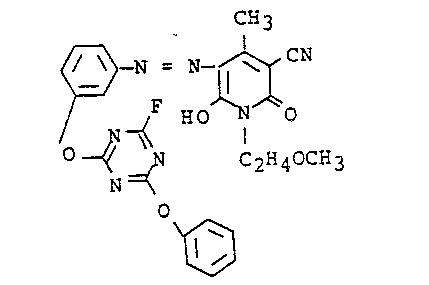

Thereafter, a polyester/wool (mixing ratio: 80/20) mixed spun cloth was dyed with the obtained printing color paste according to the procedures described in Example 5 to obtain a uniform yellow dyed product having excellent light fastness. Said dyed product also had excellent wet color fastness.

The dyestuff used in this example was obtained by condensing a monoazo dyestuff of the following structural formula: 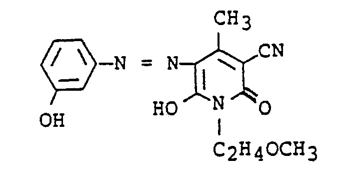 and 2,4-difluoro-6-phenoxy-S-triazine in N-methyl-2-pyrrolidone in the presence of triethylamine as an acid-binding agent at room temperature.

The λₘₐₓ (acetone) of this product was 427 nm.

### Example 13

Using a dyestuff dispersion prepared according to the procedures described in Example 8, a padding bath (pH 8.0) having the following composition:

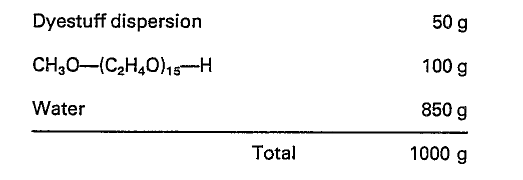

was prepared. A nylon/rayon (mixing ratio: 50/50) mixed spun cloth was impregnated, squeezed to a squeezing rate of 60% provisionally dried at 100°C for 2 minutes, and dry heated at 190°C for 90 seconds to fix. This was then subjected to washing treatment according to the procedures described in Example 1 to obtain a uniform yellow dyed product having excellent light fastness. Said dyed product also had excellent wet color fastness.

### Example 14

The monoazo dyestuffs set forth in Table 3 were synthesized according to the procedures described in Example 8 or Example 9, and using these dyestuffs, polyester/cotton (65/35) mixed spun cloths were print-dyed according to the procedures described in Example 1.

The obtained dyed products had particularly excellent light fastness, and also had excellent wet color fastness without any stain in the white background.

The hue of each dyed product and the λₘₐₓ (acetone) of each dyestuff are shown in Table 3.

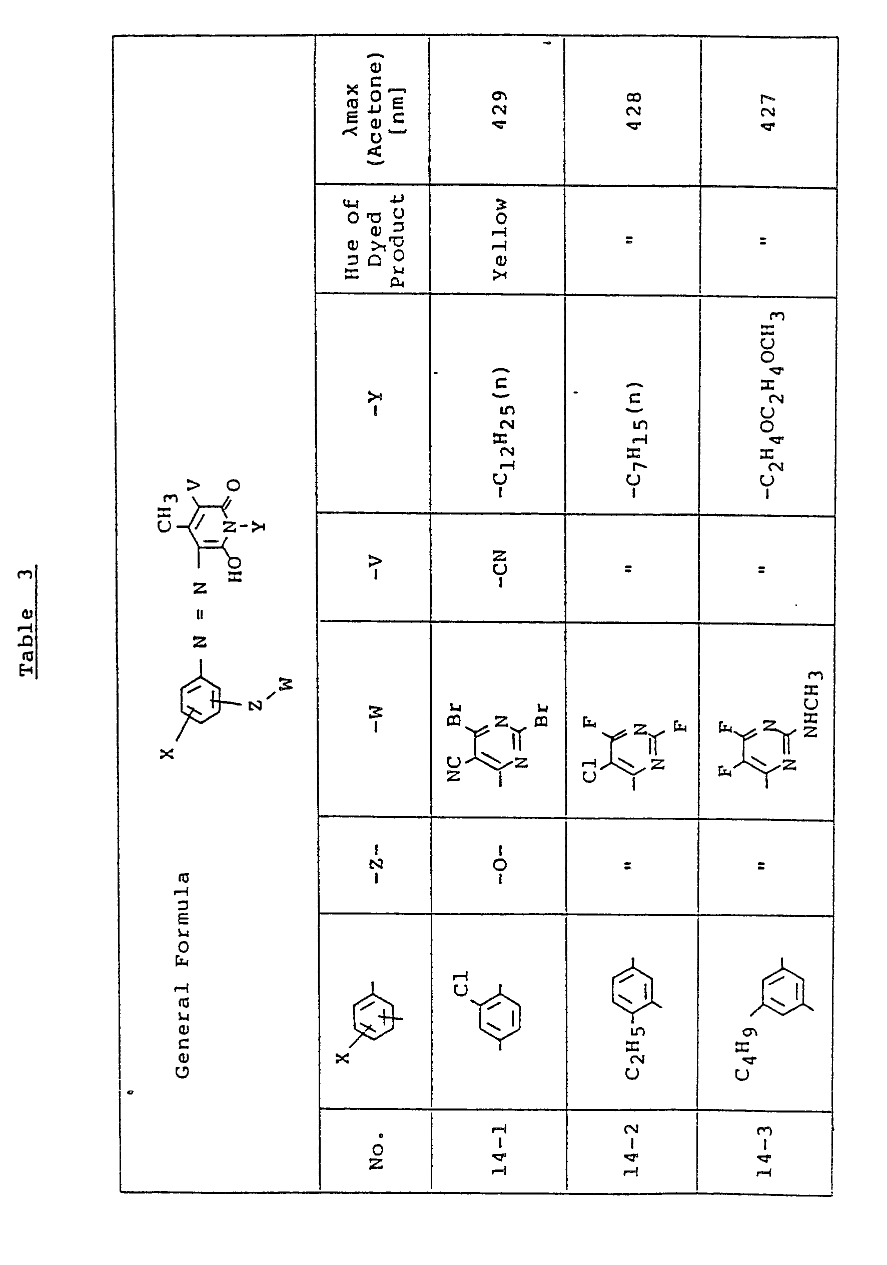

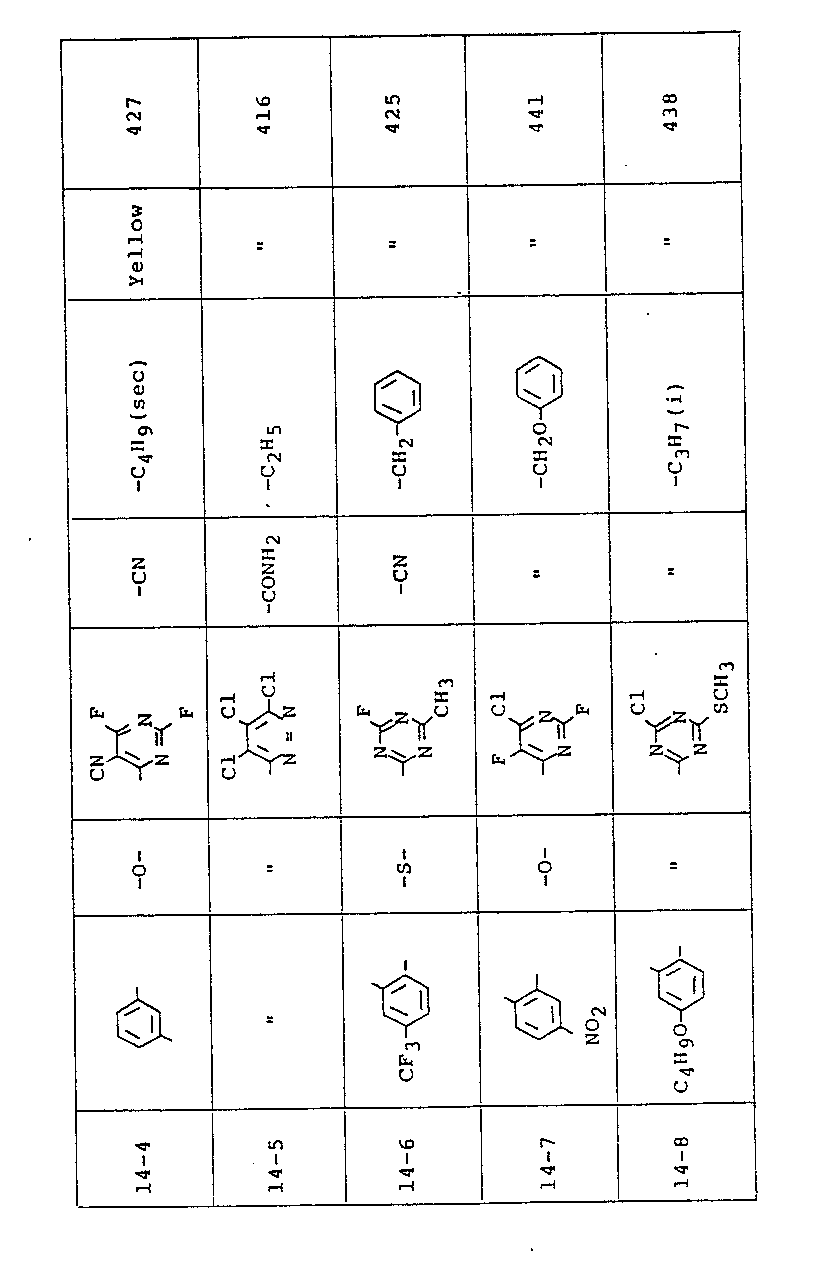

### Example 15

The monoazo dyestuffs set forth in Table 4 were synthesized according to the procedures described in Example 8, and using these dyestuffs, polyester/cotton (65/35) mixed spun cloths were pad-dyed according to the procedures described in Example 2.

The obtained dyed product had excellent light fastness, and also had excellent wet color fastness.

The hue of each dyed product and the λₘₐₓ (acetone) of each dyestuff are shown in Table 4.

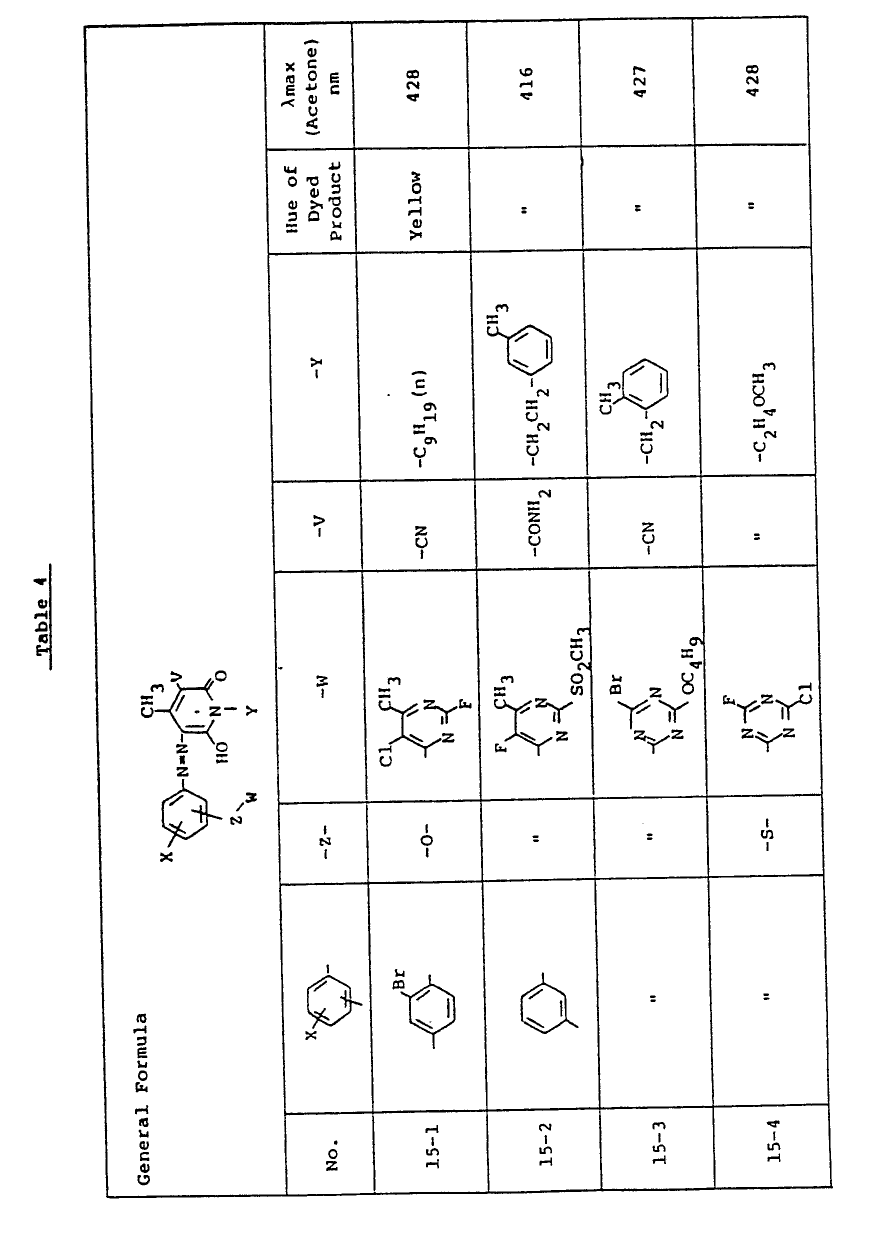

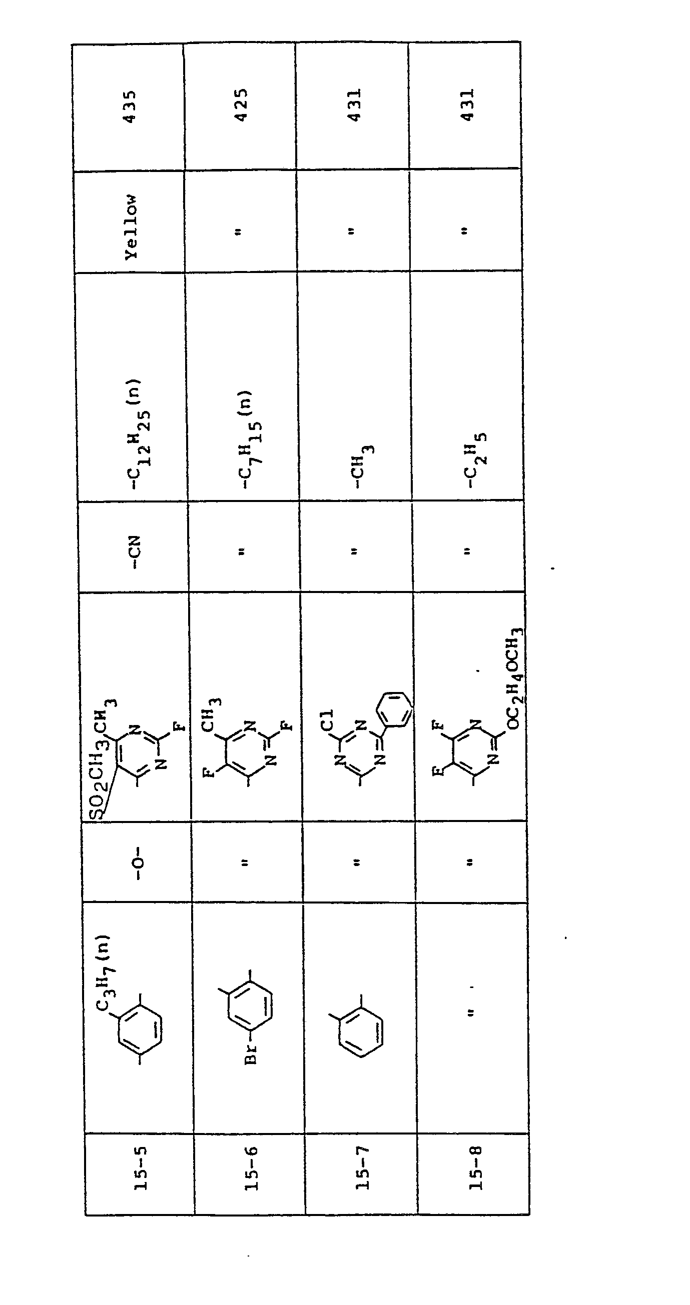

### Example 16

The monoazo dyestuffs set forth in Table 5 were synthesized according to the procedures described in Example 8, and using these dyestuffs, cotton was print-dyed according to the procedures described in Example 4.

The obtained dyed products had particularly excellent light fastness, and also had excellent wet color fastness without any stain in the white background.

The hue of each dyed product and the λₘₐₓ (acetone) of each dyestuff are shown in Table 5.

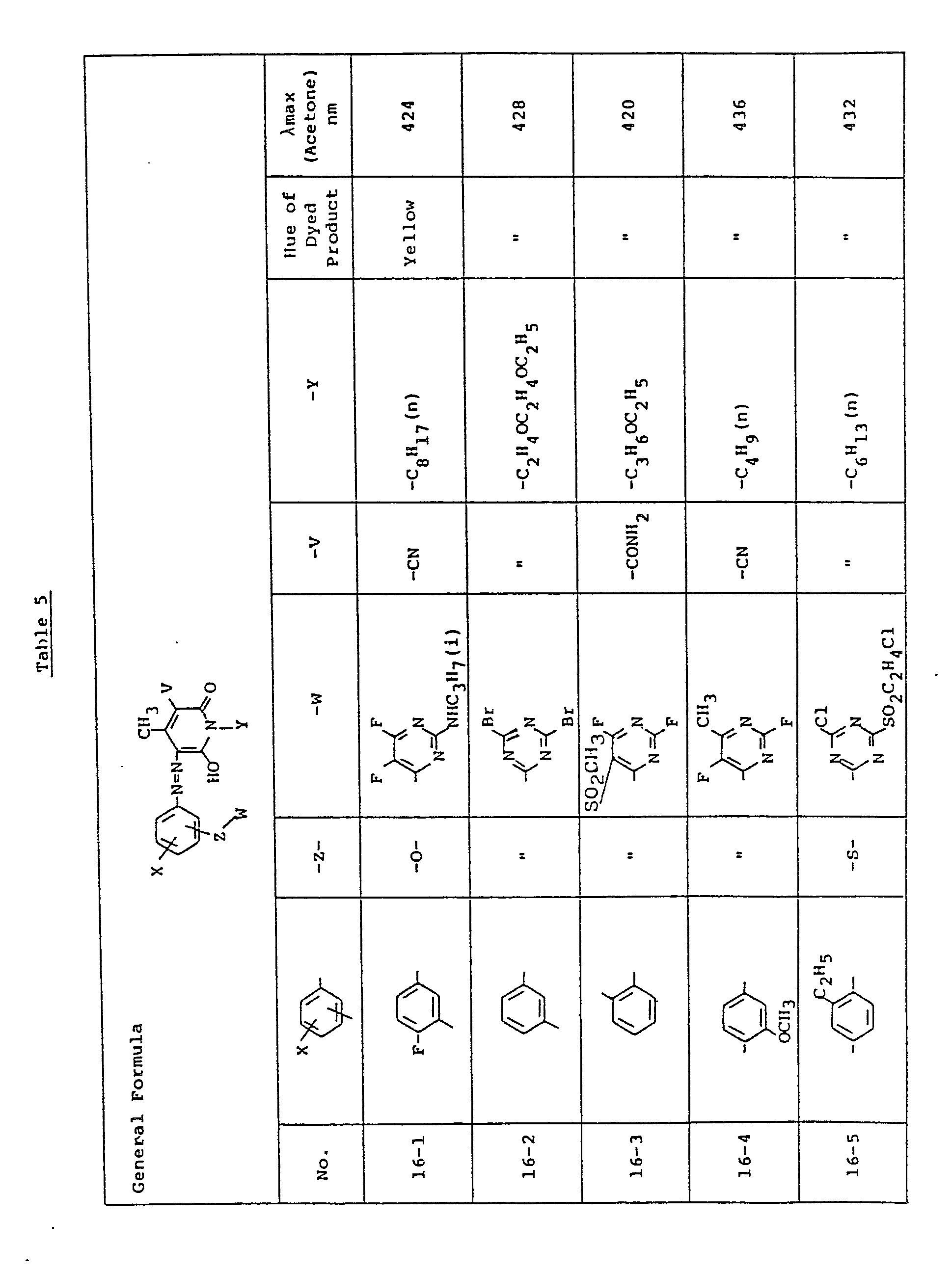

### Example 17

The monoazo dyestuffs set forth in Table 6 were synthesized according to the procedures described in Example 8, and using these dyestuffs, nylon taffeta was dyed according to the procedures described in Example 3.

The obtained dyed products had particularly excellent light fastness, and also had excellent wet light fastness.

The hue of each dyed product and the λₘₐₓ (acetone) of each dyestuff are shown in Table 6.

Using the obtained dyeing bath, nylon/taffeta was dyed according to the procedures described in Example 3 to obtain a yellow dyed product having excellent light fastness (grade 6). The dry cleaning fastness of said dyed product was also excellent (grade 5).

The dyestuff used in this example was synthesized from 3.0 g of a compound of the following structural formula: 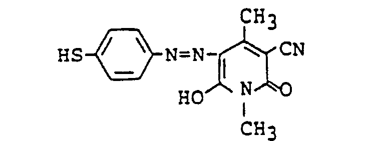 and 2.48 g of 2,4-dichloro-6-diethylaminotriazine according to the procedures described in Example 20.

The λₘₐₓ (acetone) of this dyestuff was 434 nm..

### Example 22

A dyestuff dispersion was prepared and subsequently a padding bath (pH 8.0) was prepared according to the procedures described in Example 2 except that 16 g of the monoazo dyestuff used in Example 2 was replaced by 16 g of a monoazo dyestuff of the following structural formula:

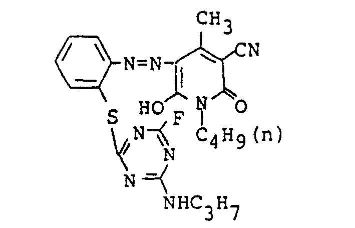

Thereafter, using the obtained padding bath, polyester/cotton (mixing ratio: 65/35) mixed spun cloth was dyed to obtain a yellow dyed product having excellent light fastness (grade 5). The washing fastness of said dyed product was also excellent (grade 5).

The dyestuff used in this example was synthesized from 3.28 g of a compound of the following structural formula: 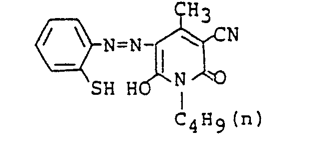 and 1.91 g of 2,4-difluoro-6-n-propylaminotriazine according to the procedures described in Example 20.

The Àₘₐₓ (acetone) of this dyestuff was 431 nm.

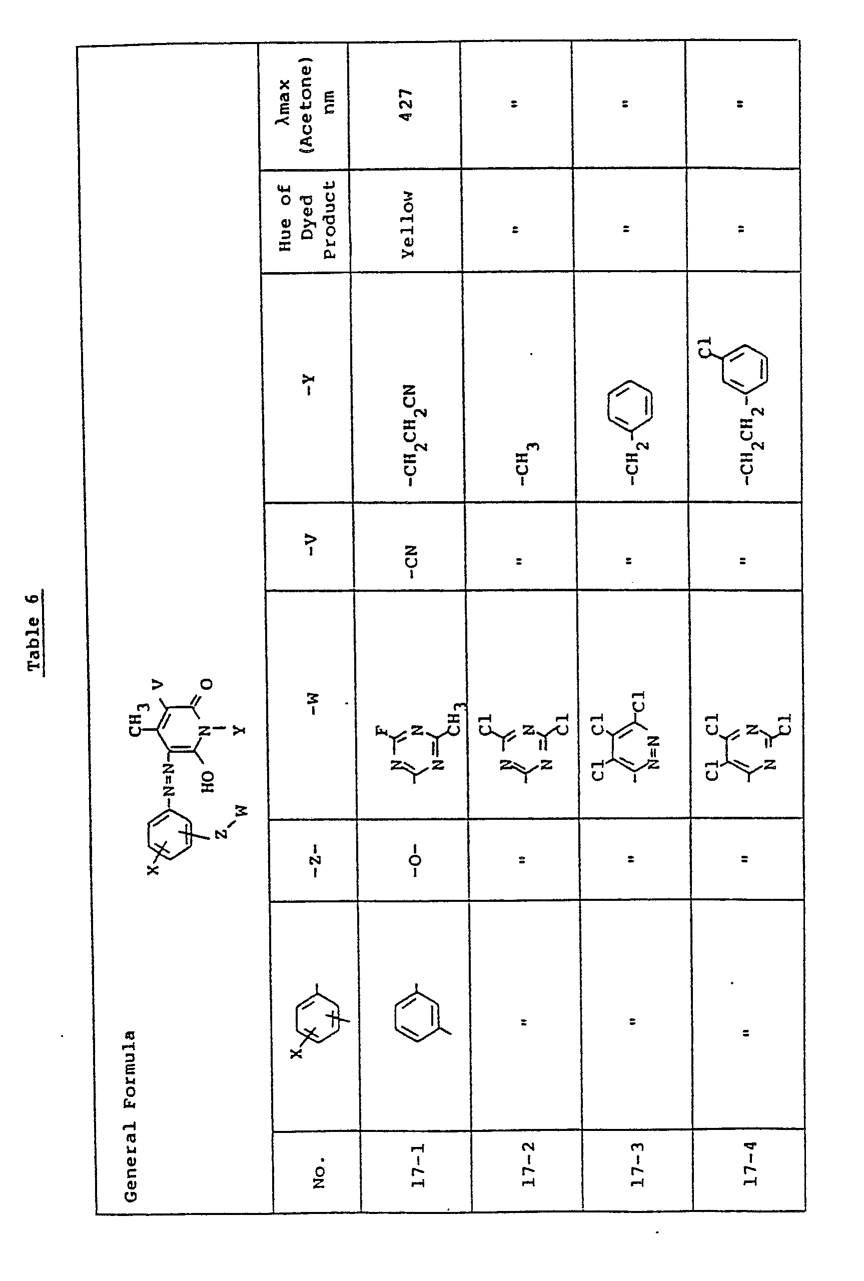

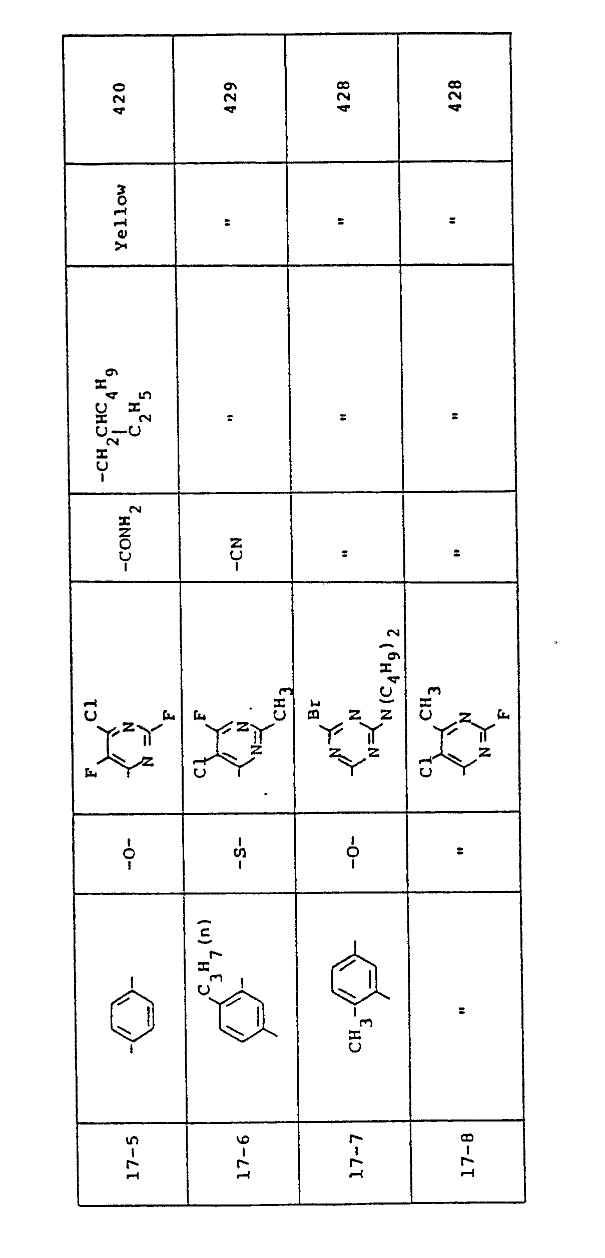

### Example 18

The monoazo dyestuffs set forth in Table 7 were synthesized according to the procedures described in Example 8, and using these dyestuffs, polyester/wool (80/20) mixed spun cloths were print-dyed according to the procedures described in Example 5.

The obtained dyed products had excellent light fastness, and also had excellent wet color fastness.

The hue of each dyed product and the λₘₐₓ (acetone) of each dyestuff are shown in Table 7.

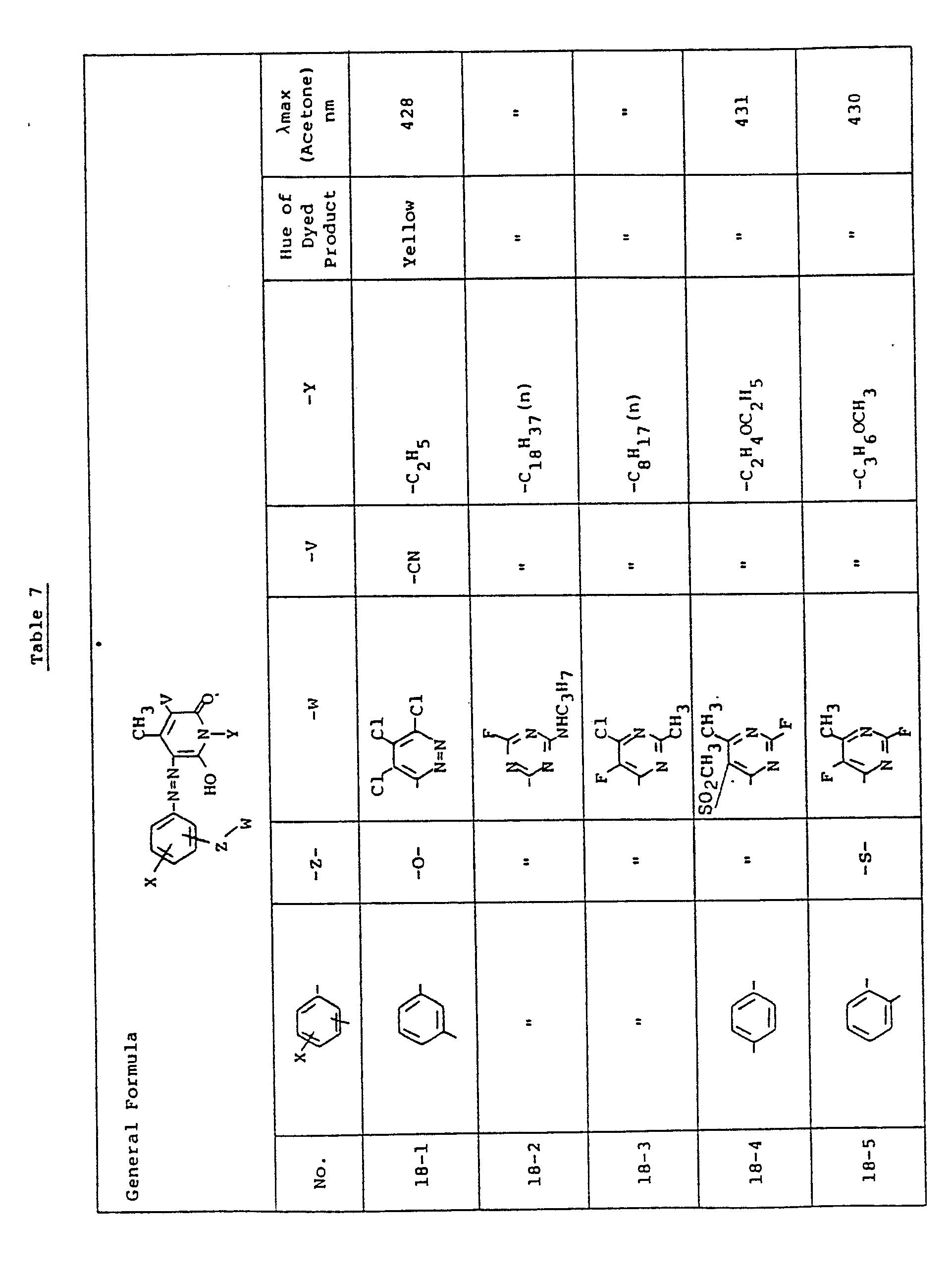

### Example 19

The monoazo dyestuffs set forth in Table 8 were synthesized according to the procedures described in Example 8, and using these dyestuffs, nylon/rayon (mixing ratio: 50/50) mixed spun cloths were pad-dyed according to the procedures described in Example 13.

The obtained dyed products had excellent light fastness, and also had excellent wet color fastness.

The results are shown in Table 8.

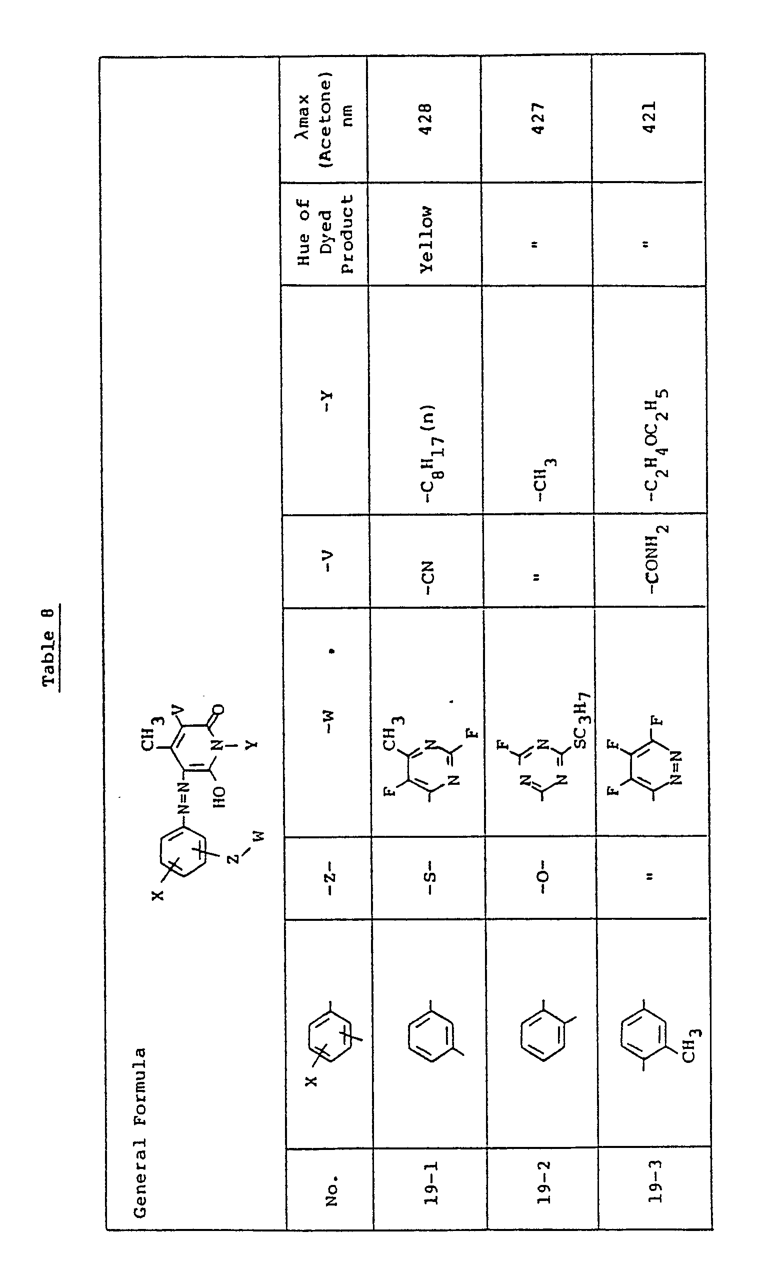

### Example 20

A dyestuff dispersion was prepared and subsequently a printing color paste (pH 8.0) was prepared according to the procedures described in Example 8 except that 15 g of the monoazo dyestuff used in Example 8 was replaced by 15 g of a monoazo dyestuff of the following structural formula:

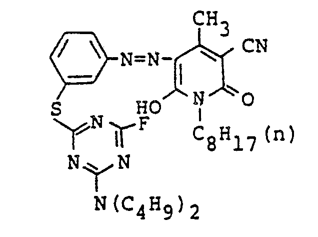

Thereafter, using the obtained printing color paste, a polyester/cotton (mixing ratio: 65/35) mixed spun cloth was dyed to obtain a yellow dyed product having excellent light fastness (grade 5). The washing fastness of said dyed product was also excellent (grade 5).

The dyestuff used in this example was synthesized by the following procedures.

3.98 g of a compound of the following structural formula:

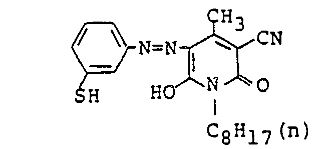

2.5 of 2,4-difluoro-6-(di-n-butylamino)-triazine, 1.5 g of triethylamine and 1.0 g of potassium carbonate anhydride were added to 30 ml of acetone, reacted at reflux for 4 hours, then poured into cold water, the resulting precipitates were filtered off, washed with water and dried at room temperature to obtain 5.4 g (yield 87%) of the dyestuff of Example 20 as a yellow powder.

The maximum absorption wavelength Àₘₐₓ (acetone) of this dyestuff was 428 nm.

### Example 21

A dyestuff dispersion was prepared and subsequently a dyeing bath (pH 8.0) was prepared according to the procedures described in Example 3 except that 10 g of the monoazo dyestuff used in Example 3 was replaced by 10 g of a monoazo dyestuff of the following structural formula:

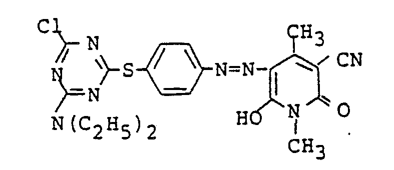

### Example 23

A dyestuff dispersion was prepared and subsequently a printing color paste (pH 8.0) was prepared according to the procedures described in Example 4 except that 15 g of the monoazo dyestuff used in Example 4 was replaced by 15 g of a monoazo dyestuff of the following structural formula:

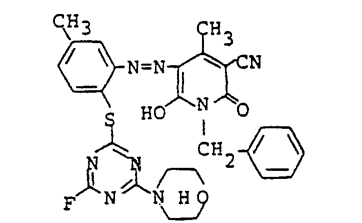

Thereafter, using the obtained printing color paste, mercerized cotton broad (40 counts) was dyed according to the procedures described in Example 4 to obtain a yellow dyed product having excellent light fastness (grade 5). The washing fastness of said dyed product was also excellent (grade 4-5).

The dyestuff used in this example was synthesized according to the procedures described in Example 20.

The λₘₐₓ (acetone) of this dyestuff was 432 nm.

### Example 24 -

A dyestuff dispersion was prepared and a printing color paste (pH 8.0) was prepared according to Example 5 except that 10 g of the monoazo dyestuff used in Example 5 was replaced by 10 g of a monoazo dyestuff of the following structural formula:

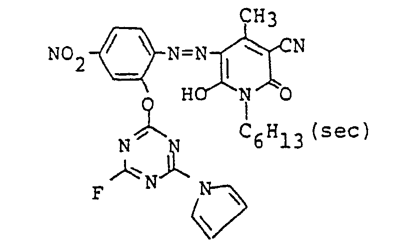

Thereafter, using the obtained printing color paste, a polyester/wool (mixing ratio: 80/20) mixed spun cloth was dyed according to the procedures described in Example 5 to obtain a uniformly dyed yellow dyed product having excellent light fastness. The dry cleaning fastness of said dyed product was also excellent (grade 5).

The dyestuff used in this example was synthesized according to the procedures described in Example 20.

The Àmax (acetone) of this dyestuff was 432 nm.

### Example 25

A dyestuff dispersion was prepared and subsequently a padding bath was prepared according to the procedures described in Example 6 except that 16 g of the monoazo dyestuff used in Example 6 was replaced by 16 of a monoazo dyestuff of the following structural formula:

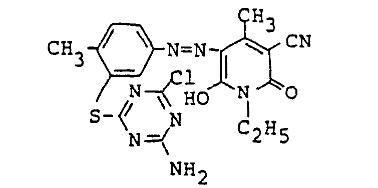

Thereafter, using the obtained padding bath, a polyester fiber cloth was dyed according to the procedures described in Example 6 to obtain a yellow dyed product having excellent light fastness.

The λₘₐₓ (acetone) of this dyestuff was 430 nm.

### Example 26

Using the monoazo dyestuffs set forth in Table 9, polyester/cotton (65/35) mixed spun cloths were print-dyed according to the procedures described in Example 8. The obtained dyed products had particularly excellent light fastness.

They also had excellent wet color fastness without any stain in the white background.

Said monoazo dyestuffs were synthesized according to the procedures of Example 20 or Example 21.

The hue of each dyed product and the λₘₐₓ (acetone) of each dyestuff are shown in Table 9.

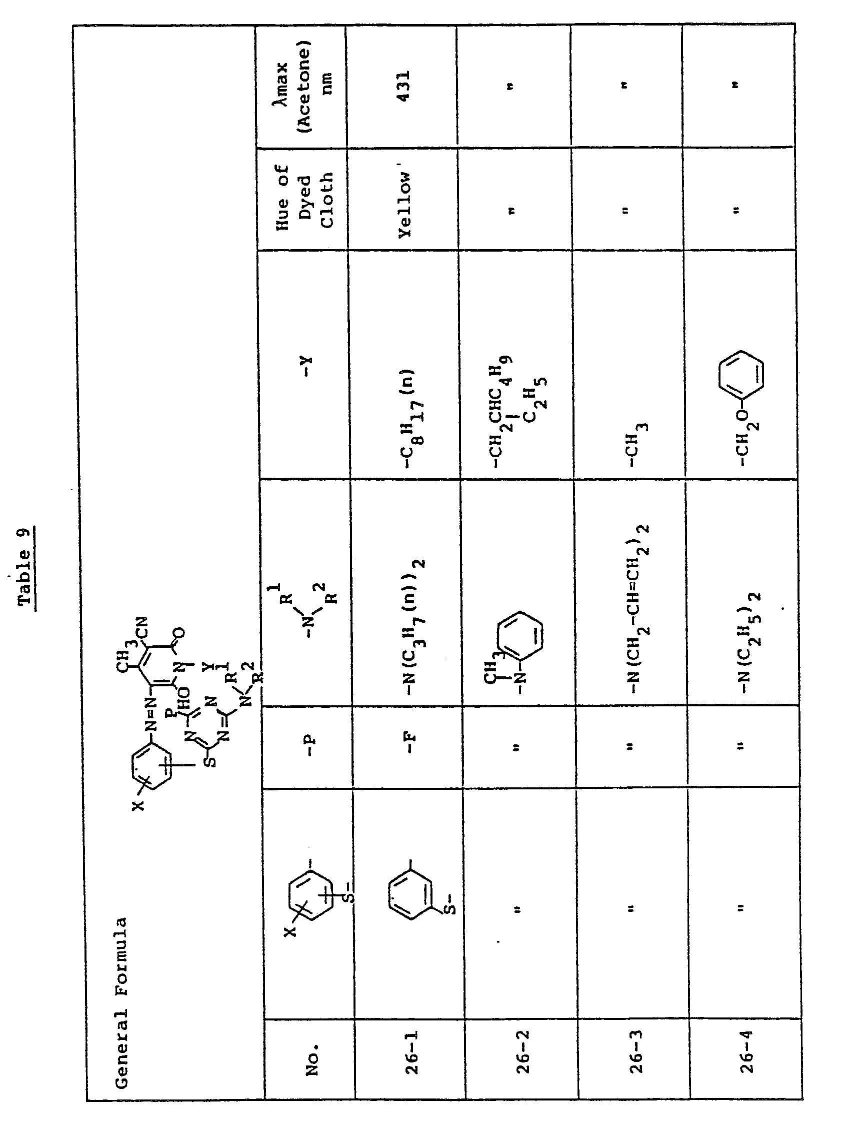

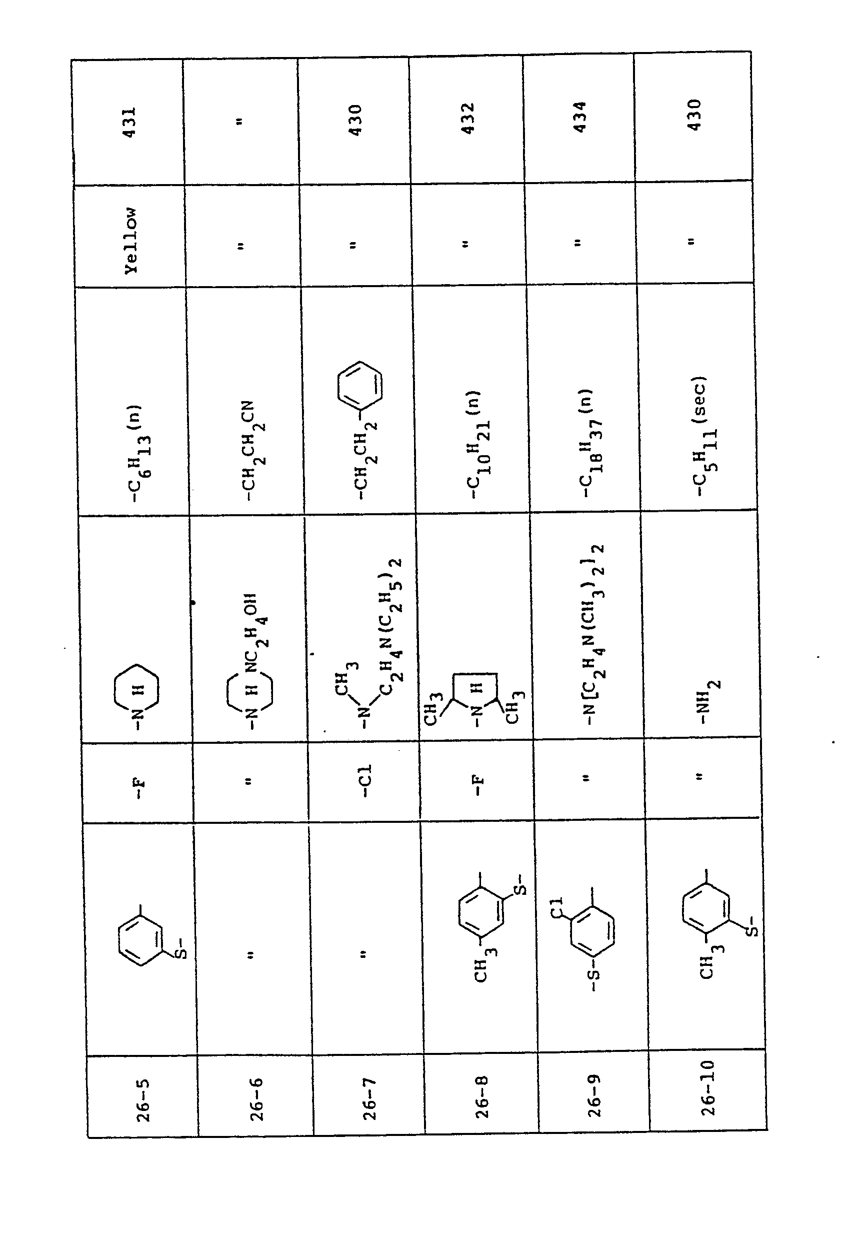

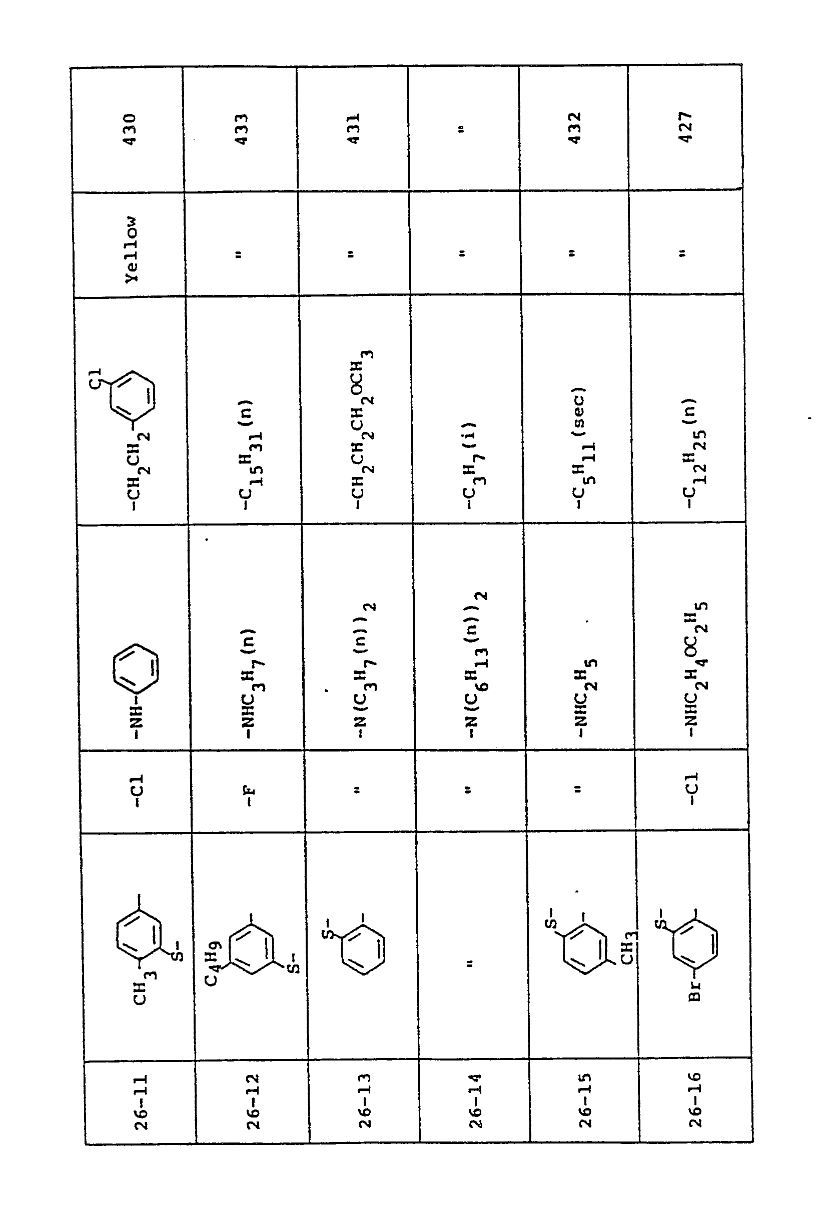

### Example 27

A dyestuff dispersion was prepared and subsequently a printing color paste was prepared according to the procedures described in Example 1 except that 15 g of the monoazo dyestuff used in Example 1 was replaced by 15 g of a disazo dyestuff of the following structural formula:

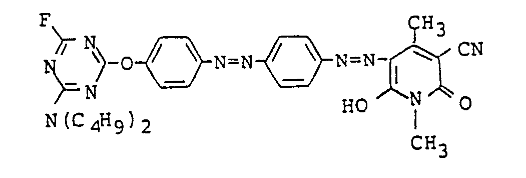

Thereafter, using the printing color paste, a polyester/cotton (mixing ratio: 65/35) mixed spun cloth was dyed according to the procedures described in Example 1 to obtain an orange dyed product having excellent light fastness (grade 5). The washing fastness of said dyed product was also excellent (grade 5).

The dyestuff used in this example was produced by the following procedures:
2.13 g of 4-amino-4'-hydroxyazobenzene was dissolved in 50 ml of a 50% (by volume) acetic acid aqueous solution and, after adding 3 ml of hydrochloric acid, cooled to 5°C or below. Thereafter, 0.7 g of sodium nitrite was added. At that time, the temperature was maintained at 5°C or below. The resulting diazonium salt solution was added to an aqueous solution of 1.64 g of 1-methyl-3-cyano-4-methyl-6-hydroxypyrid-2-one at 5°C or below. The separated disazo compound was filtered off, washed with water and dried. 3.1 g of the obtained disazo compound, 2.15 g of 2,4-difluoro-6-(di-n-butylamino)triazine, 1.0 g of triethylamine and 0.6 g of potassium carbonate anhydride were added to 50 ml of acetone, and heated at reflux for 3 hours to effect a condensation reaction. The obtained reaction mixture was added dropwise to 1000 ml of ice water, the separated precipitates were filtered off, washed with water and dried at room temperature to obtain 4.16 g (orange powder, condensation yield 85%) of the dyestuff of the above structural formula.

The λₘₐₓ (acetone) of this dyestuff was 460 nm.

### Example 28

A dyestuff dispersion was prepared and subsequently a padding bath (pH 8.0) was prepared according to the procedures described in Example 2 except that 16 g of the monoazo dyestuff used in Example 2 was replaced by 16 g of the disazo dyestuff of the following structural formula:

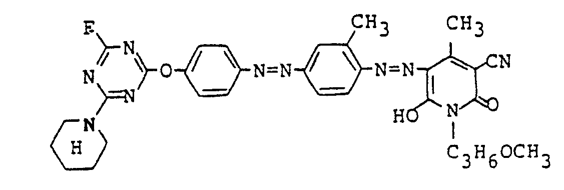

Thereafter, using the obtained padding bath, a polyester/cotton (mixing ratio: 65/35) mixed spun cloth was dyed according to the procedures described in Example 2 to obtain an orange dyed product having excellent light fastness (grade 5). The washing fastness of said dyed product was also excellent (grade 5).

The dyestuff used in this example was synthesized by diazotizing 3'-methyl-4'-amino-4-hydroxyazobenzene, coupling it with 1-(y-methoxypropyl)-3-cyano-4-methyl-6-hydroxypyrid-2-one and reacting the resulting dye with 2,4-difluroro-6-piperidinotriazine according to the procedures described in Example 27.

The Àₘₐₓ (acetone) of this dyestuff was 463 nm.

### Example 29

A dyestuff dispersion was prepared and subsequently a dyeing bath (pH 8.0) was prepared according to the procedures described in Example 3 except that 10 g of the monoazo dyestuff used in Example 3 was replaced by 10 g of a disazo dyestuff of the following structural formula:

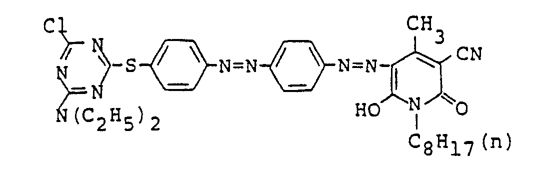

Thereafter, using the obtained dyeing bath, nylon taffeta was dyed according to the procedures described in Example 3 to obtain an orange dyed product having excellent light fastness (grade 5). The dry cleaning fastness of said dyed product was also excellent (grade 5).

The dyestuff used in this example was synthesized according to the procedures described in Example 27.

The λₘₐₓ (acetone) of this dyestuff was 461 nm.

### Example 30

A dyestuff dispersion was prepared and subsequently a printing color paste (pH 8.0) was prepared according to the procedures described in Example 4 except that 15 g of the monoazo dyestuff used in Example 4 was replaced by 15 g of a disazo dyestuff of the following structural formula:

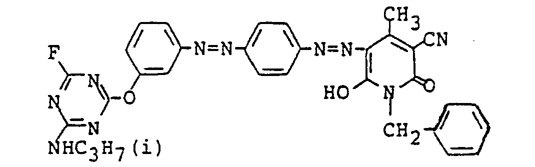

Thereafter, using the obtained printing color paste, mercerized cotton broad (40 counts) was dyed according to the procedures described in Example 4 to obtain an orange dyed product having excellent light fastness (grade 5). The washing fastness of said dyed product was also excellent (grade 4-5).

The dyestuff used in this example was synthesized according to the procedures described in Example 27.

The λₘₐₓ (acetone) of this dyestuff was 457 nm.

### Example 31

A dyestuff dispersion was prepared and subsequently a printing color paste (pH 8.0) was prepared according to the procedures described in Example 5 except that 10 g of the monoazo dyestuff used in _{"}Example 5 was replaced by 10 g of a disazo dyestuff of the following structural formula:

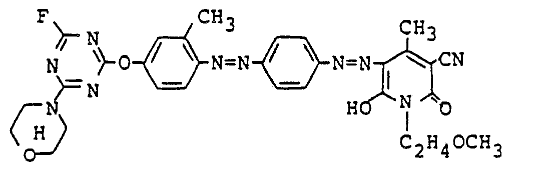

Thereafter, using the obtained printing color paste, a polyester/wool (mixing ratio: 80/20) mixed spun cloth was dyed according to the procedures described in Example 5 to obtain a uniformly dyed orange dyed product having excellent light fastness. The dry cleaning fastness of said dyed product was also excellent (grade 5).

The dyestuff used in this example was synthesized according to the procedures described in Example 27.

The Àmax (acetone) of this dyestuff was 460 nm.

### Example 32

A dyestuff dispersion was prepared and subsequently a padding bath was prepared according to the procedures described in Example 6 except that 16 g of the monoazo dyestuff used in Example 6 was replaced by 16 g of a disazo dyestuff of the following structural formula:

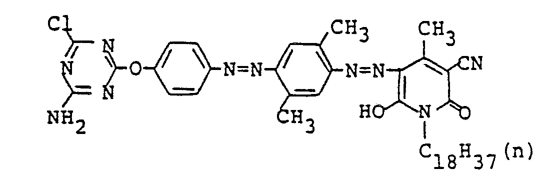

Thereafter, using the obtained padding bath, a polyester fiber cloth was dyed to obtain an orange dyed product.

The λₘₐₓ (acetone) of this dyestuff was 466 nm.

### Example 33

Polyester/cotton (65/35) mixed spun cloths were print-dyed using the disazo dyestuffs set forth in Tables 10-12 according to the procedures described in Example 1. The obtained dyed products had particularly excellent light fastness, and also had excellent wet color fastness without any stain in the white background.

Said disazo dyestuffs were synthesized according to the procedures described in Example 27.

The hue of each dyed product and the λₘₐₓ (acetone) of each dyestuff are shown in Tables 10-12.

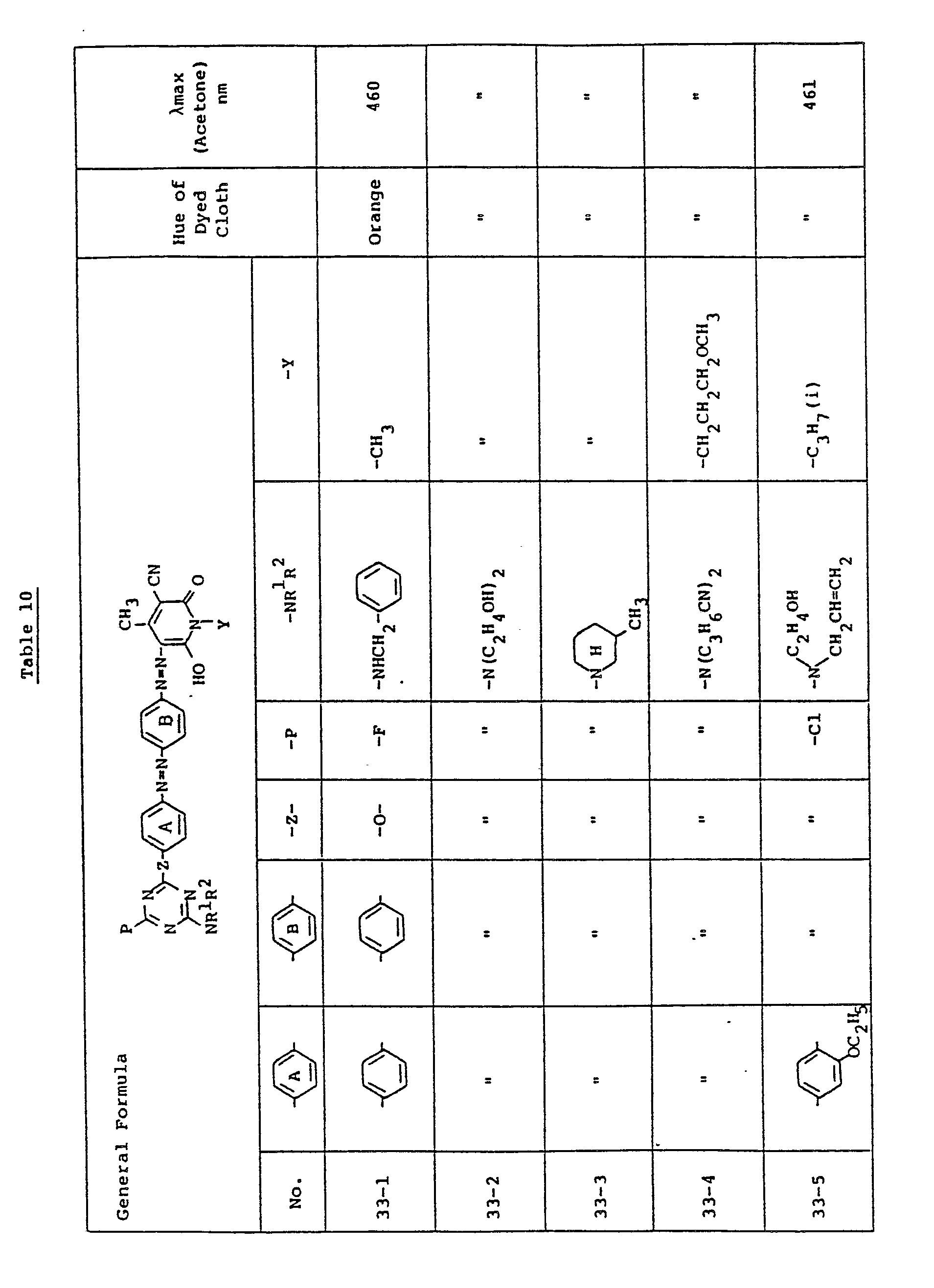

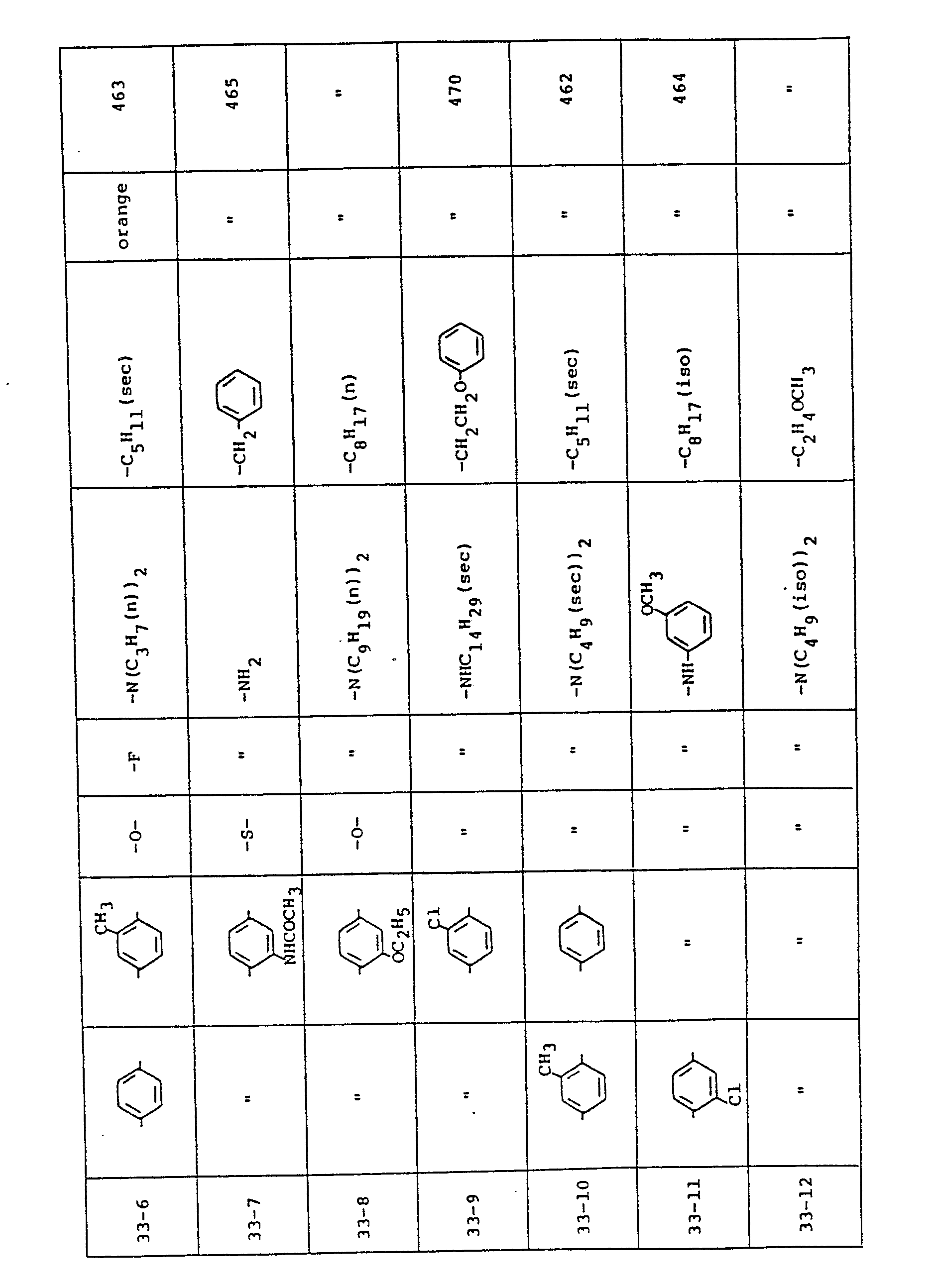

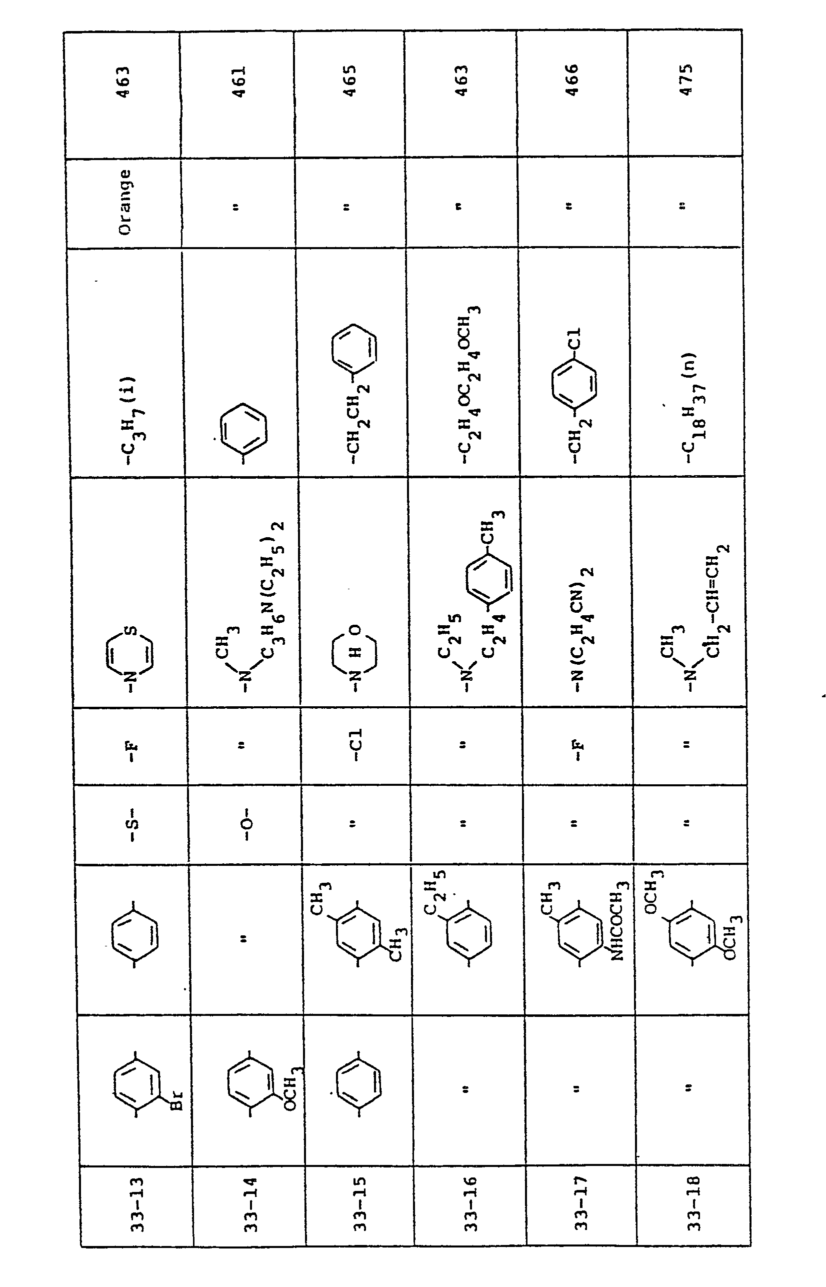

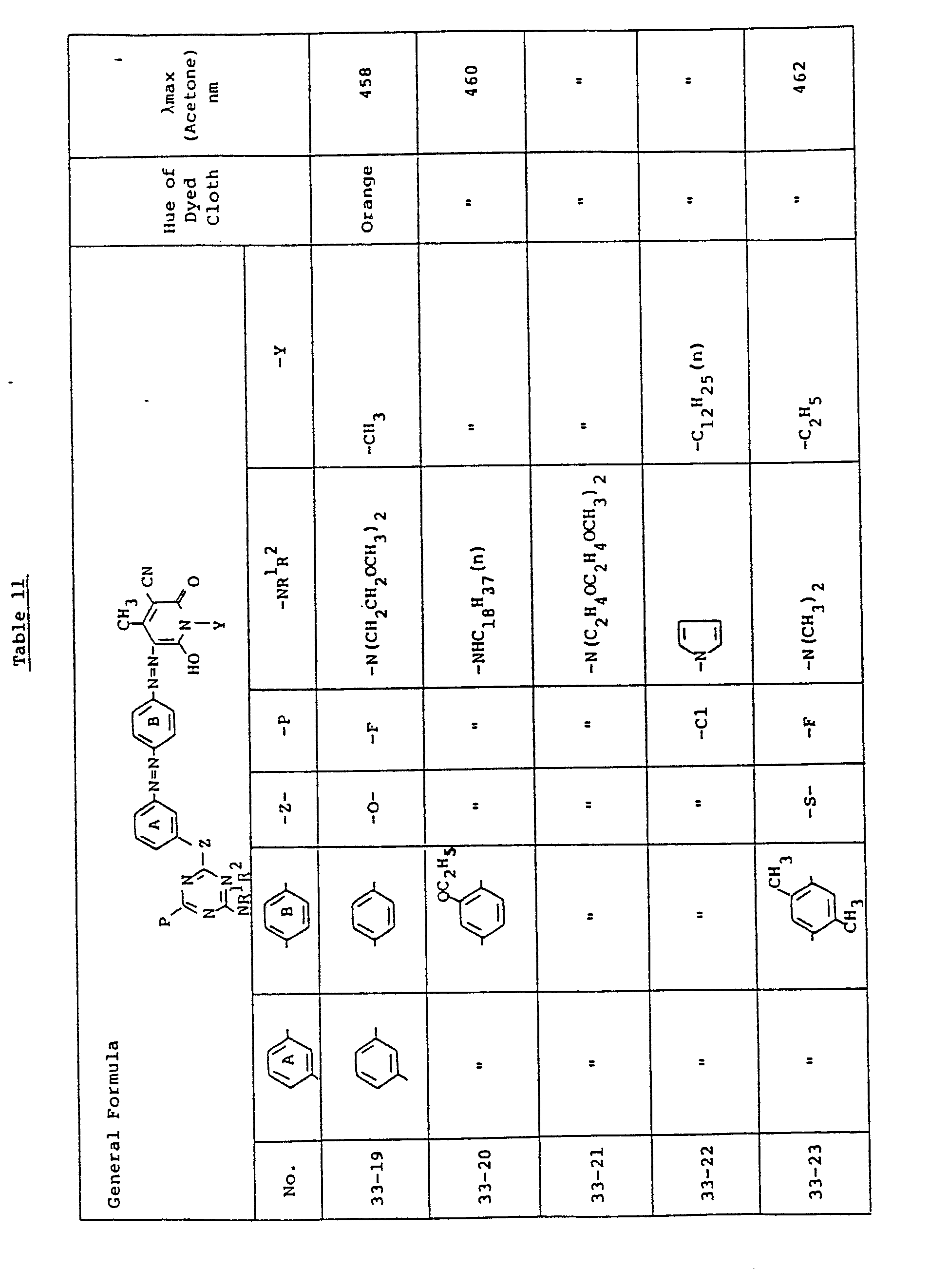

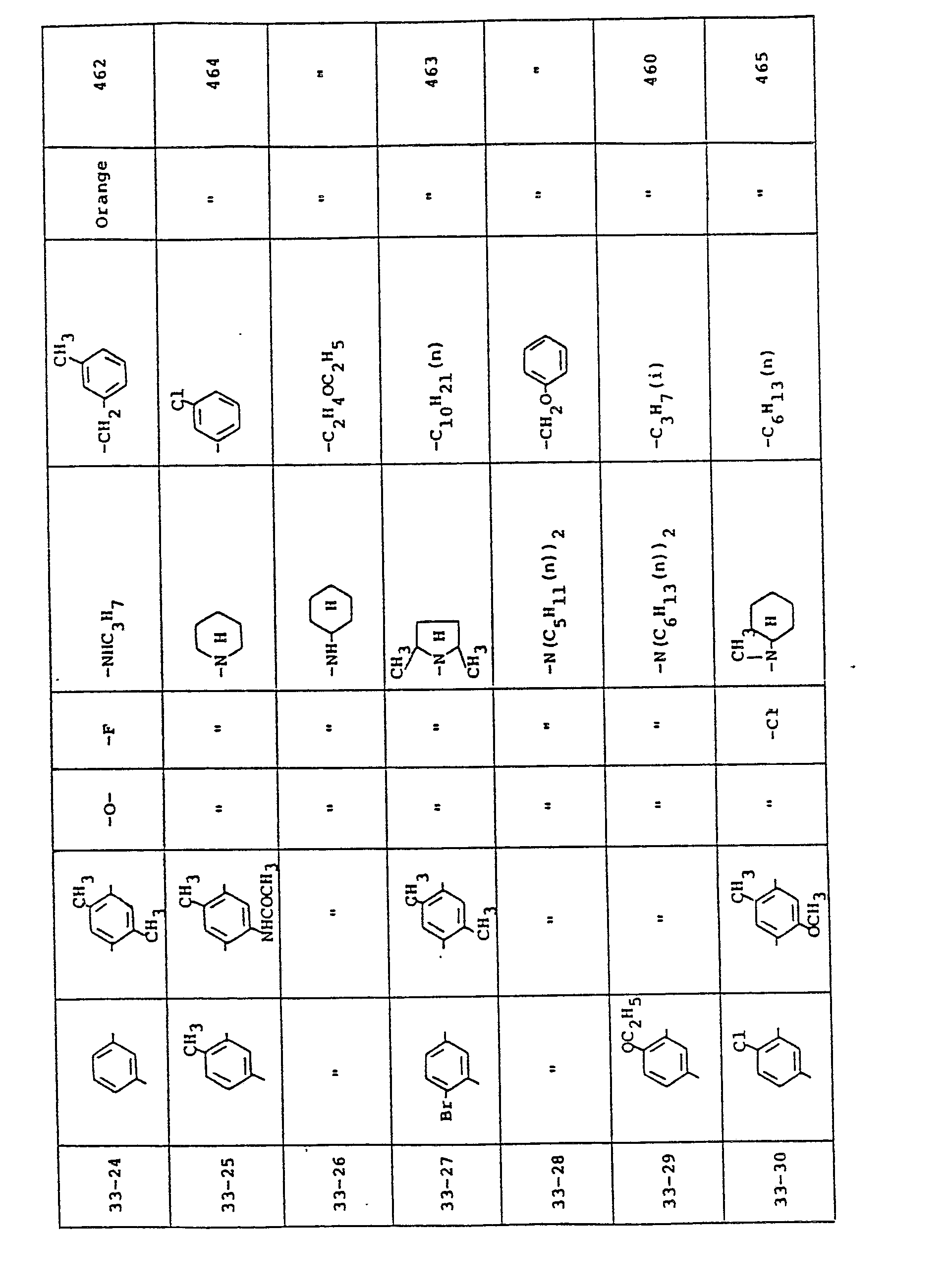

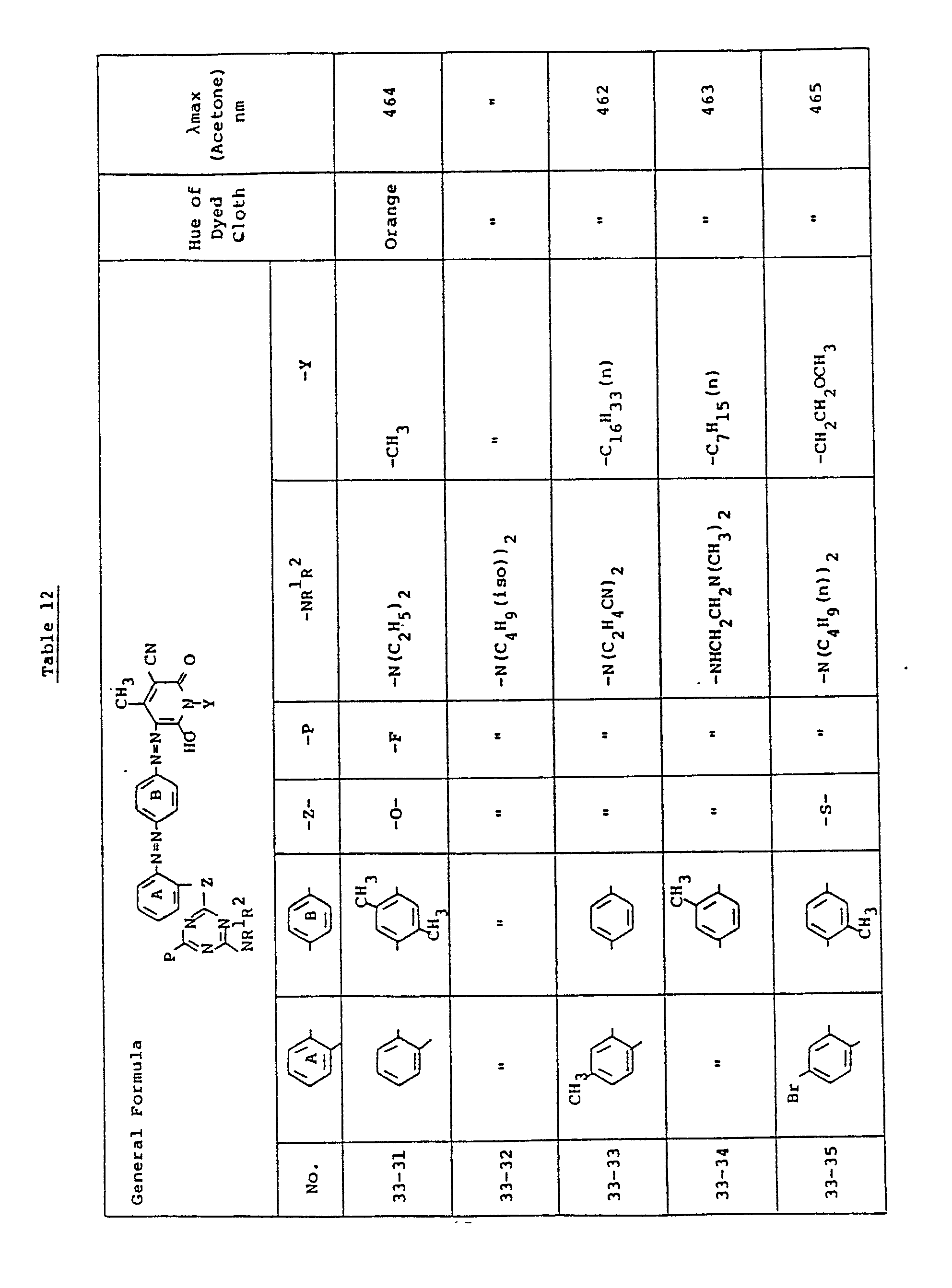

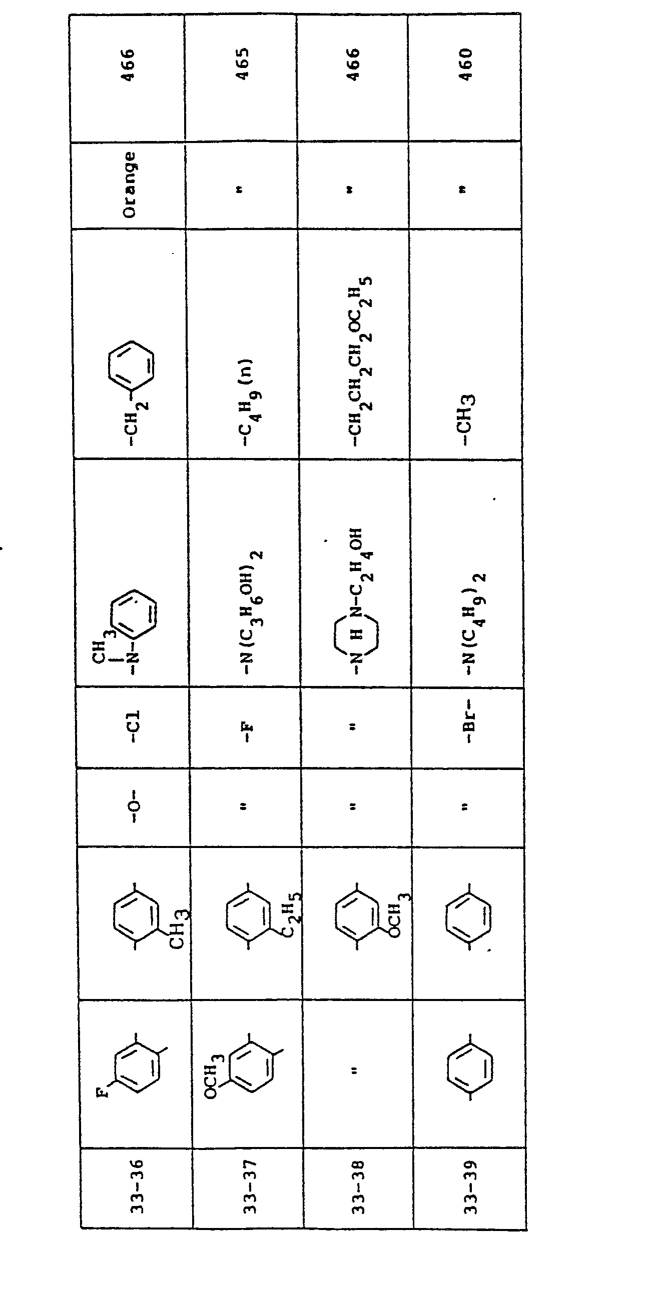

### Example 34

'A dyestuff dispersion was prepared and subsequently a printing color paste (pH 9.0) was prepared according to the procedures described in Example 1 except that 15 g of the monoazo dyestuff used in Example 5 was replaced by 15 g of the disazo dyestuff of the following structural formula: 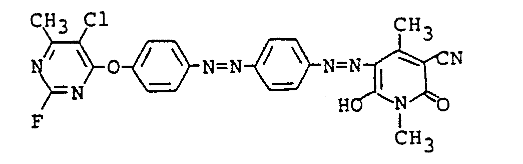 Thereafter, using the obtained printing color paste, a polyester/cotton (mixing ratio: 65/35) mixed spun cloth was dyed according to the procedures described in Example 1 to obtain an orange dyed product having excellent light fastness. The wet color fastness of said dyed product was also excellent. The dyestuff used in this example was synthesized by the following procedures:

3.88 g of a disazo compound of the following structural formula: 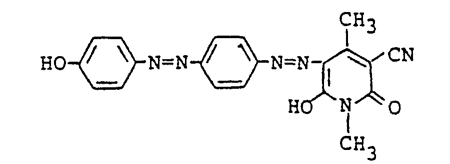 was dissolved in 50 ml of N-methyl-2-pyrrolidone and, after adding 2.0 g of 2,4-difluoro-5-chloro-6-methylpyrimidine as a heterocyclic compound, stirred at 40°C for 2 hours to effect a condensation reaction. The resulting reaction mixture was added dropwise to 500 mi of water, the separated precipitates were filtered off, washed with water and dried in a reduced pressure drier at room temperature to obtain 5.1 g (yield 96%) of a powder of the dyestuff of the above structural formula: the λₘₐₓ (acetone) of this dyestuff was 460 nm.

### Example 35

A dyestuff dispersion was prepared and subsequently a padding bath was prepared according to the procedures described in Example 2 except that 16 g of the monoazo dyestuff used in Example 2 was replaced by 16 g of a disazo dyestuff of the following structural formula: 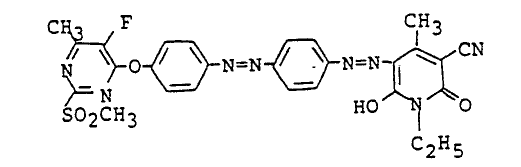 Thereafter, using the obtained padding bath, a polyester/cotton (mixing ratio: 65/35) mixed spun cloth was dyed to obtain an orange dyed product having excellent light fastness. The wet color fastness of said dyed product was also excellent..

The dyestuff used in this example was produced by reacting a disazo compound of the following formula: 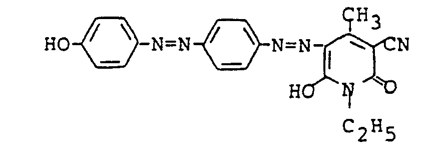 with 2-methylsulfonyl-4,5-difluoro-6-methylpyrimidine as a heterocyclic compound using triethylamine and potassium carbonate as acid-binding agents in acetone at 50°C for 3 hours. The λₘₐₓ (acetone) of this product was 461 nm.

### Example 36

A dyestuff dispersion was prepared and subsequently a printing color paste (pH 9.0) was prepared according to the procedures described in Example 4 except that 15 g of the monoazo dyestuff used in Example 4 was replaced by 15 g of a disazo dyestuff of the following structural formula: 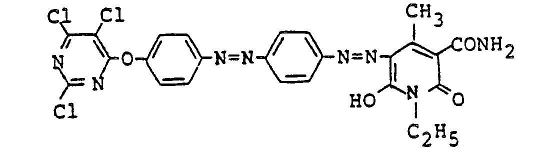 Thereafter, using the obtained printing color paste, mercerized cotton broad (40 counts) was dyed to obtain a yellowish orange dyed product having excellent light fastness. The wet color fastness of said dyed product was also excellent.

The dyestuff used in this example was produced by reacting a disazo compound of the following structural formula: 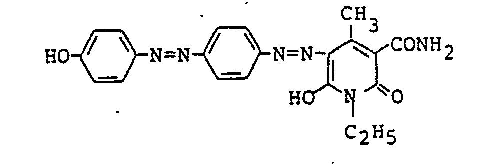 with 2,4,5,6-tetrachloropyridine (heterocyclic compound) using triethylamine as an acid-binding agent in acetone at reflux for 5 hours. The λₘₐₓ (acetone) of this product was 450 nm.

### Example 37

A dyestuff dispersion was prepared and subsequently a dyeing bath was prepared according to the procedures described in Example 3 except that 10 g of the monazo dyestuff used in Example 3 was replaced by 10 g of a disazo dyestuff of the following structural formula: 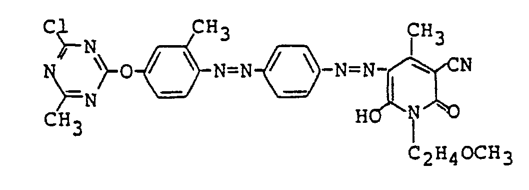 Thereafter, using the obtained dyeing bath, nylon taffeta was dyed according to the procedures described in Example 3 to obtain a reddish orange dyed product having excellent light fastness. The wet color fastness of said dyed product was also excellent.

The dyestuff used in this example was produced by reacting a disazo compound of the following formula: 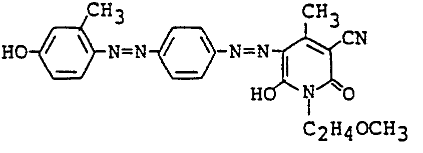 with 2,4-dichloro-6-methyl-S-triazine (heterocyclic compound) using triethylamine as an acid-binding agent in methyl ethyl ketone at 60°C for 2 hours. The Àₘₐₓ (acetone) of this product was 461 nm.

### Example 38

A dyestuff dispersion was prepared and subsequently a printing color paste (pH 8.0) was prepared according to the procedures described in Example 5 except that 10 g of the monoazo dyestuff used in Example 5 was replaced by 10 g of a disazo dyestuff of the following structural formula: 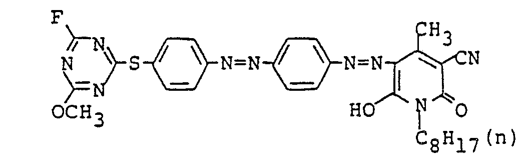 Thereafter, using the obtained printing color paste, a polyester/wool (mixing ratio: 80/20) mixed spun cloth was dyed according to the procedures described in Example 5 to obtain a uniform orange dyed product having excellent light fastness. The wet color fastness of said dyed product was also excellent.

The dyestuff used in this example was obtained by reacting a disazo dyestuff compound of the following formula: 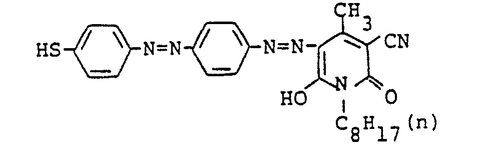 with 2,4-difluoro-6-methoxy-S-triazine using triethylamine as an acid-binding agent in acetone at reflux for 4 hours to effect condensation. The Àₘₐₓ (acetone) of this product was 461 nm.

### Example 39

Using the dyestuff dispersion of the disazo dyestuff described in Example 34, a padding bath (pH 8.0) having the following composition:

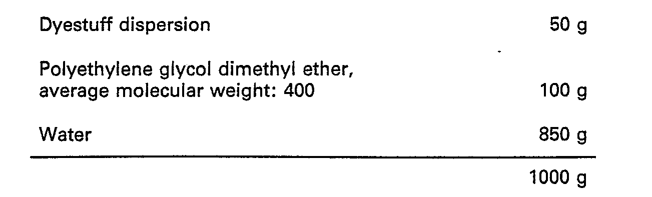

was prepared. A nylon/rayon (mixing ratio: 50/50) mixed spun cloth was impregnated, squeezed to a squeezing rate of 60%, then provisionally dried at 100°C for 2 minutes, and heat dried at 190°C for 90 seconds to fix. This was then subjected to washing treatment according to the procedures described in Example 1 to obtain a uniform orange dyed product having excellent light fastness. The wet color fastness of said dyed product was also excellent.

### Example 40

The reactive pyridone disazo dyestuffs of this invention set forth in Table 13 were synthesized according to the procedures described in Example 34, and using these dyestuffs, polyester/cotton (mixing ratio: 65/35) mixed spun cloths were dyed according to the procedures described in Example 1.

The obtained dyed products had particularly excellent light fastness, and also had excellent wet color fastness without any stain in the white background.

The hue of each dyed product and the λₘₐₓ (acetone) of each dyestuff are set forth in Table 13.

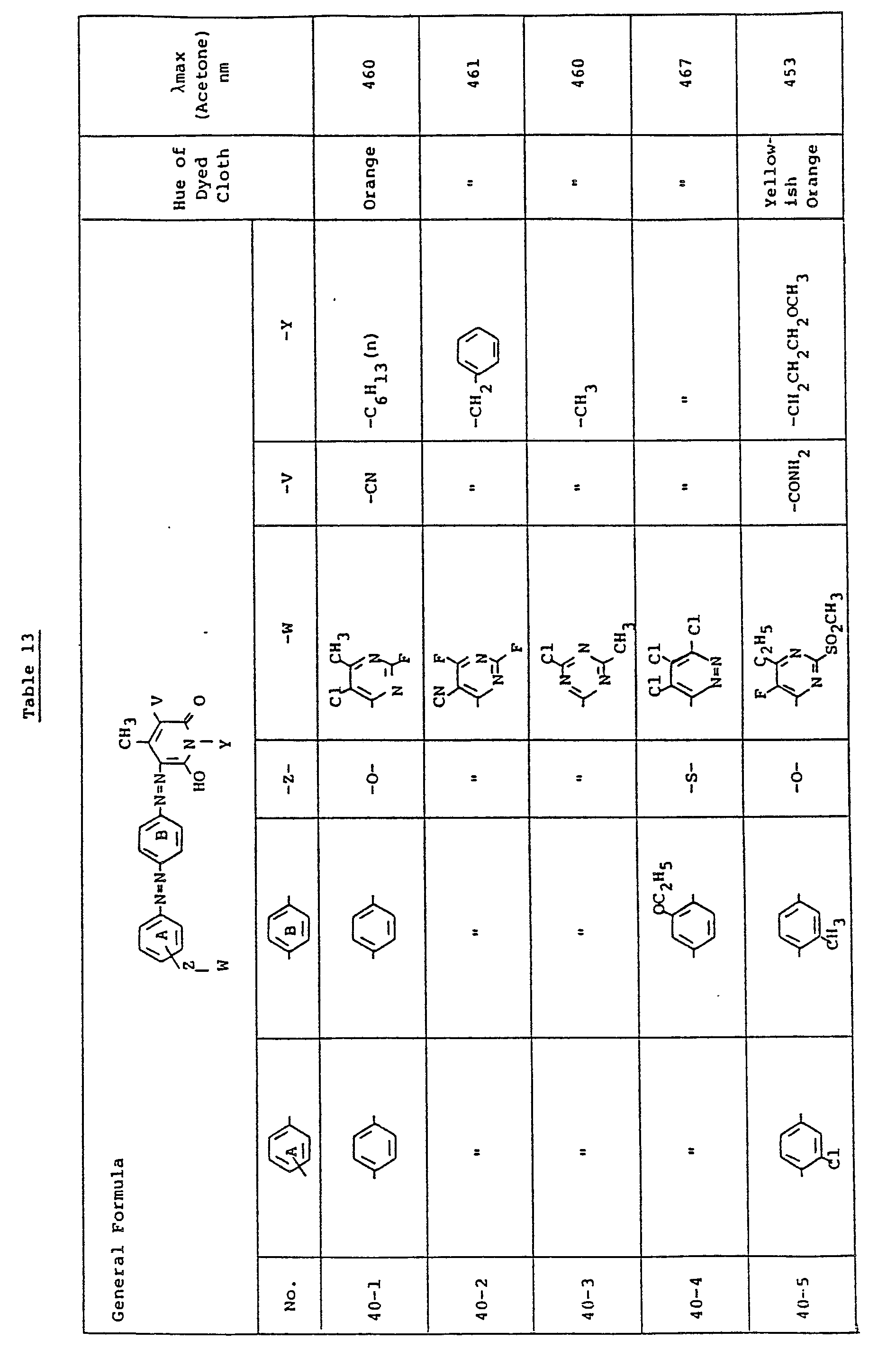

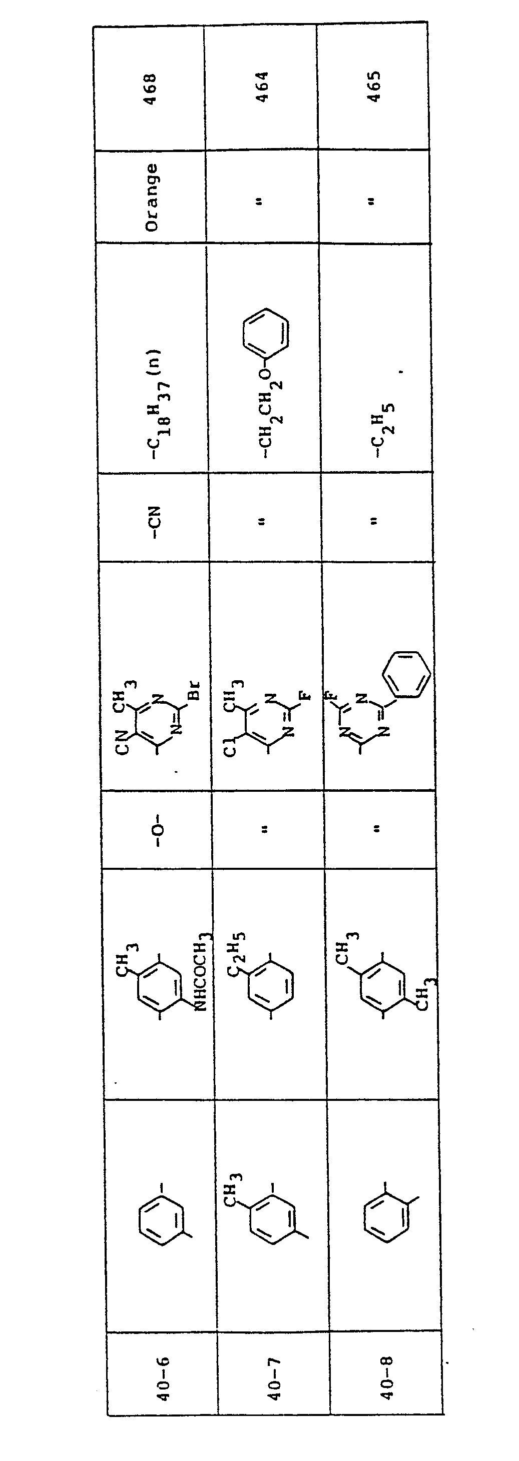

### Example 41

The reactive pyridone disazo dyestuffs of this invention set forth in Table 14 were synthesized according to the procedures described in Example 34, and using these dyestuffs, polyester/cotton (65/35) mixed spun cloths were dyed according to the procedures described in Example 2.

The obtained dyed products had excellent light fastness and also excellent wet color fastness.

The hue of each dyed product and the λₘₐₓ (acetone) of each dyestuff are shown in Table 14.

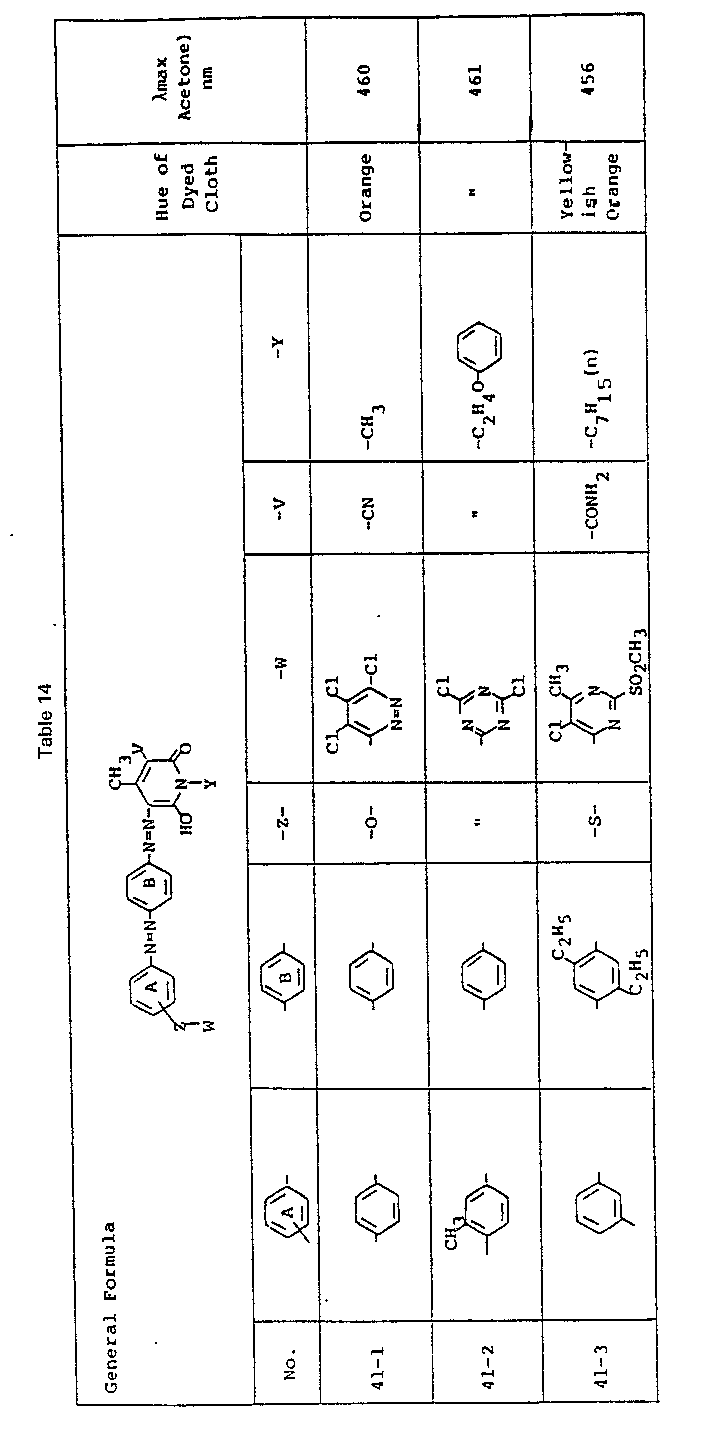

### Example 42

The reactive pyridone disazo dyestuffs of this invention set forth in Table 15 were synthesized according to the procedures described in Example 34, and using these dyestuffs, cotton was print-dyed according to the procedures described in Example 4.

The obtained dyed products had particularly excellent light fastness. Said dyed products also had excellent wet color fastness without any stain in the white background.

The hue of each dyed product and the λₘₐₓ (acetone) of each dyestuff are shown in Table 15.

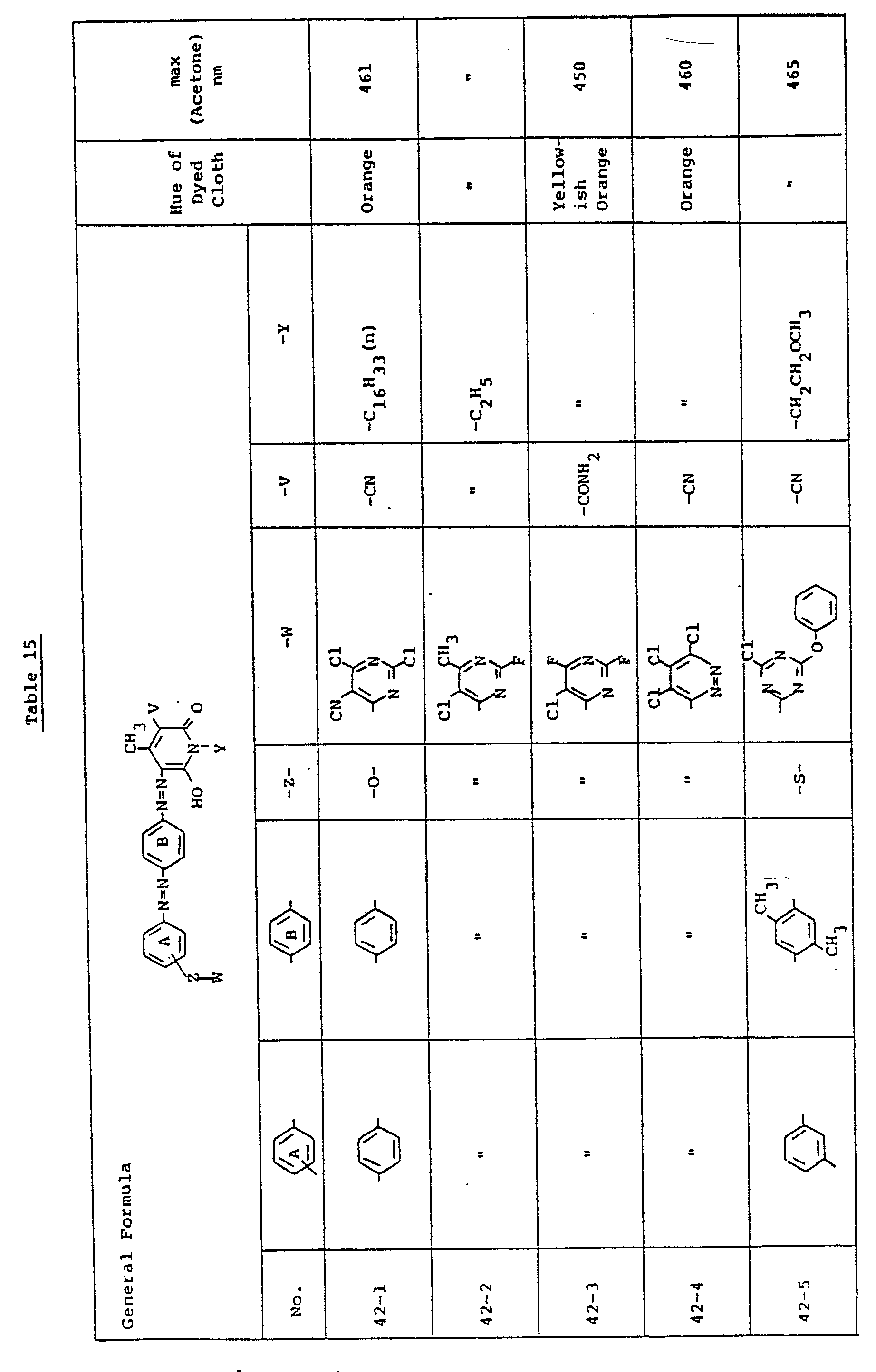

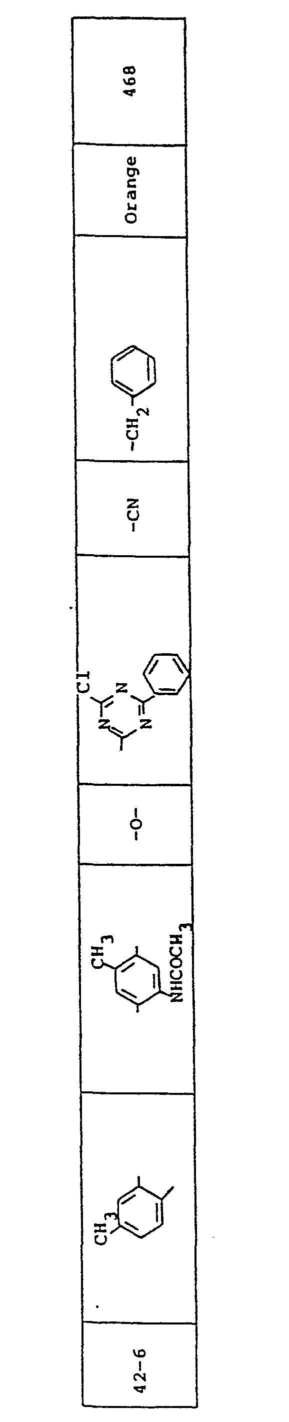

### Example 43

The reactive pyridone disazo dyestuffs of this invention set forth in Table 16 were synthesized according to the procedures described in Example 34, and using these dyestuffs, nylon taffeta was dyed according to the procedures described in Example 3.

The obtained dyed products had particularly excellent light fastness, and also had excellent wet color fastness.

The hue of each dyed product and the λₘₐₓ (acetone) of each dyestuff are shown in Table 16.

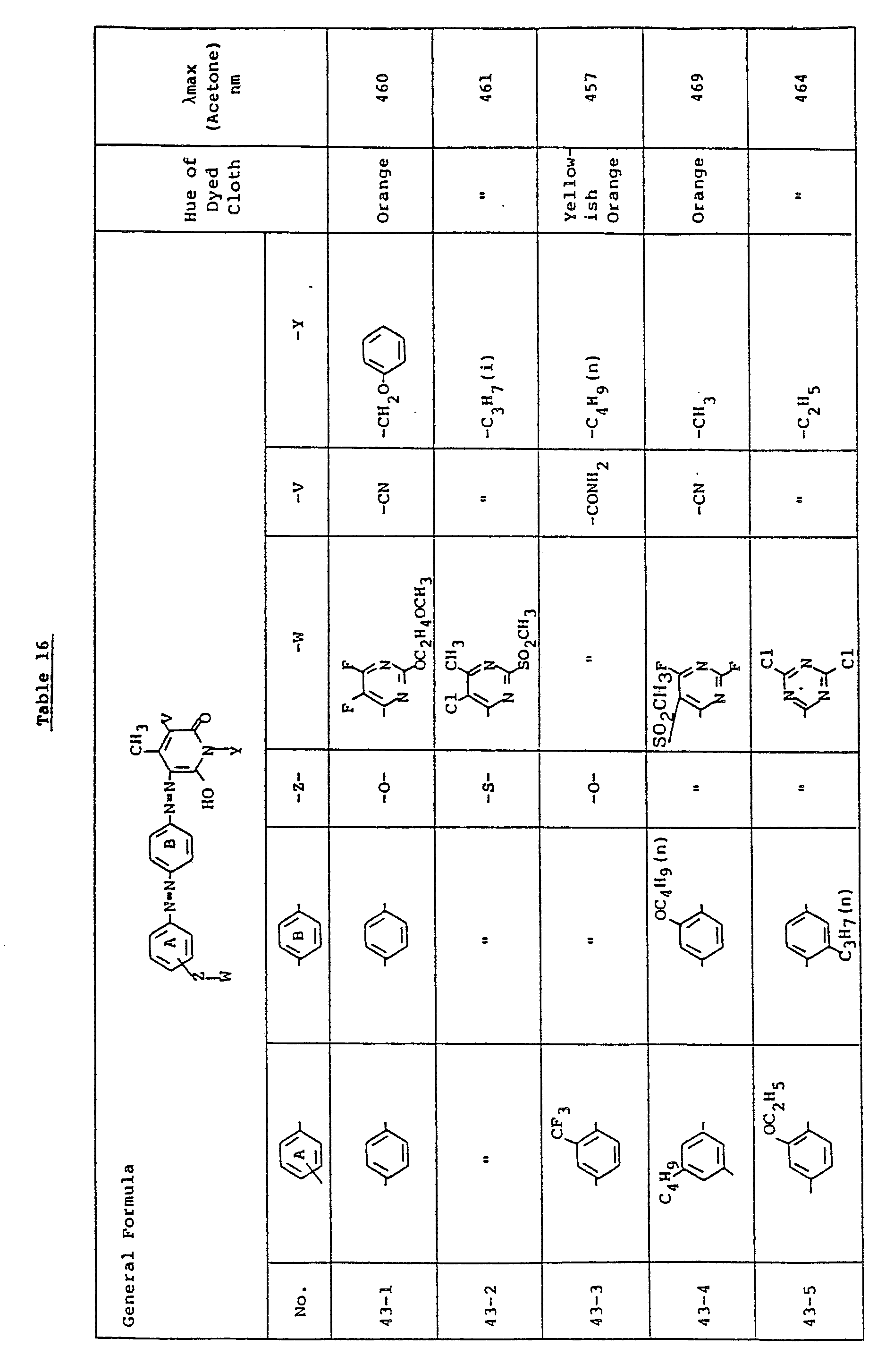

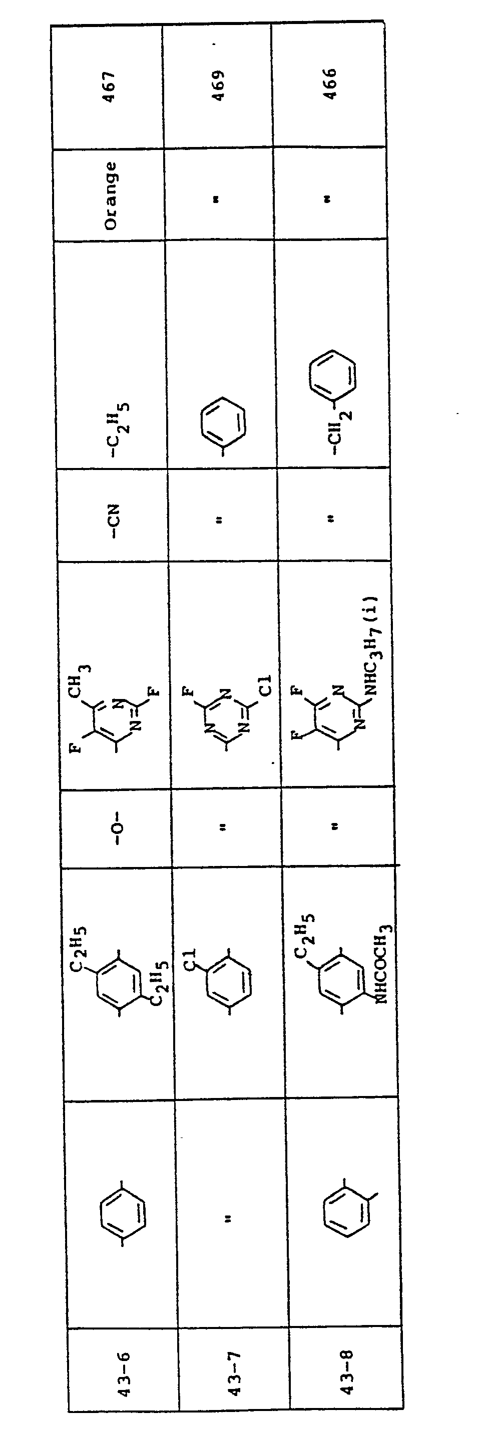

### Example 44

The reactive pyridone disazo dyestuffs of this invention set forth in Table 17 were synthesized according to the procedures described in Example 34, and using these dyestuffs, polyester/wool (80/20) mixed spun cloths were print-dyed.

The obtained dyed products had particularly excellent light fastness, and also had excellent wet color fastness.

The hue of each dyed product and the λₘₐₓ (acetone) of each dyestuff are shown in Table 17.

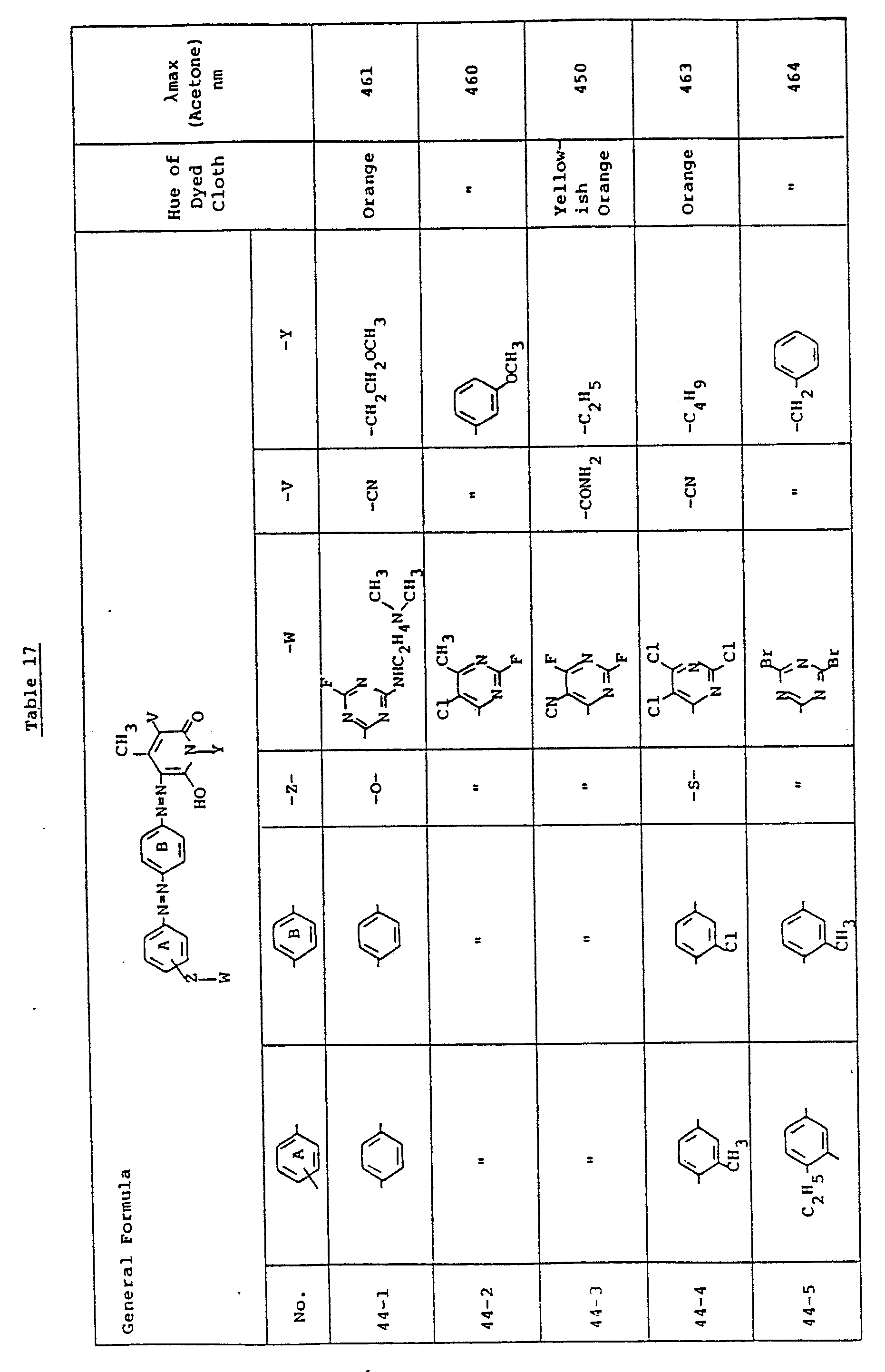

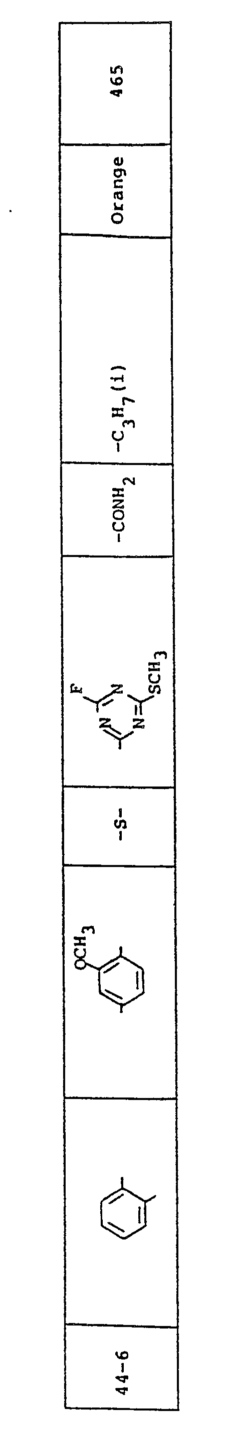

### Example 45

The reactive pyridone disazo dyestuffs of this invention set forth in Table 18 were synthesized according to the procedures described in Example 34, and using these dyestuffs, nylon/rayon (mixing ratio: 50/50) mixed spun cloths were pad-dyed according to the procedures described in Example 39.

The obtained dyed products had particularly excellent light fastness, and also had excellent wet color fastness.

The results are shown in Table 18.

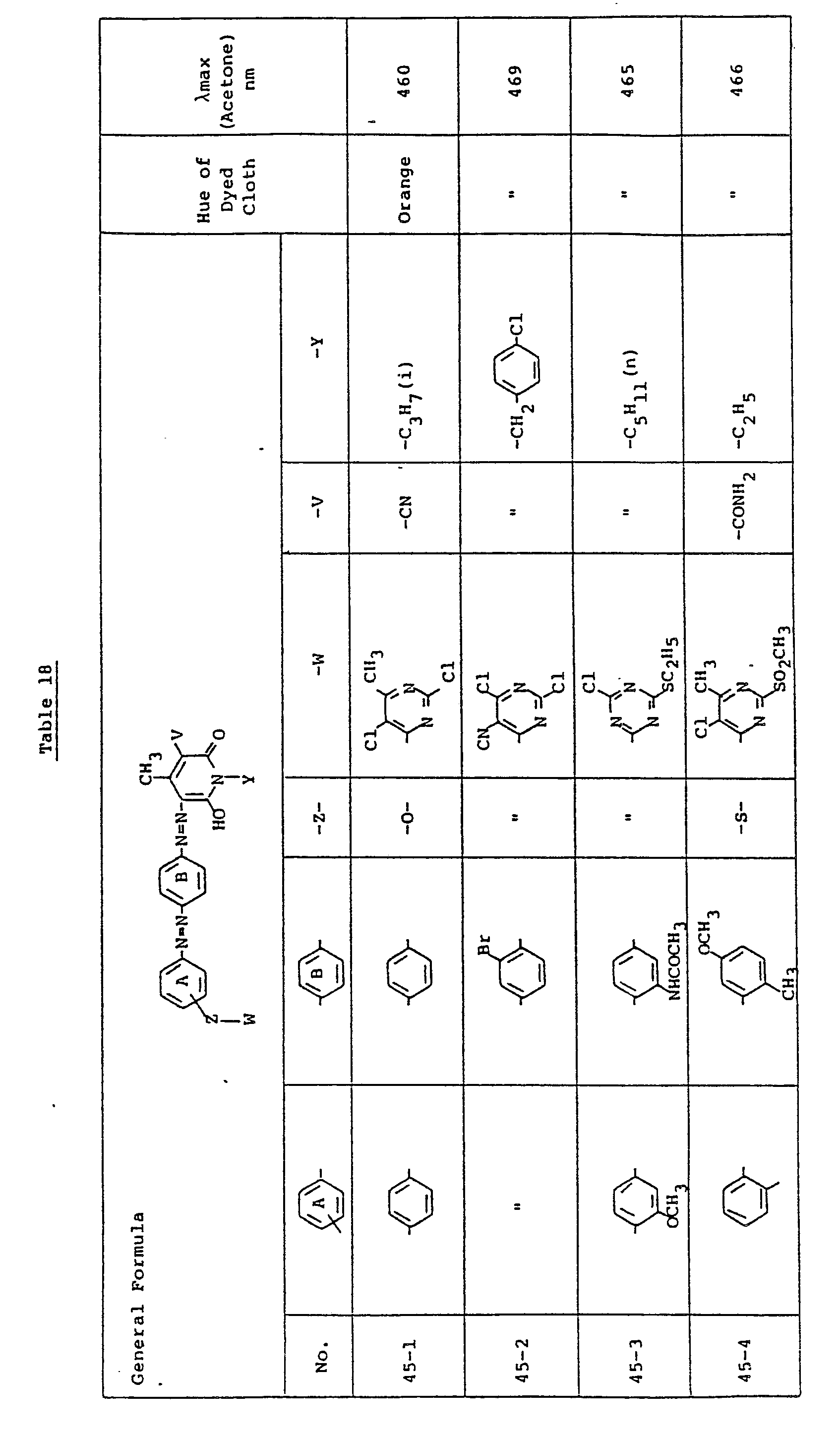

## Claims

1. A reactive pyridone azo dyestuff of the general formula [I]: 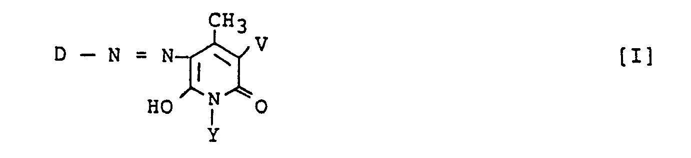 wherein D represents 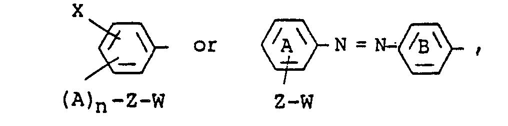 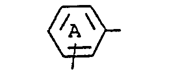 represents phenylene optionally substituted by C₁-C₁₀ alkyl, C₁-C₁₀ alkoxy, trifluoromethyl or halogen, 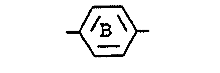 represents phenylene optionally substituted by C₁-C₁₀ alkyl, C₁-C₁₀ alkoxy, halogen or acetylamino,
-A- represents -CH₂-, -C₂H₄ , -OC₂H₄-, 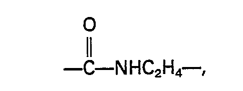
-SO₂NHC₂H₄- or -SO₂C₂H₄-,
-X represents hydrogen, C₁-C₁₀ alkyl, C₁-C₁₀ alkoxy, nitro, trifluoromethyl or halogen,
-Y represents C₁-C₁₈ alkyl, aryl or aralkyl optionally substituted by C₁-C₁₀ alkoxy or phenoxy,
-Z- represents a connecting group of-O- or -S-,
-V represents―CN or-CONH2,
-W represents a 6-membered nitrogen-containing heterocyclic ring having at least one active halogen atom, and
n represents 0 or 1.

2. The reactive pyridone azo dyestuff according to Claim 1 which is of the general formula [II]: 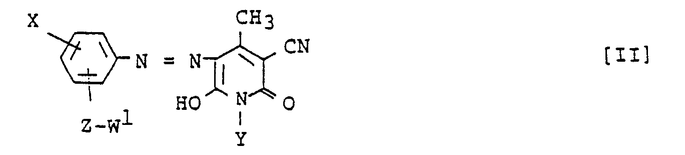 wherein
-W¹ represents 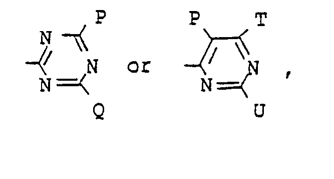 wherein
-P represents fluorine, chlorine or bromine, Q represents -P, 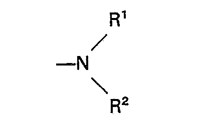 wherein -R¹ and -R² each represents hydrogen or alkyl, alkenyl, cyclohexyl, aryl or aralkyl optionally substituted by cyano, hydroxy, lower alkoxy or dialkylamino, or―NR¹R² represents a 5- or 6- membered nitrogen-containing heterocyclic ring formed by combining ―R¹ and -R², the total carbon atoms present in ―R¹ and -R² being up to 18, methyl, ethyl, phenyl, ―O―R³ or -S-R³ wherein R³ represents methyl, ethyl, ethoxyethoxy or phenyl,
―T represents -P or -CH₃,
-U represents -P or ―SO₂CH₃, and
-X, -Y and -Z- are as defined above.

3. The reactive pyridone azo dyestuff according to Claim 1 which is of the general formula [III]: 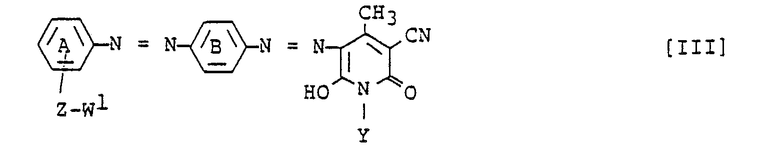 wherein 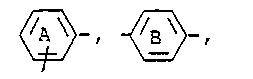 -Y, -Z- and ―W¹ are as defined above.

4. The reactive pyridone azo dyestuff according to Claim 1 which is of the general formula [IV]: 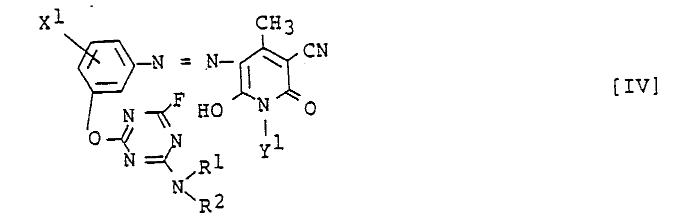 wherein
―Y¹ represents alkyl optionally substituted by lower alkoxy,―X¹ represents hydrogen or C₁-C₁₀ alkyl, and -R¹ and -R² are as defined above.

5. The reactive pyridone azo dyestuff according to Claim 1 which is of the general formula [V]: 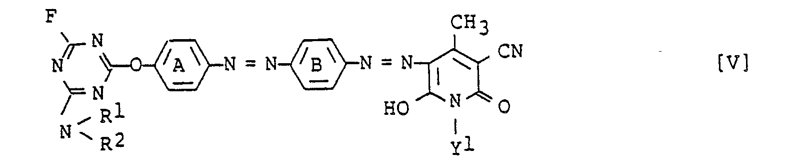 wherein 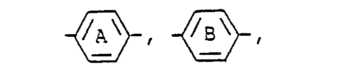 -Y¹, -R¹ and -R² are as defined above.

6. The reactive pyridone azo dyestuff according to Claim 1 which is of the general formula [VI]: 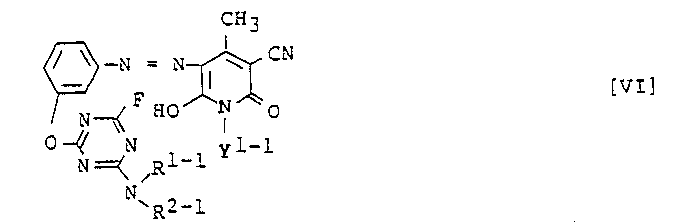 wherein -R¹⁻¹ and -R²⁻¹ each represents alkyl of 2-4 carbon atoms and -Y¹⁻¹ represents alkyl of 6-18 carbon atoms.

7. The reactive pyridone azo dyestuff according to Claim 1 which is of the general formula [VII]: 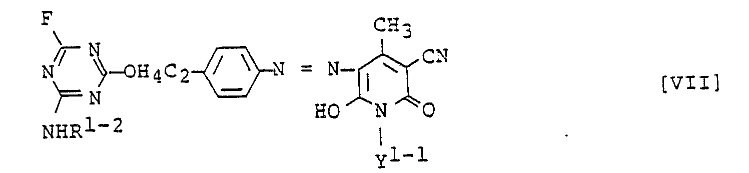 wherein -R¹⁻² represents alkyl of 2-4 carbon atoms and ⁻Y¹⁻¹ is as defined above.

8. The reactive pyridone azo dyestuff according to Claim 1 which is of the general formula [VIII]: 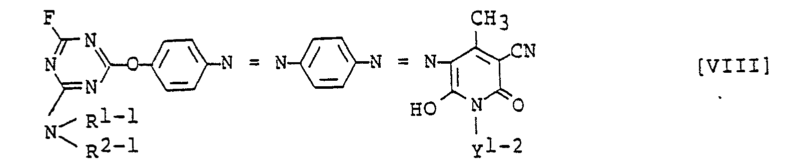 wherein -Y¹⁻² represents alkyl of 1-8 carbon atoms and -R¹⁻¹ and -R²⁻¹ are as defined above.

9. The use of the reactive pyridone azo dyestuffs according to claims 1 to 8 for dyeing cellulose fibers, wool fibers, synthetic polyamide fibers, and mixed fibers comprising cellulose fibers and polyester fibers and mixed fibers comprising wool fibers and polyester fibers or polyamide fibers and polyester fibers in yellow to reddish orange colors having excellent light fastness.

## Patentansprüche

1. Reaktiver Pyridon-Azofarbstoff der allgemeinen Formel I 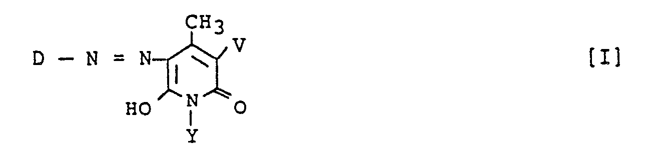 in der D einen der Reste 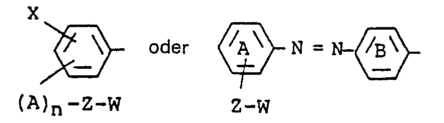 bedeutet, 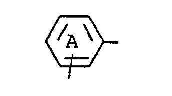 eine gegebenenfalls durch C₁-C₁ₒ-Alkyl, C₁-C₁₀-Alkoxy, Trifluormethyl oder Halogen substituierte Phenylengruppe darstellt, 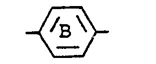 eine gegebenenfalls durch C₁-C₁₀-Alkyl, C₁-C₁₀-Alkoxy, Halogen oder Acetylamino substituierte Phenylengruppe bedeutet,
-A- eine der Gruppen -CH₂-, -C₂H₄-, -OC₂H₄-, 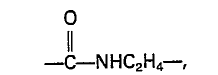
-SO₂NHC₂H₄- oder -SO₂C₂H₄- darstellt,
-X Wasserstoff, C₁-C₁₀-Alkyl, C₁-C₁₀-Alkoxy, Nitro, Trifluormethyl oder Halogen bedeutet,
Y C₁-C₁₈-Alkyl, Aryl oder Aralkyl, gegebenenfalls substituiert durch C₁-C₁₀-Alkoxy oder Phenoxy darstellt,
-Z- eine der Brückengruppen -0- oder -S- bedeutet,
-V eine der Gruppen -CN oder -CONH₂ bedeutet,
-W einen 6-gliedrigen, stickstoffhaltigen heterocyclischen Ring mit mindestens einem aktiven Halogenatom darstellt, und n 0 oder 1 ist.

2. Reaktiver Pyridon-Azofarbstoff nach Anspruch 1 der allgemeinen Formel II 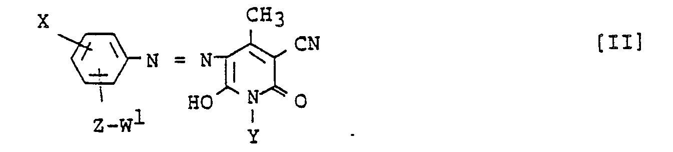 in der ―W¹ einen der Reste 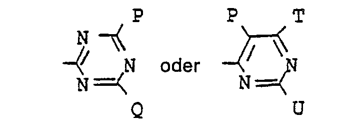 bedeutet, wobei -P Fluor, Chlor oder Brom darstellt,
-Q-P, 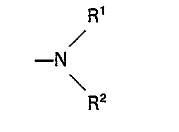 wobei -R¹ und -R² jeweils Wasserstoff oder Alkyl, Alkenyl, Cyclohexyl, Aryl oder Aralkyl, gegebenenfalls substituiert durch Cyan, Hydroxy, Niederalkoxy oder Dialkylamino, bedeutet, oder-NR¹R² einen 5- oder 6- gliedrigen, stickstoffhaltigen heterocyclischen Ring darstellen, der durch Vereinigung von -R¹ und -R² entsteht, wobei die Gesamtzahl der in -R¹ und -R² vorhandenen Kohlenstoffatome bis zu 18 reicht, Methyl, Äthyl, Phenyl, -O-R³ oder ―S―R³, wobei R³ Methyl, Äthyl, Äthoxyäthoxy oder Phenyl darstellt, bedeutet,
-T -P oder -CH₃ darstellt,
-U -P oder ―SO₂CH₃ darstellt, und
―X, -Y und -Z- wie vorstehend definiert sind.

3. Reaktiver Pyridon-Azofarbstoff nach Anspruch 1 der allgemeinen Formel III 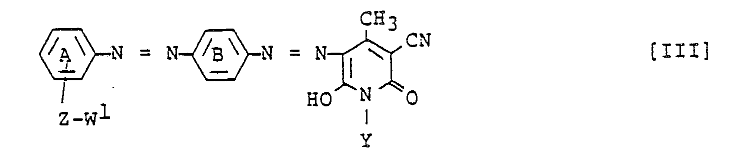 in der 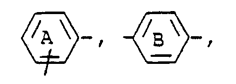
-Y, -Z- und -W' wie vorstehend definiert sind.

4. Reaktiver Pyridon-Azofarbstoff nach Anspruch 1 der allgeinen Formel IV 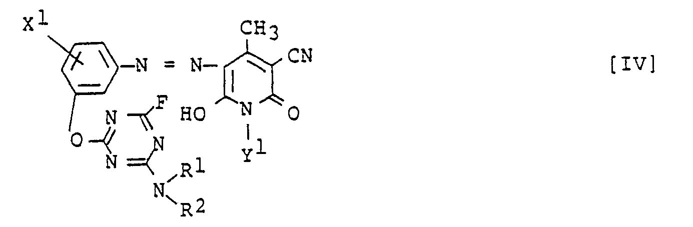 in der―Y¹ Alkyl, gegebenenfalls substitiuert durch Niederalkoxy bedeutet, ―X¹ Wasserstoff oder C₁-C₁₀-Alkyl darstellt und -R¹ und -R² wie vorstehend definiert sind.

5. Reaktiver Pyridon-Azofarbstoff nach Anspruch 1 der allgemeinen Formel V 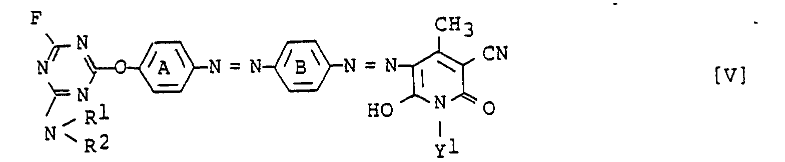 in der 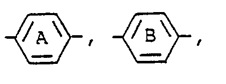
-Y¹, -R¹ und -R² wie vorstehend definiert sind.

6. Reaktiver Pyridon-Azofarbstoff nach Anspruch 1 der allgemeinen Formel VI 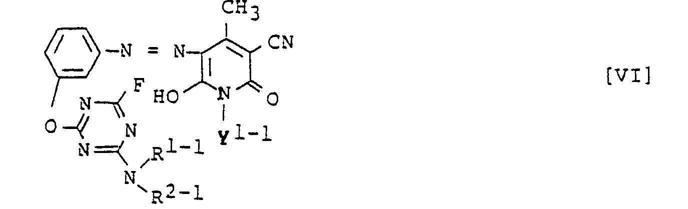 in der-R¹⁻¹ und -R²⁻¹ jeweils Alkyl mit 2 bis 4 Kohlenstoffatomen bedeuten und -Y¹⁻¹ Alkyl mit 6 bis 18 Kohlenstoffatomen darstellt.

7. Reaktiver Pyridon-Azofarbstoff nach Anspruch 1 der allgemeinen Formel VII 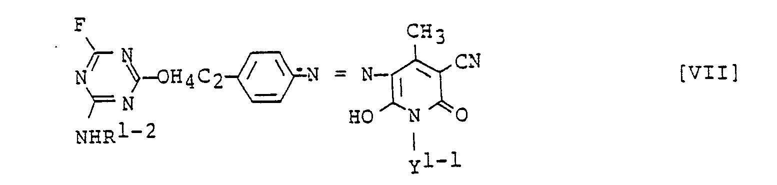 in der―R¹⁻² Alkyl mit 2 bis 4 Kohlenstoffatomen darstellt und ―Y¹⁻¹ wie vorstehend definiert ist.

8. Reaktiver Pyridon-Azofarbstoff nach Anspruch 1 der allgemeinen Formel VIII 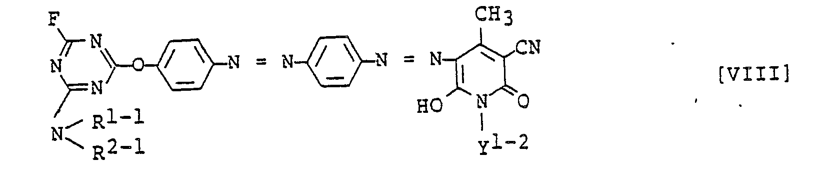 in der -Y¹⁻² Alkyl mit 1 bis 8 Kohlenstoffatomen bedeutet und -R¹⁻¹ und -R²⁻¹ wie vorstehend definiert sind.

9. Verwendung der reaktiven Pyridon-Azofarbstoffe nach den Ansprüchen 1 bis 8 zum Färben von Cellulosefasern, Wollfasern, synthetischen Polyamidfasern und Mischfasern aus Cellulosefasern und Polyesterfasern und Mischfasern aus Wollfasern und Polyesterfasern oder Polyamidfasern und Polyesterfasern in gelben bis rötlich orangen Farben mit hervorragender Lichtechtheit.

## Revendications

1. Un colorant azoïque réactif de pyridone répondant à la formule générale (I): 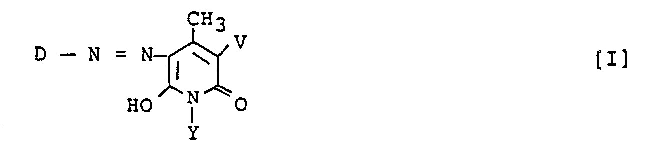 dans laquelle D représente 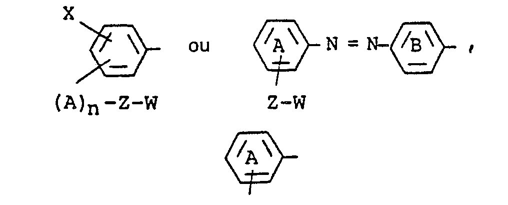 représente un groupe phénylène éventuellement substitué par un groupe alkyle en C₁-C_{10'} alcoxy en C₁-C_{10'} trifluorométhyle ou un halogène, 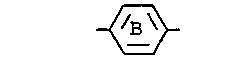 représente un groupe phénylène éventuellement substitué par un groupe alkyle en C₁-C₁₀, alcoxy en C₁-C_{10'} un halogène ou un groupe acétylamino, -A- représente -CH₂-, -C₂H₄-, -OC₂H₄-, 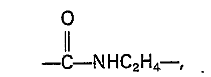
-SO₂NHC₂H₄-ou -SO₂C₂H₄-,
-X représente l'hydrogène, un groupe alkyle en C₁-C_{10'} alcoxy en C₁-C₁₀, nitro, trifluorométhyle ou un halogène,
-Y représente un groupe alkyle en C₁-C₁₈, aryle ou aralkyle éventuellement substitué par un groupe alcoxy en C₁-C₁₀ ou phénoxy,
-Z- représente un pont -0- ou -S-,
-V représente -CN ou -CONH₂,
-W représente un noyau hétérocyclique azoté hexagonal contenant au moins un atome d'halogène actif, et
n est égal à 0 ou 1.

2. Le colorant azoïque réactif de pyridone selon la revendication 1, répondant à la formule générale (II): 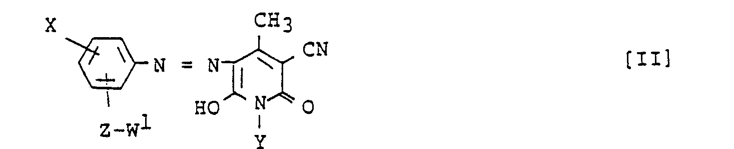 dans laquelle
-W¹ représente 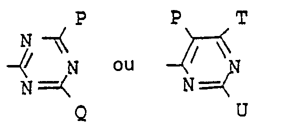 dans lequel
-P représente le fluor, le chlore ou le brome,
-Q représente -P, 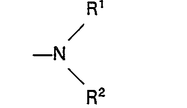 dans lequel-R¹ et -R² représentent chacun l'hydrogène ou un groupe alkyle, alcényle, cyclohexyle, aryle ou aralkyle éventuellement substitué par des groupes cyano, hydroxy, alcoxy inférieur ou dialkylamino, ou bien-NR¹R² représente un noyau hétérocyclique azoté à 5 ou 6 chaînons formé par combinaison de-R¹ et-R², le nombre total des atomes de carbone de-R¹ et-R2 allant jusqu'à 18, un groupe méthyle, éthyle, phényle, -O-R³ ou -S-R³ dans lequel R³ représente un groupe méthyle, éthyle, éthoxy-éthoxy ou phényle,
-T représente -P ou -CH₃,
-U représente -P ou -S0₂CH₃ et
-X, -Y et -Z- ont les significations indiquées ci-dessus.

3. Le colorant azoïque réactif de pyridone selon la revendication 1, répondant à la formule générale 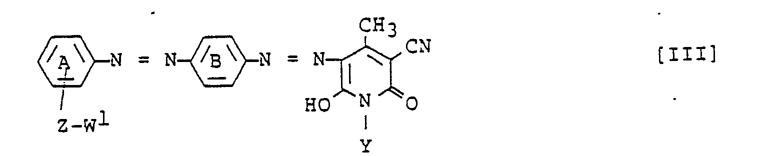 dans laquelle 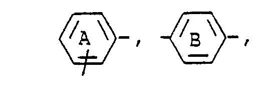 -Y, -Z- et -W' ont les significations indiquées ci-dessus.

4. Le colorant azoïque réactif de pyridone selon la revendication 1, répondant à la formule générale (IV): 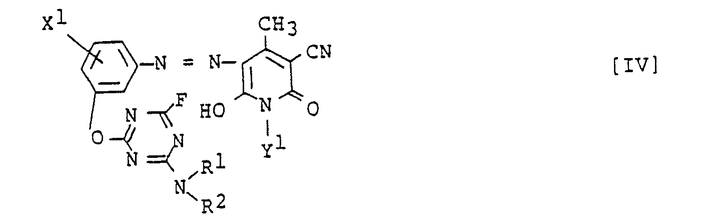 dans laquelle
-Y¹ représente un groupe alkyle éventuellement substitué par un groupe alcoxy inférieur,
-X¹ représente l'hydrogène ou un groupe alkyle en C₁-C₁₀ et
-R¹ et-R² ont les significations indiquées ci-dessus.

5. Le colorant azoïque réactif de pyridone selon la revendication 1, répondant à la formule générale (V): 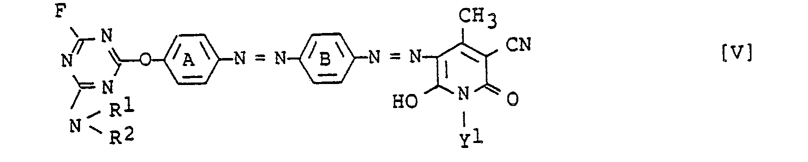 dans laquelle 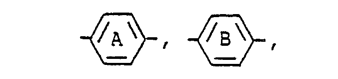 -Y¹,-R¹ et-R² ont les significations indiquées ci-dessus.

6. Le colorant azoïque réactif de pyridone selon la revendication 1, répondant à la formule générale (VI): 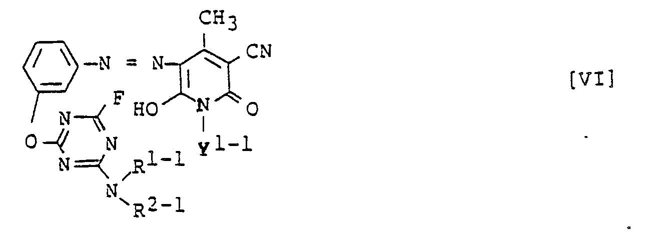 dans laquelle
-R¹⁻¹ et -R²⁻¹ représentent chacun un groupe alkyle en C₂-C₄ et
⁻Y¹⁻¹ représente un groupe alkyle en C₆-C₁₈.

7. Le colorant azoïque réactif de pyridone selon la revendication 1, répondant à la formule générale (VII): 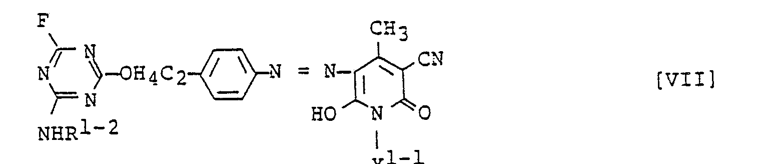 J. dans laquelle
-R¹⁻² représente un groupe alkyle en C₂-C₄ et
―Y¹⁻¹ a les significations indiquées ci-dessus.

8. Le colorant azoïque réactif de pyridone selon la revendication 1, répondant à la formule générale (VIII): 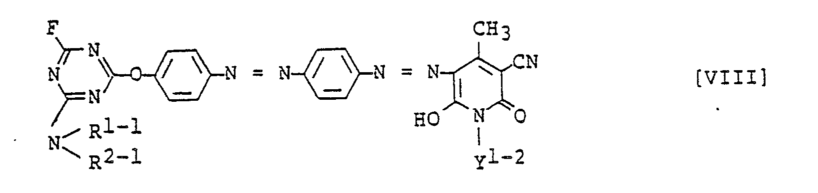 dans laquelle
-Y¹⁻² représente un groupe alkyle en C₁-C₈ et
-R¹⁻¹ et -R ²⁻¹ ont les significations indiquées ci-dessus.

9. L'utilisation des colorants azoïques réactifs de pyridones selon les revendications 1 à 8 pour la teinture des fibres cellulosiques, des fibres de laine, des fibres de polyamides synthétiques et des fibres mélangées comprenant des fibres cellulosiques et des fibres de polyesters et des fibres mélangées comprenant des fibres de laine et des fibres de polyesters ou des fibres de polyamides et des fibres de polyesters en nuances jaunes à orangé rougeâtre possédant d'excellentes solidités à la lumière.
